# EUROPEAN PATENT APPLICATION

(11) **EP 2 253 435 A1**
(43) Date of publication of application: **24.11.2010**
(21) Application number: 09716035.2
(22) Date of filing: 25.02.2009
(51) Int. Cl.: B25J 19/06, B25J 19/00, F16D 51/12, F16D 65/22

(54) **ROBOT SAFETY DEVICE AND ROBOT**

(30) Priority: 25.02.2008 JP 2008043542
(71) Applicant: TOKAI UNIVERSITY EDUCATIONAL SYSTEM, Shibuya-ku Tokyo 151-0063 (JP)
(72) Inventor: KAI, Yoshihiro, Hiratsuka-shi Kanagawa 259-1292 (JP); ADACHI, Tatsuya, Hiratsuka-shi Kanagawa 259-1292 (JP); OKUDAIRA, Yusuke, Hiratsuka-shi Kanagawa 259-1292 (JP)
(74) Representative: Chettle, Adrian John
(86) International application number: PCT/JP2009/053427
(87) International publication number: WO 2009/107672

(57) **Abstract**

A robot safety device, which is provided between a drive shaft of a robot and an actuator for driving the drive shaft and prevents unexpected action to a user positioned around the robot, and in which such a possibility that a robot damages a person is detected and the detection is utilized as a trigger to quickly stop the driving force for the robot. The device is provided with a transmission part which transmits to the drive shaft an output from the actuator, an acceleration operation corresponding part which mechanically generates corresponding to the transmission accelerating operation of the transmission part caused by the actuator, regulation auxiliary force for regulating the operation of the transmission part caused by the output from the actuator, and a regulation part which is driven by the regulation auxiliary force generated by the accelerating operation corresponding part and regulates the operation of the transmission part.

## Description

### Technical Field

The present invention relates to a safety device for preventing un expected actions with respect to users around a robot.

### Background Art

In manufacturing sites and the like in factories, robots are widely used as labor forces alternative to humans. Generally, the robots realize required work according to given instructions. In situations in which such robots are used, a risk of damaging humans is significantly lowered when only the robots work. However, actually, the following cases are possible: humans do other work in cooperation with robots; humans enter, for performing maintenance and checking of robots, regions in which the robots work. In such cases, it is necessary to avoid as much as possible damage which humans may receive from the robots.

In view of this, there has been disclosed a technology of realizing, for avoiding damage from the robot, safety environment and efficient work by appropriate and frequent changes of a movable range for a robot and no-entry region for a human. (Refer to Patent document 1, for example.) Further, there has been disclosed another technology of effectively proposing, with respect to a worker required to do work in cooperation with a robot, a range in which movement of the worker should be limited. (Refer to Patent document 2, for example.)

In addition, although not being a technology directly relating to collision prevention with respect to humans, there has been disclosed a technology for reducing, even when collision of a work object and a robot occurs, damage caused by the collision. (Refer to Patent document 3, for example.) In this technology, on the basis of the magnitude of torque from a servomotor for driving joints of the robot, a determination is made as to whether or not the collision of the work object and the robot occurs.
Patent document 1: JP 2007□283450 A
Patent document 2: JP 2005□335000 A
Patent document 3: JP 2007□249524 A

### Disclosure of the Invention

### Problems to be solved by the invention

In order to avoid collision of robots and workers, as in the related art, effective proposition of work areas with respect to workers is a helpful method. However, even when helpful information is issued to the workers, it is difficult to completely avoid the unexpected situation, that is, collision to robots. Further, even when collision of robots and workers is detected by some methods as in the conventional art, to stretch a point, detection of the risk of collision is not in time, or collision is not detected until collision occurs. Thus, it is impossible to deny that it is difficult to reliably protect workers.

Meanwhile, in order to reduce damage caused by the collision of workers and robots with respect to the workers, it is also probable that a method of limiting drive forces of the robots is used. However, in that case, adoption of the robots as labor forces alternative to humans becomes less meaningful, which is preposterous.

In view of the above-mentioned problems, it is an object of the present invention to provide a safety device which detects a risk that a robot damages a human and which is triggered by the detection to quickly stop a drive force of the robot.

### Means for solving the Problems

In order to solve the above-mentioned problems, the present invention adopts the following configuration: driving of a drive shaft is stopped by mechanical detection of the risk of the robot with reference to acceleration or a speed of the drive shaft, the acceleration or the speed being obtained from a drive force from an actuator for driving the robot. By the mechanically-performed risk detection and drive-shaft stopping, an output shaft of the robot can be stopped more quickly than various processes through intermediation of sensors. Further, the output shaft can be stopped even when control computers and the like are broken down.

Specifically, a robot safety device according to the present invention is provided between a drive shaft of a robot and an actuator for driving the drive shaft, for preventing an unexpected action with respect to a user around the robot, the robot safety device including: a transmission portion for transmitting an output from the actuator to the driveshaft;anacceleration-movementcorresponding portion for mechanically generating, correspondingly to movement of the transmission portion caused by acceleration transmitted from the actuator to the transmission portion, a regulation assistance force for regulating movement of the transmission portion caused by the output from the actuator; and a regulating portion driven by the regulation assistance force generated by the acceleration-movement corresponding portion, for regulating the movement of the transmission portion.

The above-mentioned robot safety device (hereinafter, also simply referred to as "safety device") is provided between the actuator and the drive shaft of the robot. As a result, the movement of the transmission portion for transmitting the drive force to the robot is regulated with reference to the movement of the transmission portion caused by a drive force transmitted from the actuator. That is, the acceleration-movement corresponding portion mechanically generates, correspondingly to the movement caused by the transmitted acceleration, the regulation assistance force for driving the regulating portion for regulating the movement of the transmission portion, and thus the mechanical determination of the risk and the mechanical stopping of the transmission portion are realized. With this configuration, the robot is quickly prevented from taking unexpected actions (collision and the like) with respect to users around the robot.

Then, in the robot safety device, when the acceleration transmitted from the actuator to the transmission portion exceeds predetermined acceleration, the regulating portion may regulate the movement of the transmission portion with the regulation assistance force generated by the acceleration-movement corresponding portion. With this configuration, when the acceleration transmitted to the transmission portion exceeds predetermined acceleration, a determination is made that the robot may take unexpected actions with respect to users. As a result, the movement of the transmission portion is regulated by the regulating portion.

In addition, in the robot safety device as described above, the acceleration-movement corresponding portion may include: a first transmission-assist portion coupled in a fixed state with respect to the transmission portion; a second transmission-assist portion arranged in a state of being allowed to effect relative movement with respect to the transmission portion; an elastic coupling portion for elastically coupling the first transmission-assist portion and the second transmission-assist portion to each other so that the second transmission-assist portion is allowed to effect relative movement with respect to the transmission portion correspondingly to the movement of the transmission portion caused by the acceleration transmitted to the transmission portion; and a regulation-assistance-force generating portion for generating the regulation assistance force in accordance with displacement of the second transmission-assist portion through intermediation of the elastic coupling portion.

In the safety device configured as just described above, the first transmission-assist portion effects the same movement as that of the transmission portion in conjunction with the transmission portion. Meanwhile, the second transmission-assist portion is connected to the first transmission-assist portion and the transmission portion through intermediation of the elastic coupling portion, and hence does not necessarily move in conjunction with the transmission portion. In particular, when the transmission portion effects the movement caused by the transmitted acceleration, inertial torque and the like caused by the acceleration is exerted between the first transmission-assist portion and the second transmission-assist portion. As a result, in comparison with a relationship between both the transmission-assist portions in the case where the inertial torque and the like arenotexerted,the"relativemovement"occurstherebetween. In this context, when the safety device is mechanically designed so that, through the displacement caused by the relative movement in accordance with the inertial force, the regulation-assistance-force generating portion generates the above-mentioned regulation assistance force, it is possible to realize the detection of the risk of occurrence of damage and quick stopping of the transmission portion.

In this context, the predetermined acceleration may be changeable in the above-mentioned safety device. Further, the acceleration-movement corresponding portion may further include an elastic-coupling adjustment portion capable of adjusting a degree of elastic coupling of the first transmission-assist portion and the second transmission-assist portion, the elastic coupling being effected by the elastic coupling portion. The elastic coupling effected by the elastic coupling portion may be adjusted by the elastic-coupling adjustment portion so that the predetermined acceleration is changeable. When the predetermined acceleration is set to be changeable, specification of the safety device can be set so that users are effectively protected in accordance with, for example, conditions in which the robot is used. Further, the predetermined acceleration is changeable in accordance with conditions of the relative movement described above of the second transmission-assist portion with respect to the transmission portion. Thus, other than the adjustment as described above of the degree of the elastic coupling effected by the elastic coupling portion, various parameters relating to the relative movement may be adjusted.

In this context, in the safety device as described above, regarding generation of the above-mentioned regulation assistance force, more specific configuration is described below. First, the acceleration-movement corresponding portion may further include an engagement portion which is attached so as to be allowed to effect relative movement with respect to the first transmission-assist portion, and which effects the relative movement in accordance with the displacement of the second transmission-assist portion through intermediation of the elastic coupling portion. Further, the regulation-assistance-force generating portion may enter an engagement state with respect to the engagement portion when the engagement portion effects the relative movement with respect to the first transmission-assist portion, and generate the regulation assistance force when the movement of the transmission portion is transmitted to the regulation-assistance-force generating portion through the engagement portion. That is, the safety device configured as just described above realizes the following mechanical series of steps: on the basis of the relative movement of the second transmission-assist portion, an engagement state is established between the engagement portion and the regulation-assistance-force generating portion, and the engagement state further generates the regulation assistance force.

Further, another specific configuration is described. The regulating portion may include: a brake portion which is provided so that a relative position of the brake portion with respect to the transmission portion is changeable, and which is driven in conjunction with the transmission portion; and a brake drum portion for generating, by coming into contact with the brake portion, a braking force for regulating the movement of the transmission portion. The brake portion and the brake drum portion may enter a contact state in accordance with a change of the relative position of the brake portion with respect to the transmission portion, the change being made in accordance with the displacement of the second transmission-assist portion through intermediation of the elastic coupling portion, the displacement being caused by the acceleration transmitted from the actuator to the transmission portion. That is, the safety device configured as just described above realizes the following mechanical series of steps: on the basis of the relative movement of the second transmission-assist portion, the brake portion is applied with the regulation assistance force so that a change state of the relative position is established with respect to the transmission portion, and owing to the change state, a contact state for generation of the braking force is established between the brake portion and the brake drum portion.

Here, the robot safety device as described above may further include a speed-movement corresponding portion for effecting, when a speed transmitted from the actuator to the transmission portion exceeds a predetermined speed, the relative movement of the second transmission-assist portion with respect to the transmission portion, to thereby drive the regulating portion. That is, on the basis of the speed transmitted to the transmission portion in addition to the acceleration transmitted thereto as described above, mechanical stopping of the movement of the transmission portion is realized. Also in this case, the movement of the transmission portion is stopped by the relative movement effected with respect to the second transmission-assist portion on the basis of the transmitted speed.

Further, the safety device according to the present invention can also be configured as follows from a viewpoint of providing a safety device for mechanically stopping the movement of the transmission portion on the basis of the transmitted speed. That is, a robot safety device according to the present invention is provided between a drive shaft of a robot and an actuator for driving the drive shaft, for preventing an unexpected action with respect to a user around the robot, the robot safety device including: a transmission portion for transmitting an output from the actuator to the drive shaft; a speed-movement corresponding portion for mechanically generating, correspondingly to movement of the transmission portion caused by a speed transmitted from the actuator to the transmission portion, a regulation assistance force for regulating movement of the transmission portion caused by the output from the actuator; and a regulating portion driven by the regulation assistance force generated by the speed-movement corresponding portion, for regulating the movement of the transmission portion. With this configuration, similarly to the case based on the transmitted acceleration, the robot can be quickly prevented from taking unexpected actions with respect to users around the robot.

Further, in the robot safety device, when the speed transmitted from the actuator to the transmission portion exceeds a predetermined speed, the regulating portion may regulate the movement of the transmission portion with the regulation assistance force. With this configuration, when the speed transmitted to the transmission portion exceeds the predetermined speed, a determination is made that the robot may take unexpected actions with respect to users. As a result, the movement of the transmission portion is regulated by the regulating portion. In this context, the predetermined speed may be changeable. With this configuration, specification of the safety device can be set so that users are effectively protected in accordance with, for example, conditions in which the robot is used.

Here, the robot safety device as described above may further include an electric-power stopping portion for stopping electric power supply to the actuator when the regulating portion regulates the movement of the transmission portion. In addition to the regulation of the movement of the transmission portion by the regulating portion, when the electric power supply to the actuator is stopped, damage to the user can be avoided more reliably. Note that, it is preferred that the stopping of electric power supply be effected in mechanical conjunct ion with the relative movement of the second transmission-assist portion. This is because the electric power supply can be stopped more reliably.

Further, it is preferred that the electric-power stopping portion stop the electric power supply to the actuator before the regulating portion regulates the movement of the transmission portion. With this configuration, electric power from the actuator is more quickly interrupted, and hence damage to the user is more reliably avoided.

Note that, incorporation of the safety device described above into a robot is significantly helpful to enhance safety at the time of using the robot. In that case, although it is only necessary that the robot safety device be attached to a part or all of drive shafts of the robot, in consideration of enhancement of the safety, it is preferred that the safety device according to the present invention be attached to all of the drive shafts of the robot. The robot in this case refers to general machines driven by an actuator.

### Effects of the invention

The present invention provides a safety device which detects a risk that a robot damages a human and which is triggered by the detection to quickly stop a drive force of the robot.

### Brief Description of the Drawings

[FIGS. 1A and 1B] Conceptual views of a robot safety device according to the present invention.
[FIG. 2] A first view of a state in which the safety device according to the present invention is incorporated in an arm portion constituting a part of a robot.
[FIG. 3] A second view of a state in which the safety device according to the present invention is incorporated in the arm portion constituting a part of the robot.
[FIG. 4] A first view of a specific configuration of the safety device according to an embodiment of the present invention.
[FIG. 5] A view of a configuration of an acceleration detecting portion of the safety device illustrated in FIG. 4.
[FIG. 6] A view illustrating a correlationship between the acceleration detecting portion and a claw rotation plate in the safety device illustrated in FIG. 4.
[FIGS. 7AA and 7AB] A first view illustrating processes in which the safety device illustrated in FIG. 4 locks driving of a rotary shaft after detecting predetermined acceleration of the rotary shaft and interrupting electric power supply to the robot.
[FIGS. 7BA and 7BB] A second view illustrating the processes in which the safety device illustrated in FIG. 4 locks driving of the rotary shaft after detecting the predetermined acceleration of the rotary shaft and interrupting electric power supply to the robot.
[FIGS. 7CA and 7CB] Third views illustrating the processes in which the safety device illustrated in FIG. 4 locks driving of the rotary shaft after detecting the predetermined acceleration of the rotary shaft and interrupting electric power supply to the robot.
[FIGS. 8A and 8B] Fourth views illustrating the processes in which the safety device illustrated in FIG. 4 locks driving of the rotary shaft after detecting the predetermined acceleration of the rotary shaft and interrupting electric power supply to the robot.
[FIG. 9] A view of a mechanism of speed detection of the rotary shaft in the safety device illustrated in FIG. 4.
[FIGS. 10A and 10B] Views illustrating human rescue when a human body is caught owing to the robot in which the safety device illustrated in FIG. 4 is incorporated.
[FIG. 11] A view illustrating a relation ship between a locking claw and a ratchet wheel in a state in which a stopper and inner teeth are hooked to each other in the safety device illustrated in FIG. 4.
[FIG. 12] A view of a configuration in a case where more stoppers are provided to the acceleration detecting portion in the safety device illustrated in FIG. 4.
[FIG. 13] Aview of a specific configuration of the acceleration detecting portion illustrated in FIG. 12.
[FIG. 14] A second view of a specific configuration of the safety device according to the embodiment of the present invention.
[FIG. 15A] A first view illustrating processes in which the ratchet wheel is simultaneously locked by a plurality of locking claws in the safety device illustrated in FIG. 14.
[FIG. 15B] A second view illustrating the processes in which the ratchet wheel is simultaneously locked by the plurality of locking claws in the safety device illustrated in FIG. 14.
[FIG. 15C] A third view illustrating the processes in which the ratchet wheel is simultaneously locked by the plurality of locking claws in the safety device illustrated in FIG. 14.
[FIG. 15D] A fourth view illustrating the processes in which the ratchet wheel is simultaneously locked by the plurality of locking claws in the safety device illustrated in FIG. 14.
[FIG. 16] A third view of a specific configuration of the safety device according to the embodiment of the present invention.
[FIG. 17] A first view of a configuration of an acceleration detecting portion in the safety device illustrated in FIG. 16.
[FIGS. 18A, 18B, 18C and 18D] Views illustrating processes until the rotary shaft is locked in the safety device illustrated in FIG. 16. [FIG. 19] A second view of the configuration of the acceleration detecting portion in the safety device illustrated in FIG. 16.
[FIG. 20] A third view of the configuration of the acceleration detecting portion in the safety device illustrated in FIG. 16.
[FIG. 21] A view illustrating a correlationship between a stopper and inner teeth in the acceleration detecting portion illustrated in FIG. 20.
[FIG. 22] A fourth view of a specific configuration of the safety device according to an embodiment of the present invention.
[FIGS. 23A and 23B] Views illustrating processes until the rotary shaft is locked in the safety device illustrated in FIG. 22.
[FIGS. 24A and 24B] Views illustrating human rescue when a human body is caught owing to the robot in which the safety device illustrated in FIG. 22 is incorporated.
[FIGS. 25A and 25B] Views of another configuration for generating a braking force for locking the rotary shaft in the safety device illustrated in FIG. 22.
[FIG. 26] A view of an example in which a linear spring is used in the safety device according to the first embodiment of the present invention.
[FIG. 27] A view of an example in which a linear spring is used in the safety device according to the second embodiment of the present invention.
[FIG. 28] A first view of a mechanism for performing adjustment of a predetermined speed in the safety device according to the present invention.
[FIG. 29] A second view of the mechanism for performing the adjustment of the predetermined speed in the safety device according to the present invention.
[FIGS. 30AA and 30AB] First views of a mechanism for performing adjustment of predetermined acceleration in the safety device according to the present invention.
[FIGS. 30BA and 30BB] Second views of the mechanism for performing the adjustment of the predetermined acceleration in the safety device according to the present invention.
[FIGS. 31A, 31B, 31C and 31D] Third views of the mechanism for performing the adjustment of the predetermined acceleration in the safety device according to the present invention.
[FIG. 32] A fourth view of the mechanism for performing the adjustment of the predetermined acceleration in the safety device according to the present invention.
[FIG. 33] A fifth view of the mechanism for performing the adjustment of the predetermined acceleration in the safety device according to the present invention.
[FIGS. 34A and 34B] Views of a mechanism for changing inertial moment of a gear for the purpose of performing the adjustment of the predetermined acceleration in the safety device according to the present invention.
[FIGS. 35A and 35B] First views of a mechanism for changing rigidity of a spring for the purpose of performing the adjustment of the predetermined acceleration in the safety device according to the present invention.
[FIG. 36A] A second view of the mechanism for changing rigidity of the spring for the purpose of performing the adjustment of the predetermined acceleration in the safety device according to the present invention.
[FIG. 36B] A third view of the mechanism for changing rigidity of the spring for the purpose of performing the adjustment of the predetermined acceleration in the safety device according to the present invention.
[FIG. 37] A fourth view of the mechanism for changing rigidity of the spring for the purpose of performing the adjustment of the predetermined acceleration in the safety device according to the present invention.
[FIG. 38] A view of another configuration of the ratchet wheel meshing with the stopper in the safety device according to the present invention.
[FIG. 39] A view of a schematic configuration of the safety device according to a fourth embodiment of the present invention.
[FIGS. 40A and 40B] A view illustrating how the safety device illustrated in FIG. 39 moves.
[FIG. 41] A view of a specific configuration of the safety device illustrated in FIG. 39.
[FIG. 42] A first view of a series of electric source shut-off operations performed by the safety device illustrated in FIG. 39.
[FIG. 43] A second view of the series of electric source shut-off operations performed by the safety device illustrated in FIG. 39.
[FIG. 44] A third view of the series of electric source shut-off operations performed by the safety device illustrated in FIG. 39.
[FIG. 45] A fourth view of the series of electric source shut-off operations performed by the safety device illustrated in FIG. 39.
[FIG. 46] A fifth view of the series of electric source shut-off operations performed by the safety device illustrated in FIG. 39.
[FIG. 47] A first view of a modification of the safety device illustrated in FIG. 39.
[FIG. 48] A second view of the modification of the safety device illustrated in FIG. 39.
[FIG. 49] A third view of the modification of the safety device illustrated in FIG. 39.
[FIG. 50] A fourth view of the modification of the safety device illustrated in FIG. 39.
[FIG. 51] A fifth view of the modification of the safety device illustrated in FIG. 39.
[FIG. 52] A sixth view of the modification of the safety device illustrated in FIG. 39.
[FIG. 53] A view of a schematic configuration of the safety device according to a modification of the fourth embodiment of the present invention.
[FIG. 54] A view of a specific configuration of the safety device illustrated in FIG. 53.
[FIG. 55] A first view of a series of electric source shut-off operations performed by the safety device illustrated in FIG. 53.
[FIG. 56] A second view of the series of electric source shut-off operations performed by the safety device illustrated in FIG. 53.
[FIG. 57] A third view of the series of electric source shut-off operations performed by the safety device illustrated in FIG. 53.
[FIG. 58] A fourth view of the series of electric source shut-off operations performed by the safety device illustrated in FIG. 53.
[FIG. 59] A first view of a modification of the safety device illustrated in FIG. 53.
[FIG. 60] A second view of the modification of the safety device illustrated in FIG. 53.
[FIG. 61] A third view of the modification of the safety device illustrated in FIG. 53.
[FIG. 62] A fourth view of the modification of the safety device illustrated in FIG. 53.
[FIG. 63] A view of a schematic configuration of the safety device according to a modification of the fourth embodiment of the present invention.
[FIG. 64] A view of a specific configuration of the safety device illustrated in FIG. 63.
[FIG. 65] A first view of a series of electric source shut-off operations performed by the safety device illustrated in FIG. 63.
[FIG. 66] A second view of the series of electric source shut-off operations performed by the safety device illustrated in FIG. 63.
[FIG. 67] A third view of the series of electric source shut-off operations performed by the safety device illustrated in FIG. 63.
[FIG. 68] A fourth view of the series of electric source shut-off operations performed by the safety device illustrated in FIG. 63.
[FIG. 69] A first view of a modification of the safety device illustrated in FIG. 63.
[FIG. 70] A second view of the modification of the safety device illustrated in FIG. 63.
[FIG. 71] A third view of the modification of the safety device illustrated in FIG. 63.
[FIG. 72] A view of a schematic configuration of the safety device according to a modification of the fourth embodiment of the present invention.
[FIG. 73] A view of a specific configuration of the safety device illustrated in FIG. 72.
[FIG. 74] A first view of a series of electric source shut-off operations performed by the safety device illustrated in FIG. 72.
[FIG. 75] A second view of the series of electric source shut-off operations performed by the safety device illustrated in FIG. 72.
[FIG. 76] A first view of a configuration in which a locking mechanism of a rotary shaft is applied to the safety device illustrated in FIG. 72.
[FIG. 77] A second view of the configuration in which the locking mechanism of the rotary shaft is applied to the safety device illustrated in FIG. 72.
[FIG. 78] A first view of a modification of the safety device illustrated in FIG. 72.
[FIG. 79] A second view of the modification of the safety device illustrated in FIG. 72.
[FIG. 80] A view of a schematic configuration of the safety device according to a fifth embodiment of the present invention.
[FIG. 81] A view of a specific configuration of the safety device illustrated in FIG. 80.
[FIG. 82] A first view of a series of electric source shut-off operations performed by the safety device illustrated in FIG. 80.
[FIG. 83] A second view of the series of electric source shut-off operations performed by the safety device illustrated in FIG. 80.
[FIG. 84] A third view of the series of electric source shut-off operations performed by the safety device illustrated in FIG. 80.
[FIG. 85] A fourth view of the series of electric source shut-off operations performed by the safety device illustrated in FIG. 80.
[FIG. 86] A first view of a specific configuration of a signal transmission part with respect to a switch in the safety device illustrated in FIG. 80.
[FIG. 87] A second view of the specific configuration of the signal transmission part with respect to the switch in the safety device illustrated in FIG. 80.
[FIG. 88] A view of a modification of the safety device illustrated in FIG. 80.
[FIG. 89] A view of a schematic configuration of the safety device according to a modification of the fifth embodiment of the present invention.
[FIG. 90] A view of a specific configuration of the safety device illustrated in FIG. 89.
[FIG. 91] A first view of a series of electric source shut-off operations performed by the safety device illustrated in FIG. 89.
[FIG. 92] A second view of the series of electric source shut-off operations performed by the safety device illustrated in FIG. 89.
[FIG. 93] A third view of the series of electric source shut-off operations performed by the safety device illustrated in FIG. 89.
[FIG. 94] A fourth view of the series of electric source shut-off operations performed by the safety device illustrated in FIG. 89.
[FIG. 95] A fifth view of the series of electric source shut-off operations performed by the safety device illustrated in FIG. 89.
[FIG. 96] A sixth view of the series of electric source shut-off operations performed by the safety device illustrated in FIG. 89.
[FIG. 97] A seventh view of the series of electric source shut-off operations performed by the safety device illustrated in FIG. 89.
[FIG. 98] An eighth view of the series of electric source shut-off operations performed by the safety device illustrated in FIG. 89.
[FIG. 99] A first view of a modification of the safety device illustrated in FIG. 89.
[FIG. 100] A second view of the modification of the safety device illustrated in FIG. 89.

### Best mode of Carrying out the Invention

In the following, description is made of a robot safety device according to embodiments of the present invention with reference to the figures. Robots are general mechanical apparatus used in various sites. When a robot and a human work together, or when a human manipulates a robot or performs maintenance thereof, there is a risk that a moving range of the robot and a moving range of the human interfere with each other. As a result, in some cases, it is probable that the robot comes into contact with the human, and the human is damaged in one way or other. Under the circumstances, the robot safety device according to the presentinvention(hereinafter,simplyreferredtoas"safety device") is used mainly for the purpose of preventing unexpected actions with respect to a human around a robot.

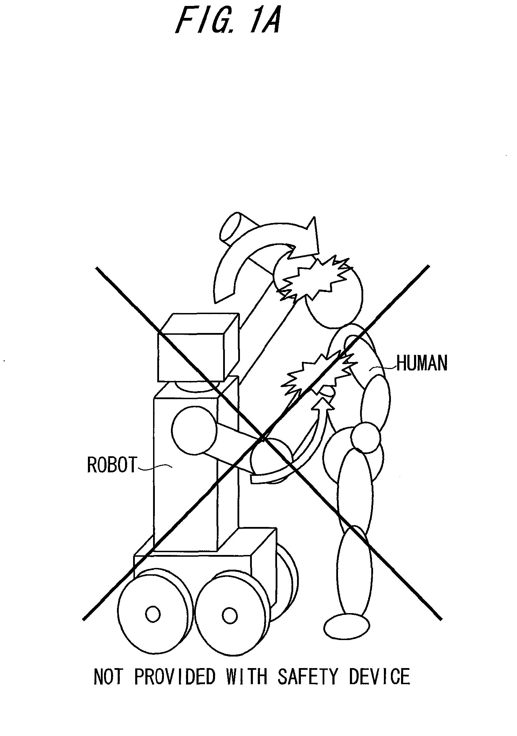

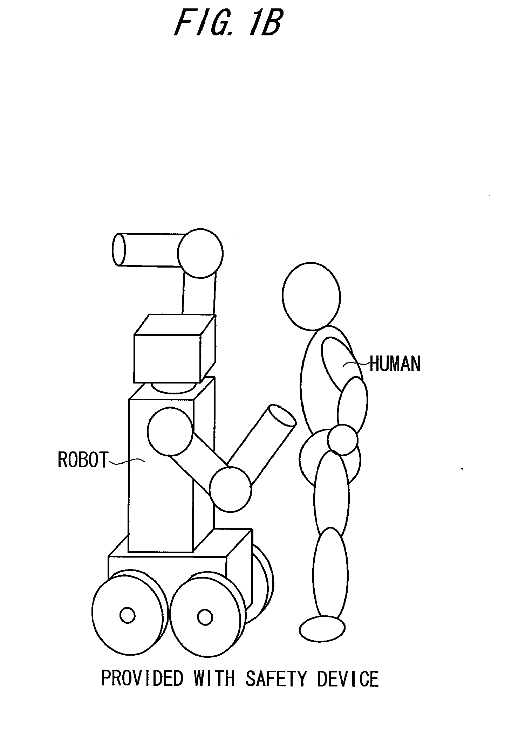

Specifically, when being incorporated into a robot, the safety device enables the robot to do the following: as illustrated in FIG. 1A, avoid out-of-control of the robot and damaging to a human caused thereby; and reduce or avoid damaging, for example, as illustrated in FIG. 1B, to the human by immediately regulating movement of a drive shaft constituting the robot when the movement of the drive shaft, specifically, any one of acceleration and a speed of the drive shaft exceeds preset threshold. In this case, in order to stop the drive shaft as quickly as possible, the safety device according to the present invention mechanically reacts to the movement of the drive shaft of the robot and regulates the movement thereof. Detailed description thereof is made in the following.

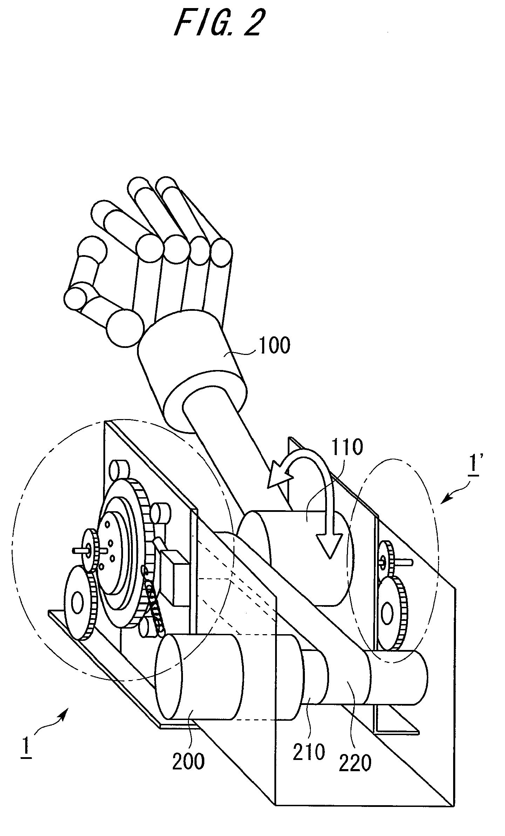

FIG. 2 illustrates an example of a case where a safety device 1 according to the present invention is incorporated in an arm portion 100 constituting a part of a robot. The arm portion 100 is driven by an actuator 200 such as a motor, and is arranged with respect to a transmission shaft 220 provided between an output shaft 210 of the actuator 200 and a drive shaft 110 of the robot. Note that, as examples of the transmission shaft, there may be given a shaft and the like coupled to a belt for transmission of a drive force and to the drive shaft 110 of the robot. Irrespectively, the safety device 1 may be provided immediately posterior to the output shaft 210 of the actuator 200, or immediately anterior to the drive shaft 110 of the arm portion 100.

Further, when the drive shaft 110 is desired to be locked in both a forward rotation direction and a reverse rotation direction of the arm portion 100, the safety device 1 for effecting locking in the forward rotation direction and another safety device 1' for effecting locking in the reverse rotation direction are installed as illustrated in the figure. Further, when the drive shaft 110 is locked only in the forward rotation direction or only in the reverse rotation direction, it is only necessary to attach any one of the safety device 1 and the safety device 1' for effecting locking in the respective directions. Those safety devices 1 and 1' have substantially the same structure, and hence description is made mainly of the safety device 1 of the safety devices 1 and 1' in the following.

### First embodiment

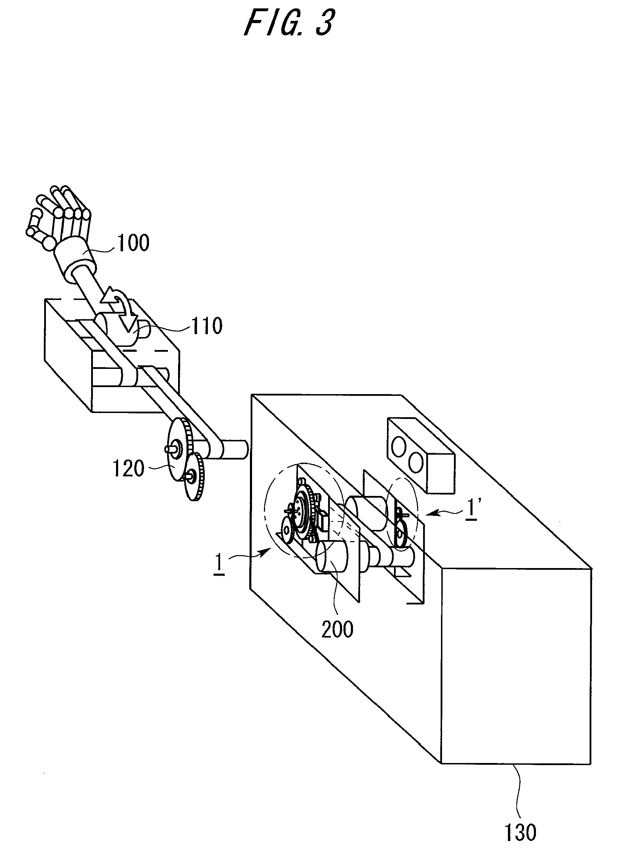

Further, as illustrated in FIG. 3, the safety device 1 may be installed on a main-body (trunk) portion 130 side of the robot. That is, when the actuator 200 is installed in the robot main-body portion 130 separated from the arm portion 110, and when a drive force of the actuator 200 is transmitted by a drive-power transmission device 120 such as a belt or a gear to the drive shaft 110 of the arm portion 100, similarly to the case illustrated in FIG. 2, the safety device 1 may be installed in the robot main-body portion 130 together with a transmission shaft provided between the actuator 200 and the drive shaft 110 of the arm portion 100.

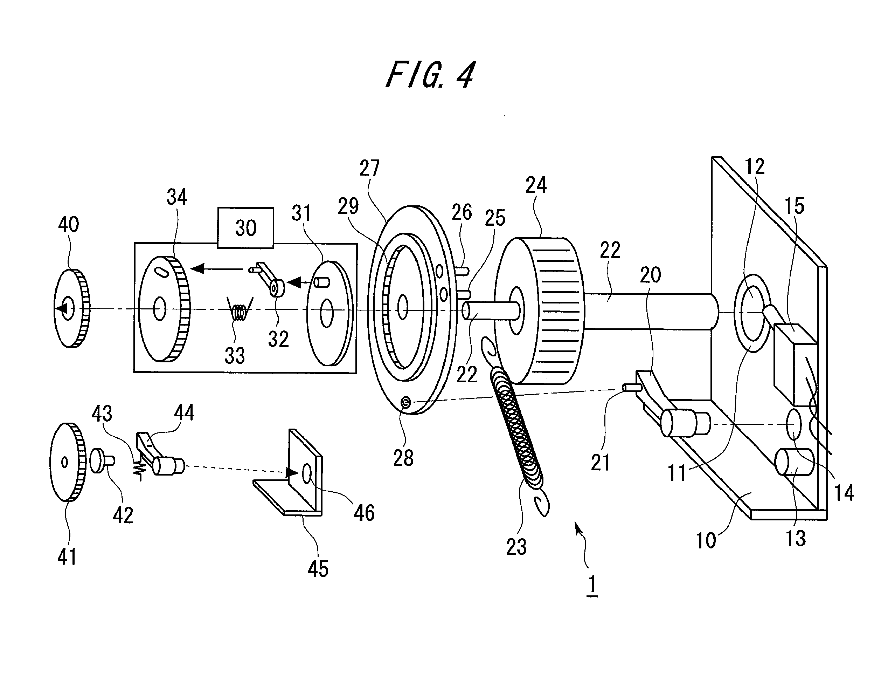

Next, a specific structure of the safety device 1 is illustrated in FIG. 4 in an exploded state. A rotary shaft 22 is a drive-force transmission shaft for allowing an output from the actuator 200 to be input thereto and to be output to the drive shaft 110 of the arm portion 100. The rotary shaft 22 is inserted through a through-hole 12 provided in a frame 10 installed on a fixed portion side of the main-body portion and the like of the robot (that is, part which is not driven by the actuator 200), and is rotatably supported at the through-hole by a bearing 11.

Incidentally, the rotary shaft 22 is integrated with a ratchet wheel 24 provided with a ratchet therearound. Further, when a locking claw 20 is hooked to the ratchet of the ratchet wheel 24, rotation of the rotary shaft 22 is regulated. Further, a claw rotation plate 27 is arranged in a state of being bearing-supported with respect to the rotary shaft 22, and inner teeth 29 are provided on an inner surface of a cylindrical part thereof. One end of a spring 23 is connected to a pin 25 installed to the claw rotation plate 27, and another end of the spring 23 is connected to a pin 13 of the frame 10. That is, the claw rotation plate 27 is held to the frame 10 through intermediation of the spring 23.

Next, the locking claw 20 is rotatably attached to the frame 10 through intermediation of a through-hole 14 in the frame 10. Note that, a rotational direction of the locking claw 20 is a rotational direction of being capable of moving toward and away from the ratchet wheel 24 as described later. Incidentally, at a distal end part of the locking claw 20, a guide bar 21 is provided toward the claw rotation plate 27, the guide bar 21 being inserted, in an assembled state of the safety device 1, into a guide hole 28 provided in the claw rotation plate 27.

Further, an acceleration detecting portion 30 is positioned relative to the rotary shaft 22 so as to be housed in the cylindrical part of the claw rotation plate 27. The acceleration detecting portion 30 is constituted by a plate 31, a stopper 32, a spring 33, and a ratchet wheel 34. The ratchet wheel 34 is attached to the plate 31 through inter mediation of the spring 33. Note that, the acceleration detectingportion30isdescribedindetaillater. Inaddition, a gear 40 adjacent to the acceleration detecting portion 30 is coupled to the rotary shaft 22 in a fixed state.

In this context, in addition to the gear 40, the ratchet wheel 2 4 and the plate 31 of the acceleration detecting portion 30 are also coupled to the rotary shaft 22 in a fixed state, and are rotated integrally with the rotary shaft 22. Further, a gear 41 and a rotary damper 42 are arranged so that, when the gear 40 is rotated, the gear 41 meshing with the gear 40 is also rotated and the rotary damper 42 connected to the gear 41 is also rotated in accordance there with. Further, a stopper 44 is attached to a rotary shaft of the rotary damper 42, the stopper 44 receiving braking torque from the rotary damper 42 in accordance with a speed (rotational speed) of the rotary shaft. Further, one end of a spring 43 is attached to the stopper 44, and spring torque generated by an elastic force from the spring 43 acts on the stopper 44. Note that, another end of the spring 43 is fixed to a frame 45, the frame 45 being coupled to the frame 10. Further, a rotary shaft of the stopper 44 is rotatably installed to the frame 45 through intermediation of a bearing 46.

Further, in the safety device 1, a switch 15 is installed at a position of being pressed by a pin 26 provided on the claw rotation plate 27 when the claw rotation plate 27 is rotated. The switch 15 is a switch for establishing and interrupting electric power supply with respect to the actuator 200. In this embodiment, electric power supply is interrupted when the switch 15 is pressed by the pin 26. Description thereof is made more specifically later.

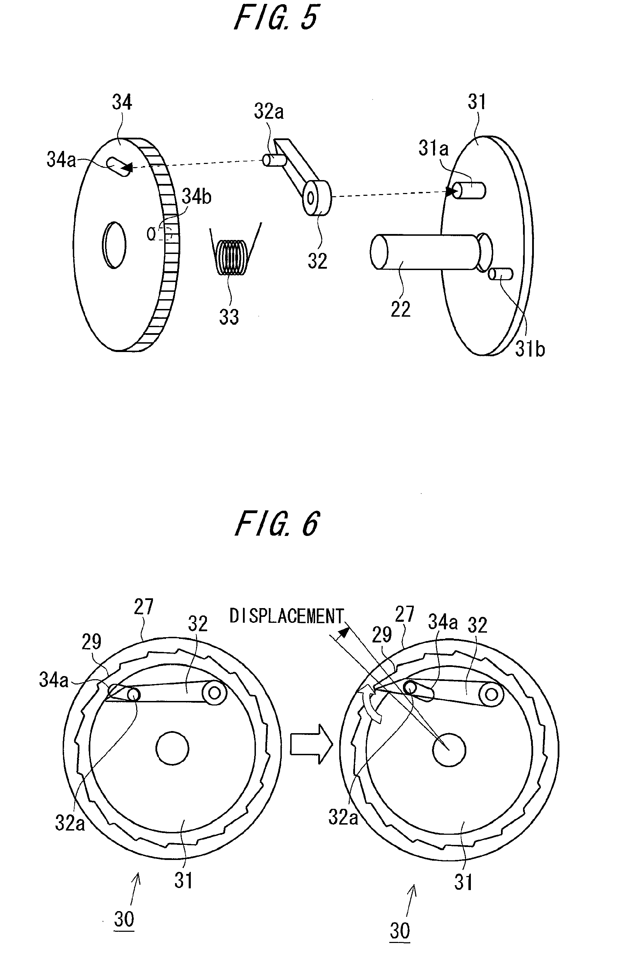

<Regarding acceleration detection and locking of the rotary shaft 22> FIG. 5 illustrates in detail the acceleration detecting portion 30. The acceleration detecting portion 30 detects acceleration (rotational acceleration) of the rotary shaft 22. As described above, the plate 31 is rotated integrally with the rotary shaft 22. Further, on the plate 31, there is provided a rotary shaft 31a for the stopper 32, the stopper 32 being rotatable relative to the plate 31 by being attached to the rotary shaft 31a. Further, at a distal end part of the stopper 32, there is provided a guide bar 32a extending toward the ratchet wheel 34, the guide bar 32a being inserted, in the assembled state of the safety device 1, into a guide hole 34a provided in the ratchet wheel 34. Further, one end of the spring 33 is connected to a pin 31b of the plate 31, and another end thereof is connected to a pin 34b of the ratchet wheel 34. (In FIG. 5, the pin 34b is positioned while being hidden by the ratchet wheel 34, and hence is illustrated by a dashed line.) Accordingly, the ratchet wheel 34 is elastically coupled by the spring 33 with respect to the plate 31 fixed to the rotary shaft 22. Thus, rotation of the rotary shaft 22 is transmitted from the pin 31b of the plate 31 to the ratchet wheel 34 through intermediation of the spring 33. As a result, the ratchet wheel 34 is rotated through intermediation of the spring 33.

In this context, description is made of acceleration detection performed by the acceleration detecting portion 30 with respect to the rotary shaft 22. FIG. 6 illustrates correlation ships between the acceleration detecting portion 30 housed in the cylindrical part of the claw rotation plate 27 and the inner teeth 29 provided on aclawrotationplate27side. Notethat, thecorrelationship illustrated in the left side of FIG. 6 is in a case where acceleration of the rotary shaft 22 is zero or relatively low, that is, predetermined acceleration or lower, and the correlationship illustrated in the right side is in a case where the acceleration of the rotary shaft 22 exceeds the predetermined acceleration. As illustrated in FIG. 6, in the following case: the acceleration of the rotary shaft 22 rises; inertial torque equal to or higher than spring torque from the spring 33 acts in a direction inverse to that of the spring torque by which the ratchet wheel 34 is held; and the ratchet wheel 34 is rotated relative to the rotary shaft 22 about the rotary shaft 22 as a center and is displaced from an original relative position (in a case where "displacement" illustrated in FIG. 6 occurs), the stopper 32 is guided into a direction of coming into contact with the inner teeth 29 on the claw rotation plate 27 side by geometric holding between the guide hole 34a provided in the ratchet wheel 34 and the guide bar 32a. Finally, the distal end part of the stopper 32 enters a state of being hooked to the inner teeth 29.

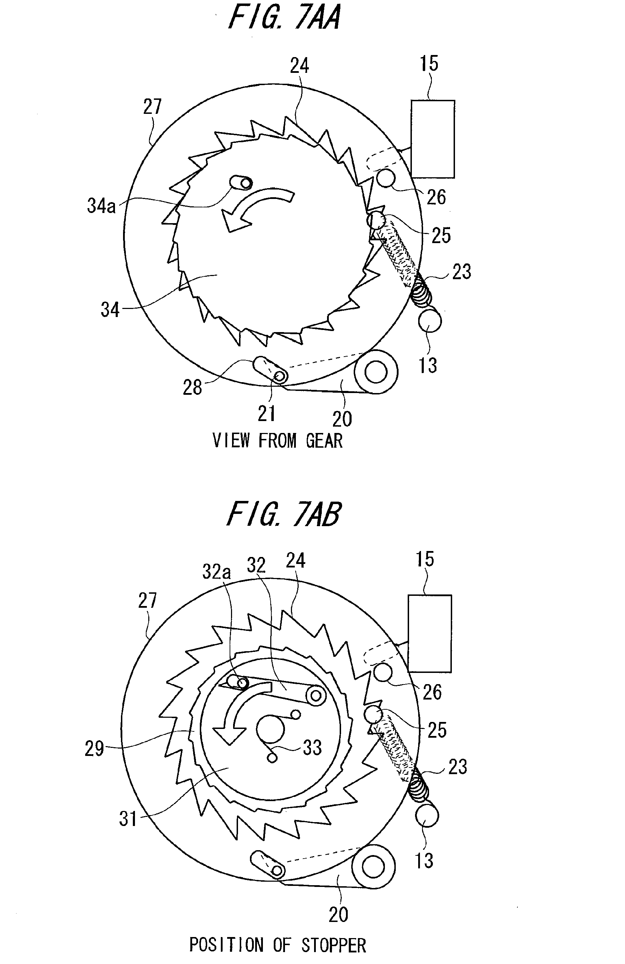

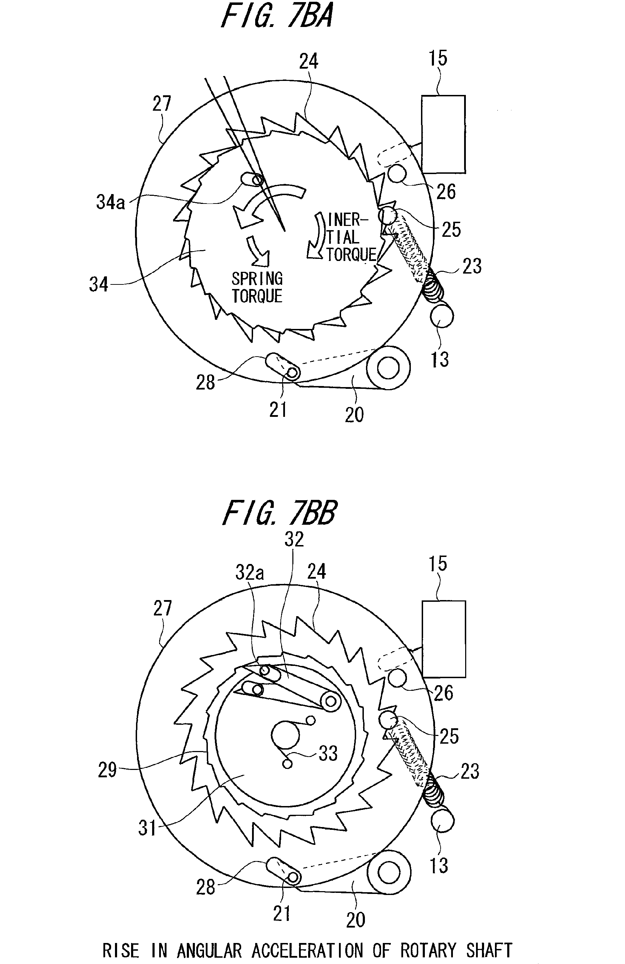

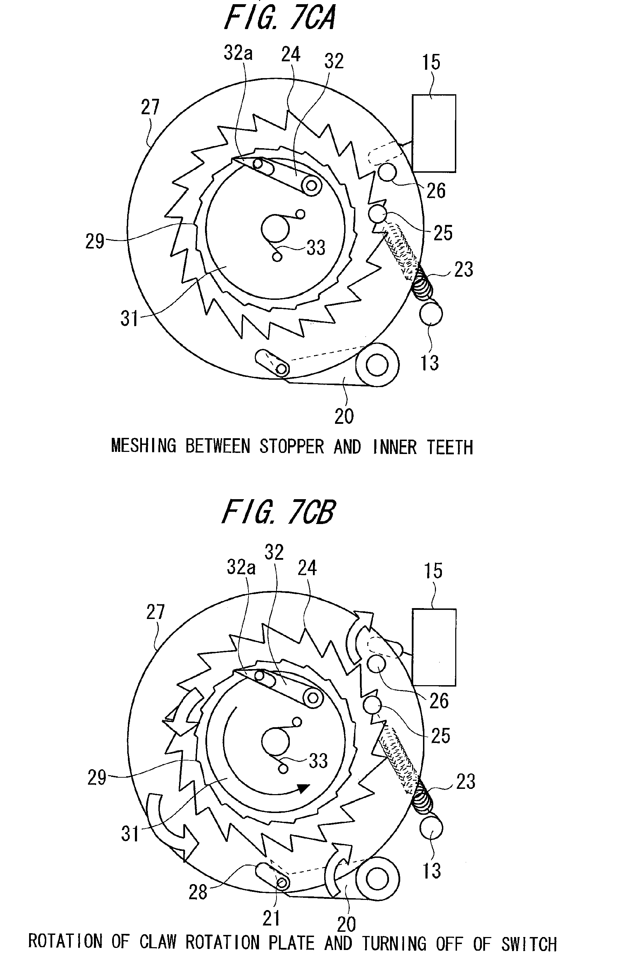

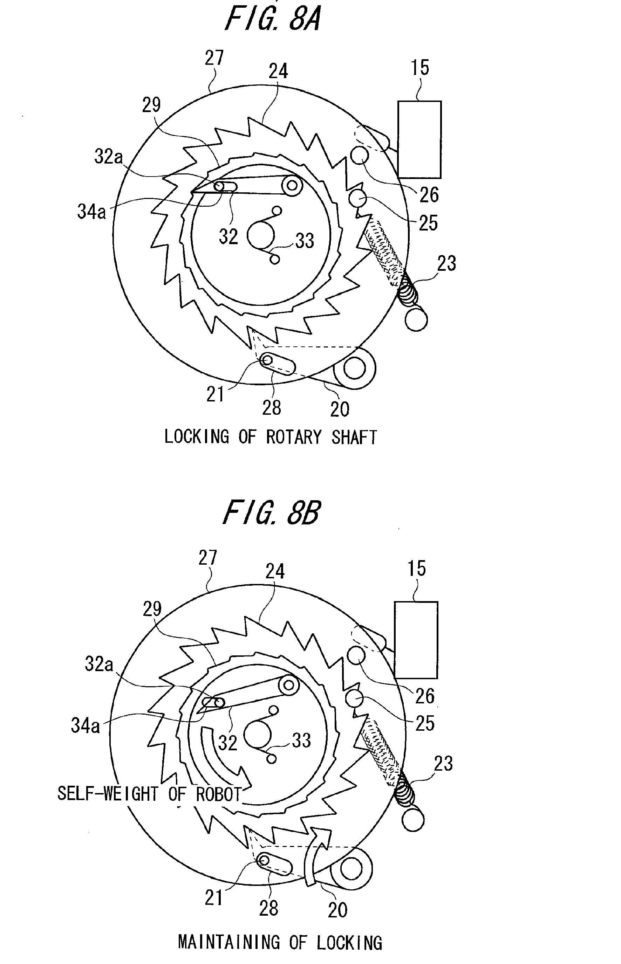

On the basis of the foregoing description, detailed description is made with reference to FIGS. 7AA, 7AB, 7BA, 7BB, 7CA, 7CB, 8A and 8B of acceleration detection performed by the acceleration detecting portion 30 with respect to the rotary shaft 22, and locking of the rotary shaft 22 on the basis of acceleration thus detected. FIGS. 7AA, 7AB, 7BA, 7BB, 7CA, 7CB, 8A and 8B illustrate processes until the safety device 1 locks driving of the arm portion 100 after mechanically detecting predetermined acceleration and interrupting electric power supply to the arm portion 100 of the robot. This embodiment describes how the safety device 1 works when preset predetermined acceleration is generated in a direction indicated by the hollow arrows illustrated in FIGS. 7AA, 7AB, 7BA and 7BB, that is, in a direction of left-hand rotation of the rotary shaft 22. When the rotary shaft 22 is rotated in an inverse direction, the safety device 1' is actuated, which is installed for locking rotation in the inverse direction by the similar processes.

First, in a normal state in which the acceleration of the rotary shaft 22 is low as in FIGS. 7AA and 7AB, inertial torque generated by the acceleration in the ratchet wheel 34 is also relatively low (that is, lower than predetermined acceleration), and hence is overcome by the spring torque exerted by the spring 33. As a result, the ratchet wheel 34 is rotated together with the rotary shaft 22. In this case, locking of the rotary shaft 22 is not effected as a matter of course. Then, inertial torque generated in the ratchet wheel 34 becomes gradually higher as acceleration of the rotary shaft 22 becomes higher, and the inertial torque overcomes the spring torque exerted by the spring 33 when the acceleration exceeds the predetermined acceleration, which causes "displacement" in rotation ("displacement" illustrated in FIG. 6) between the ratchet wheel 34 and the rotary shaft 22 (refer to FIGS. 7BA and 7BB). As a result, as illustrated in FIGS. 7BA and 7BB, inside the inner teeth 29, the stopper 32 is guided onto an inner teeth 29 side by the guide hole 34a, and the stopper 32 and the inner teeth 29 come into contact with each other.

After coming into contact with the inner teeth 29, the stopper 32 moves to a position of being hooked to the inner teeth 29 (refer to FIG. 7CA). After a state is established in which the inner teeth 29 and the stopper 32 are hooked to each other, rotation of the rotary shaft 22 is transmitted to the claw rotation plate 27 by the stopper 32, and the claw rotation plate 27 in a state of being not influenced by the rotation of the rotary shaft 22 is rotated together with the rotary shaft 22. Incidentally, a geometric holding relationship is established between the guide hole 28 formed in the claw rotation plate 27 and the guide bar 21 of the locking claw 20. Therefore, as illustrated in FIG. 7CB, a rotational force for rotating the locking claw 20 in a direction of moving toward the rotary shaft 22 acts on the locking claw 20. Further, simultaneously, the switch 15 is turned off by the pin 26 attached to the claw rotation plate 27, and thus electric power supply to the actuator 200 is interrupted.

After that, as illustrated in FIGS. 8A and 8B, the ratchet of the ratchet wheel 24 and the locking claw 20 mesh with each other by the above-mentioned rotational force, and thus the rotary shaft 22 is locked. With this configuration, unexpected actions of the arm portion 100 of the robot with respect to a human can be prevented. Note that, after the rotary shaft 22 is locked, when acceleration of the rotary shaft 22 is eliminated, inertial torque acting on the ratchet wheel 34 is eliminated in accordance there with. As a result, the stopper 32 is returned to the original position by the spring 33. However, when torque generated by a self-weight of the arm portion 100 of the robot acts as in FIG. 8B, meshing between the ratchet of the ratchet wheel 24 and the locking claw 20 is maintained as long as the torque acts, and thus locking of the rotary shaft 22 continues to be maintained.

Further, even when the torque generated by the self-weight of the robot acts in a direction inverse to that of FIG. 8B after the rotary shaft 22 is locked, acceleration in rotation of the rotary shaft 22 is detected by the safety device 1' installed for regulating rotation in the inverse direction, and the rotary shaft 22 is reliably locked by the safety device 1' configured as described above. In this case, when the acceleration of the rotary shaft 22 does not reach predetermined acceleration, locking is not effected to the rotary shaft 22. However, electric power supply to the actuator 200 is interrupted, and hence the arm portion 100 of the robot slowly descends and then stops in a state of being suspended from the rotary shaft 22. As a result, damage to a human is suppressed.

### <Regarding speed detection and locking of the rotary shaft 22>

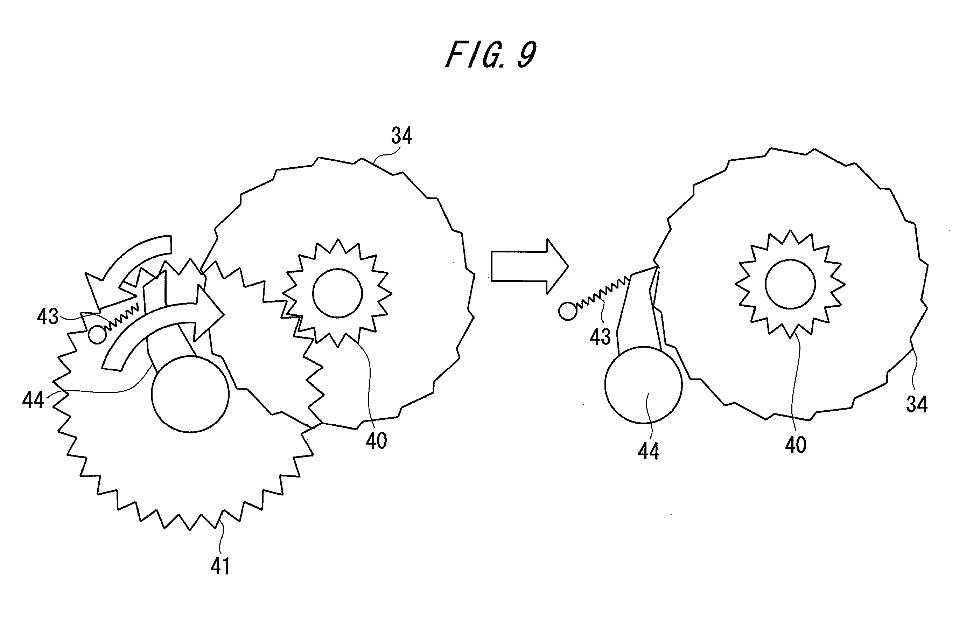

Next, description is made with reference to FIG. 9 of how the safety device 1 works on the basis of a speed (rotational speed) of the rotary shaft 22. FIG. 9 illustrates a mechanism of speed detection of the rotary shaft 22 with use of the stopper 44. First, the speed of the rotary shaft 22 is transmitted from the gear 40 fixed to the rotary shaft 22 to the rotary damper 42 through intermediation of the gear 41. Because the stopper 44 is attached to the rotary damper 42, braking torque from the rotary damper 42 in proportion to the speed of the rotary shaft 22 acts on the stopper 44. Further, the spring 43 is also connected to the stopper 44, the spring 43 generating spring torque in a direction inverse to that of the braking torque from the rotary damper 42.

In this context, when the speed of the rotary shaft 22 is increased, the braking torque exerted by the rotary damper 42 becomes higher in accordance therewith. When a value of the speed reaches a predetermined speed, the stopper 44 comes into contact and meshes with a ratchet part provided along an outer periphery of the ratchet wheel 34. As a result, the ratchet wheel 34 is held by the stopper 44, and "displacement" in rotation occurs between the rotary shaft 22 and the ratchet wheel 34. Further, the displacement is synonymous with the "displacement" described above in the acceleration detecting portion 30. When the displacement occurs, the stopper 32 in the inner teeth 29 comes into contact with the inner teeth 29, and after that, the rotary shaft 22 is locked by the processes similar to those in the case of the acceleration detecting portion 30. With this configuration, unexpected actions of the arm portion 100 of the robot with respect to a human can be prevented.

### <Regarding rescue of a human after locking of the rotary shaft 22>

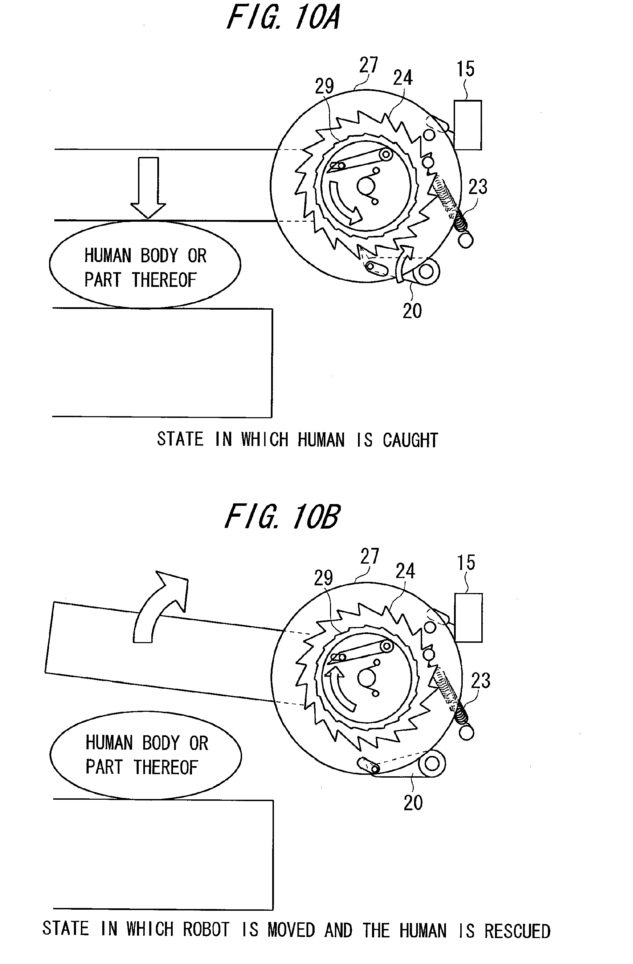

As illustrated in FIGS. 10A and 10B, after the rotary shaft 22 is locked (after the locking claw 20 enters a state of being hooked to the ratchet wheel 24), a human body or a part thereof may be caught owing to the robot because of the self-weight or the like of the robot in some cases (refer to FIG. 10A). However, in the robot attached with the safety device 1, locking is not effected by the locking claw 20 in a direction inverse to the direction in which the human is caught. Thus, as illustrated in FIG. 10B, the robot can be moved in the inverse direction. In this manner, the human thus caught can be rescued.

### <Regarding time saving between completion of acceleration detection or speed detection and locking of the rotary shaft 22>

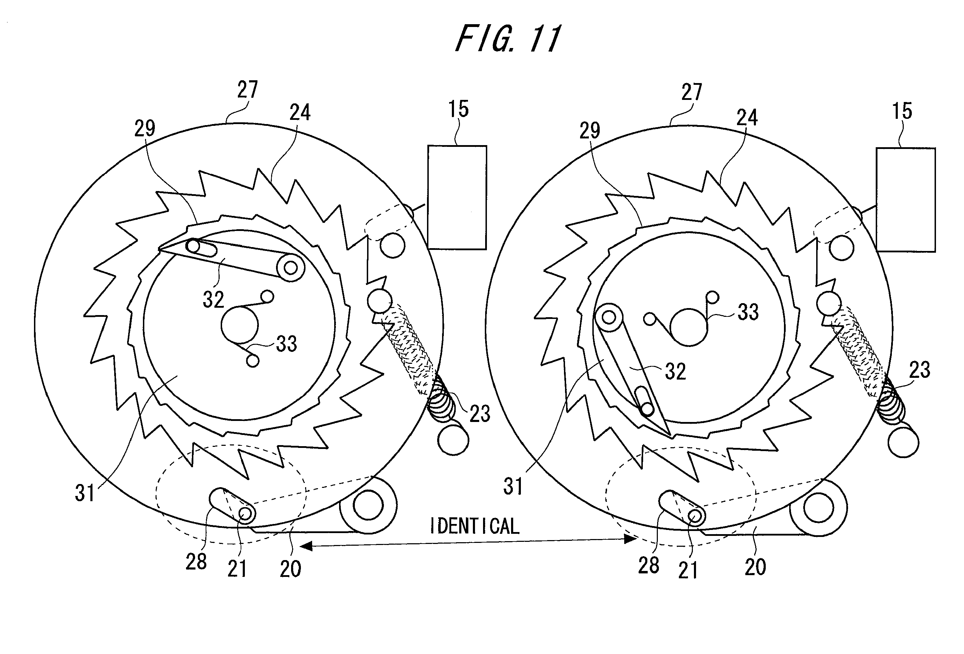

The safety device 1 is configured as follows: in order that the ratchet of the ratchet wheel 24 and the locking claw 20 reliably mesh with each other, a relationship, that is, a positional relationship in which the locking claw 20 and the ratchet of the ratchet wheel 24 mesh with each other without fail is established therebetween when the stopper 32 enters a state of being hooked to the inner teeth 29. (Refer to FIG. 11. In FIG. 11, the locking claw 20 is not in a state of meshing with the ratchet wheel 24. After that, the claw rotation plate 27 is rotated, and thus the locking claw 20 is reliably meshed with the ratchet wheel 24.) That is, even when the stopper 32 enters a state of being hooked to any of the inner teeth 29, the locking claw 20 and the ratchet of the ratchet wheel 24 are configured to have the identical geometric relationship at the moment of meshing with each other.

In order to realize such a function with the single stopper 32 in the acceleration detecting portion 30, it is necessary to satisfy the following conditions.
(1) The teeth number of the ratchet of the ratchet wheel 24 and the number of the inner teeth 29 are set to be equal to each other.
(2) The plate 31 attached with the stopper 32 and the ratchet wheel 24 are rotated together with the rotary shaft 22.
(3) Until the stopper 32 enters a state of being hooked to the inner teeth 29, the claw rotation plate 27 is not rotated together with the rotary shaft 22.

The safety device 1 satisfies all the above-mentioned three conditions. In this context, in the safety device 1 having such a structure, it is preferred that, in consideration of damage to a human, the time period be as short as possible between completion of the mechanical detection of the acceleration of the rotary shaft 22 to have exceeded predetermined acceleration or of the speed to have exceeded a predetermined speed and completion of locking of the rotary shaft 22. Further, as a method for shorting the time period, there may be given increases in teeth number of the inner teeth 29 of the claw rotation plate 27 and teeth number of the ratchet of the ratchet wheel 24. When the teeth number of the inner teeth 29 of the claw rotation plate 27 is increased, the tooth width of each of the inner teeth 29 is reduced in accordance therewith, with the result that the time period is reduced during which the stopper 32 comes into contact with the inner teeth 29 and then moves there along. Further, when the teeth number of the ratchet of the ratchet wheel 24 is increased and the teeth are downsized, an angle of rotating the locking claw 20 is lowered in accordance therewith, with the result that the time period for rotating the locking claw 20 is shortened.

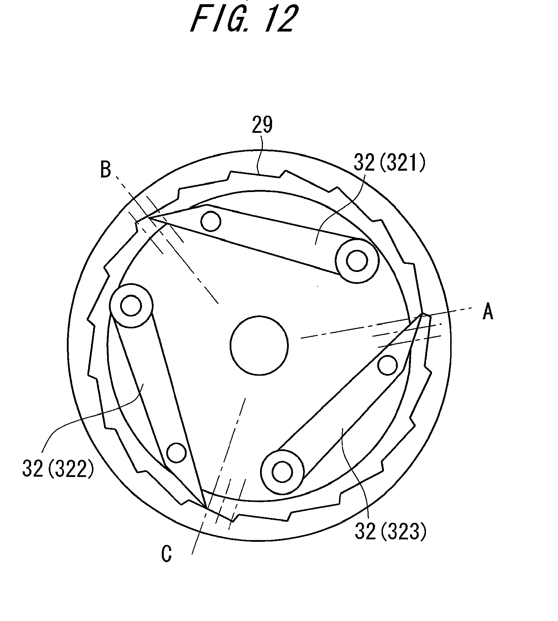

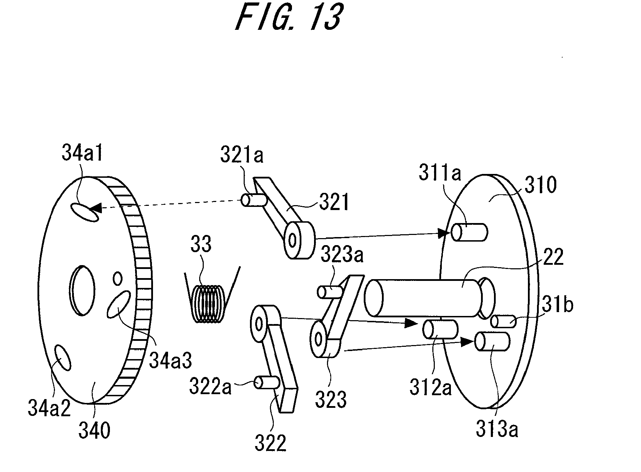

However, in consideration of installation of the safety device 1 to the robot, the safety device 1 is required to have the size as compact as possible. Thus, there is a limitation on an increase in the teeth number of the inner teeth 29, with an inner diameter of the inner teeth 29 of the claw rotation plate 27 being maintained to be constant. In this context, in the following, FIG. 12 and FIG. 13 illustrate a mechanism in which the teeth number of the inner teeth 29 is constant and more stoppers 32 are provided, the mechanism providing the same advantage as that in the case where the teeth number of the inner teeth 29 is increased.

As an example, FIG. 12 illustrates a case where three stoppers 32 (321, 322, and 323) are installed in the acceleration detecting portion 30. As illustrated in the figure, the acceleration detecting portion 30 is arranged so that, at the positions each determined by trisection of the tooth width of each of the inner teeth 29 inside which the acceleration detecting portion 30 is housed and opposed thereto, distal end parts of the stoppers 32 are positioned while being displaced one by one. (In FIG. 12, at the distal end part of each of the stoppers 32, there are indicated three lines which trisect corresponding one tooth of the inner teeth 29. Note that, in the figure, the position indicated by A corresponds to a line at one end of the three lines, the position indicated by C to a line at another end of the three lines, and the position indicated by B to a middle line of the three lines.)

With this structure, for example, even when the stopper 323 at the position of the line A of FIG. 12 does not mesh with corresponding one of the inner teeth 29 at the moment of coming into contact with the corresponding one of the inner teeth 29, only with the movement of the stopper 321 at the position of the line B by one third of the tooth width of corresponding one of the inner teeth 29, the stopper 321 meshes with the corresponding one of the inner teeth 29. As a result, although the number of the inner teeth 29 is unchanged, the number is actually triplicated, and thus the time period for locking the rotary shaft 22 is shortened. Note that, in this case, with use of the ratchet wheel 24 having teeth three time as many in teeth number as the inner teeth 29, the identity of the geometric relationship (geometric relationship illustrated in FIG. 11) is maintained between the teeth of the ratchet wheel 24 and the locking claw 20 at the moment when the inner teeth 29 and the stopper 32 are hooked to each other. Thus, the locking claw 20 and the teeth of the ratchet wheel 24 mesh with each other at the moment when the inner teeth 29 and the stopper 32 are hooked to each other. Further, also by increasing of the teeth number of the ratchet of the ratchet wheel 24 and by downsizing of the teeth for the purpose of lowering of the angle of rotating the locking claw 20, the time period for rotating the locking claw 20 is shortened.

Incidentally, in the above description, although the case is illustrated where the three stoppers 32 are used, the number of the stoppers may be further increased as far as the space for installing the stoppers allows. When N numbers of stoppers are arranged, it is only necessary that the stoppers be arranged so that the distal end part of each of the stoppers comes to the position determined by N-section of the tooth width of each of the inner teeth 29. Further, in order to synchronize a timing at which the inner teeth 29 and the stopper 32 are hooked to each other and a timing at which the ratchet wheel 24 and the locking claw 20 mesh with each other, it is only necessary to use a ratchet wheel which has teeth N times as many in teeth number as the inner teeth 29. Note that, there is a limitation on the teeth number of the ratchet wheel. Further, in consideration of friction and the like which act on the stoppers, there is a limitation also on an increase in the number of the stoppers. Accordingly, the appropriate number of the stoppers ranges from approximately 1 to 8, preferably, 1 to 4.

Note that, FIG. 13 illustrates a configurational example of an acceleration detecting portion 300 in the case where the three stoppers 321, 322, and 323 illustrated in FIG. 12 are used. The three stoppers are installed in a relatively rotatable state with respect to a plate 310 respectively through intermediation of rotary shafts 311a, 312a, and 313a provided on the plate 310. Further, guide bars 321a, 322a, and 323a are respectively provided at the distal end parts of the stoppers. In the assembled state of the safety device 1, the guide bars enter a state of being respectively inserted into guide holes 34a1, 34a2, and 34a3, which correspond to the guide bar, and are provided on a ratchet wheel 340.

### <For overcoming of strength deficiency of the ratchet wheel 24>

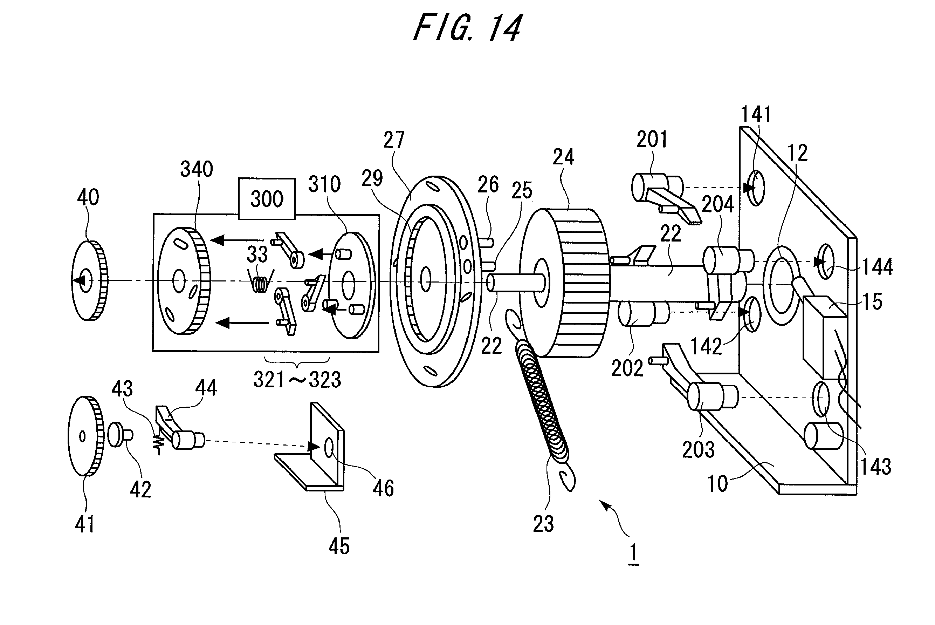

As described above, the increase in the teeth number of the ratchet wheel 24 more effectively shortens the time period required for locking of the rotary shaft 22. However, when the teeth number of the ratchet wheel 24 is increased without change in diameter, the teeth are downsized and reduced in strength. Meanwhile, when the diameter of the ratchet wheel 24 is increased, load to the actuator becomes higher. Thus, as illustrated in FIG. 14, there are installed a plurality of locking claws 201 to 204 which mesh with the ratchet wheel 24. In this context, to the claw rotation plate 27, correspondingly to the number of the locking claws, there are installed a plurality of guide holes into which guide bars of the locking claws are inserted.

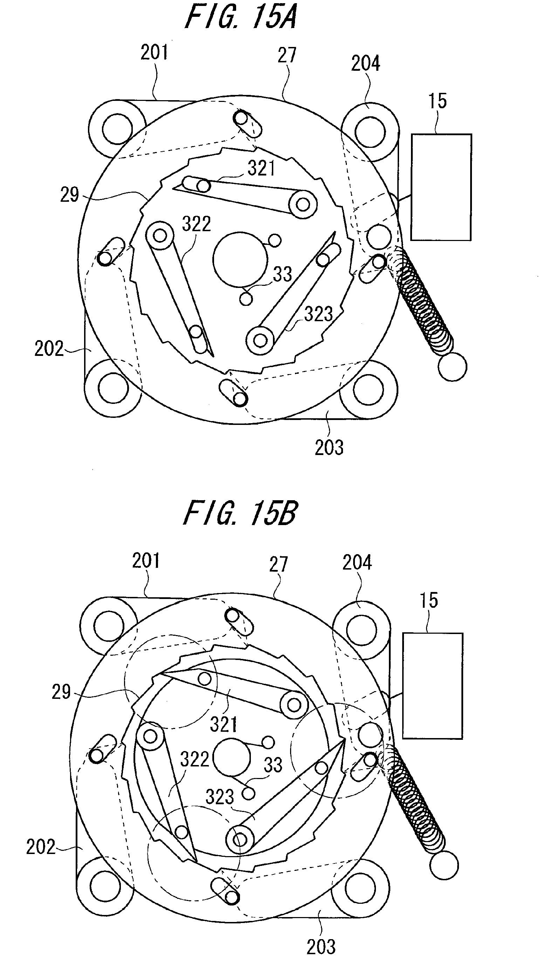

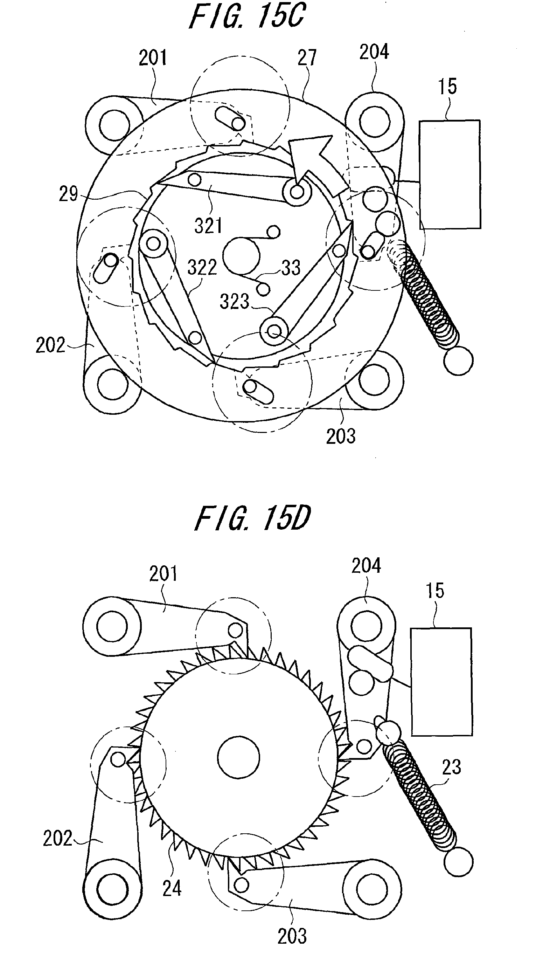

By adoption of such a configuration, when the claw rotation plate 27 is rotated and displacement occurs with respect to the rotary shaft 22 as illustrated in FIGS. 15A to 15D, the plurality of locking claws 201 to 204 simultaneously move, and thus the ratchet wheel 24 can be simultaneously locked by the plurality of locking claws. FIG. 15A illustrates a normal state in which acceleration and the like of the rotary shaft 22 are lower than predetermined thresholds. FIG. 15B illustrates a state in which the acceleration and the like of the rotary shaft 22 exceed predetermined thresholds, and the stoppers 321 to 323 come into contact with the inner teeth 29. FIG. 15C is a view of a state in which, as a result of having undergone the state illustrated in FIG. 15B, the plurality of locking claws 201 to 204 simultaneously start to move toward the ratchet wheel 24 due to rotation of the claw rotation plate 27. FIG. 15D is a view of a state in which, as a result of having undergone the state illustrated in FIG. 15C, the plurality of locking claws 201 to 204 simultaneously mesh with the ratchet wheel 24. In this manner, when the rotary shaft 22 is locked simultaneously by the plurality of locking claws 201 to 204, load applied to the teeth of the ratchet wheel 24 becomes lower in proportion to the number of the locking claws, and thus strength deficiency is overcome. Note that, the appropriate number of the claws ranges from approximately 1 to 8, preferably, 1 to 4.

### <Modification>

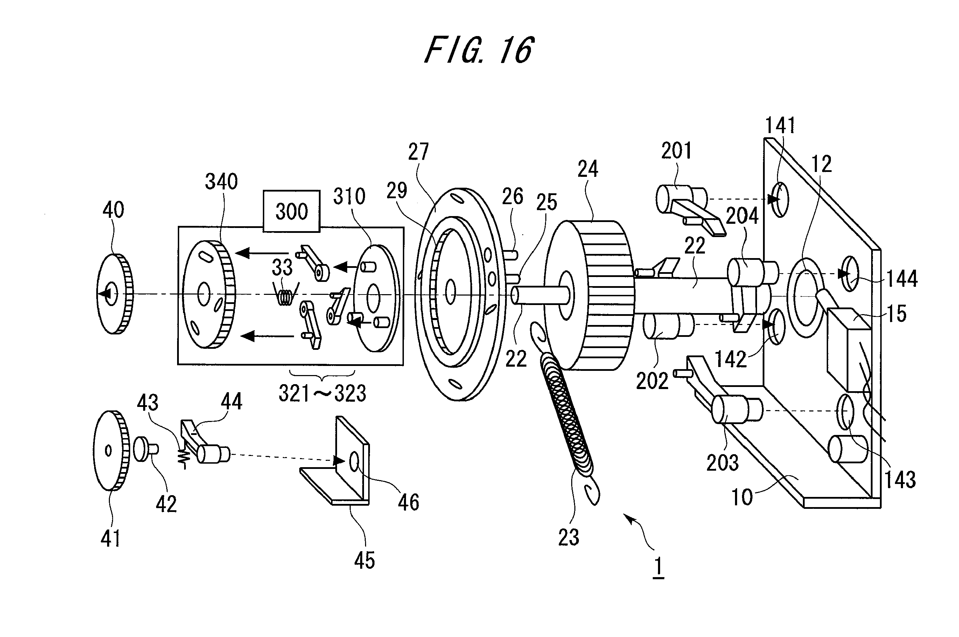

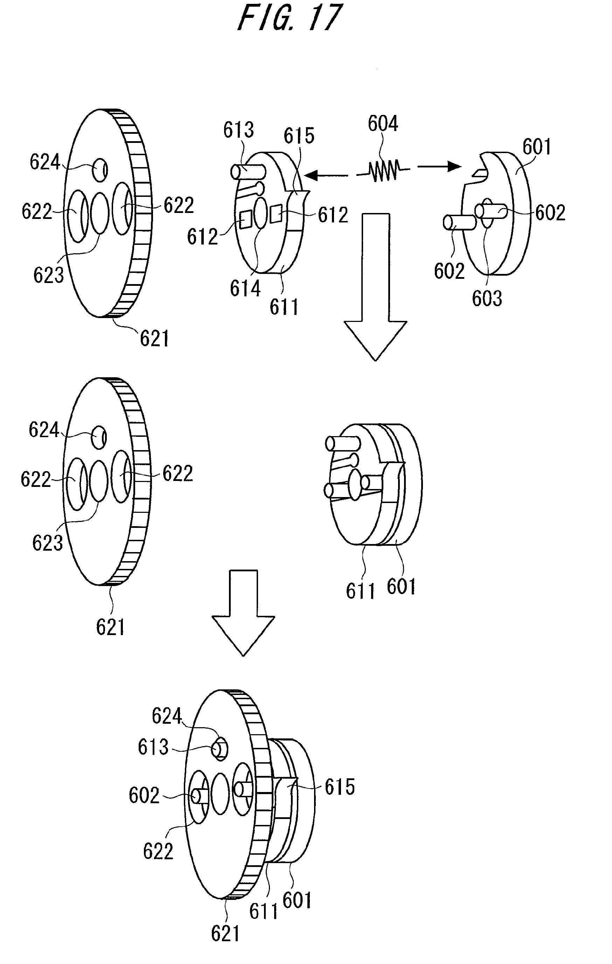

Next, description is made of a modification of the acceleration detecting portion with reference to FIG. 16 to FIG. 21. FIG. 16 is a view of a configuration of the safety device 1 including an acceleration detecting portion 600 according to the modification. Of the components in the configuration of the safety device, components same as those in the configuration of the safety device 1 precedingly illustrated, for example, in FIG. 4 or 14 are denoted by the same reference symbols, and detailed description thereof is omitted. The acceleration detecting portion 600 includes a plate 601, a spring 604, a stopper 611, and a ratchet wheel 621. FIG. 17 illustrates the specific configuration of the acceleration detecting portion 600. Note that, illustration in FIG. 17 is made for ease of understanding of the following procedure: the plate 601, the spring 604, and the stopper 611 are first integrated with each other (upper portion in FIG. 17); next, the ratchet wheel 621 is attached thereto (middle portion in FIG. 17); and the acceleration detecting portion 600 is completed (lower portion in FIG. 17).

At the center of the plate 601, there are provided a through-hole 603 for allowing fixation and coupling with respect to the rotary shaft 22, and two protruding guide pins 602 on both sides of the through-hole 603 therebetween. Accordingly, the plate 601 is rotated integrally with the rotary shaft 22. Further, the stopper 611 is provided with a through-hole 614 for allowing the rotary shaft 22 to insert therethrough. Note that, the stopper 611 is not fixed to the rotary shaft 22. On the stopper 611, there are provided a protruding pin 613, and two guide holes 612 on both sides of the through-hole 614 therebetween, the guide holes 612 being rectangular through-holes. As illustrated in FIG. 17, long-side directions of the guide holes 612 extend in a direction parallel to the line connecting the two guide pins 602, and widths in short-side directions thereof are set so as to allow insertion of the guide pins 602 corresponding to the respectively guide holes 612. Further, to a part of an outer periphery of the stopper 611, there is provided a protruding portion 615 having a shape of being capable of being hooked to the inner teeth 29 of the claw rotation plate 27.

Next, the ratchet wheel 621 is provided with a through-hole 623 for allowing the rotary shaft 22 to insert therethrough. Note that, the ratchet wheel 621 is not fixed to the rotary shaft 22. Further, the ratchet wheel 621 is provided with a pin hole 624 into which the pin 613 attached to the stopper 611 is inserted, and escape holes 622 for preventing the guide pins 602 attached to the plate 601 from coming into contact with the ratchet wheel 621. The plate 601, the stopper 611, and the ratchet wheel 621 are assembled to each other as follows: first, the plate 601 is coupled to the stopper 611 through intermediation of the spring 604 (state illustrated in the middle portion of FIG. 17); after that, the pin 613 of the stopper 611 is inserted into the pin hole 624 so that the stopper 611 and the ratchet wheel 621 are coupled to each other (state illustrated in the lower portion of FIG. 17). In this manner, the ratchet wheel 621 is elastically coupled by the spring 604 with respect to the plate 601 fixed to the rotary shaft 22. Therefore, the rotation of the rotary shaft 22 is transmitted from the plate 601 to the ratchet wheel 621 through intermediation of the spring 604. As a result, the ratchet wheel 621 is rotated through intermediation of the spring 604.

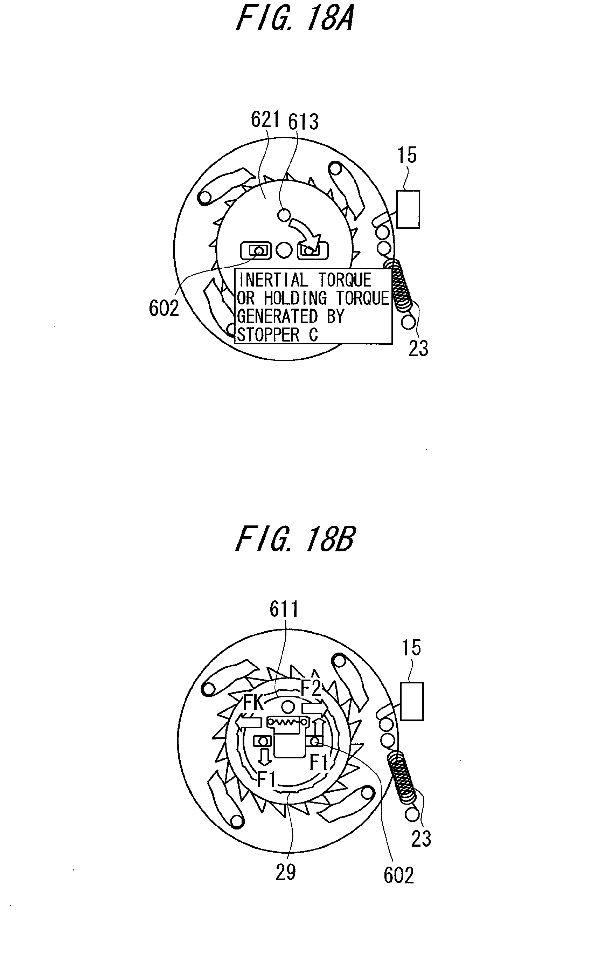

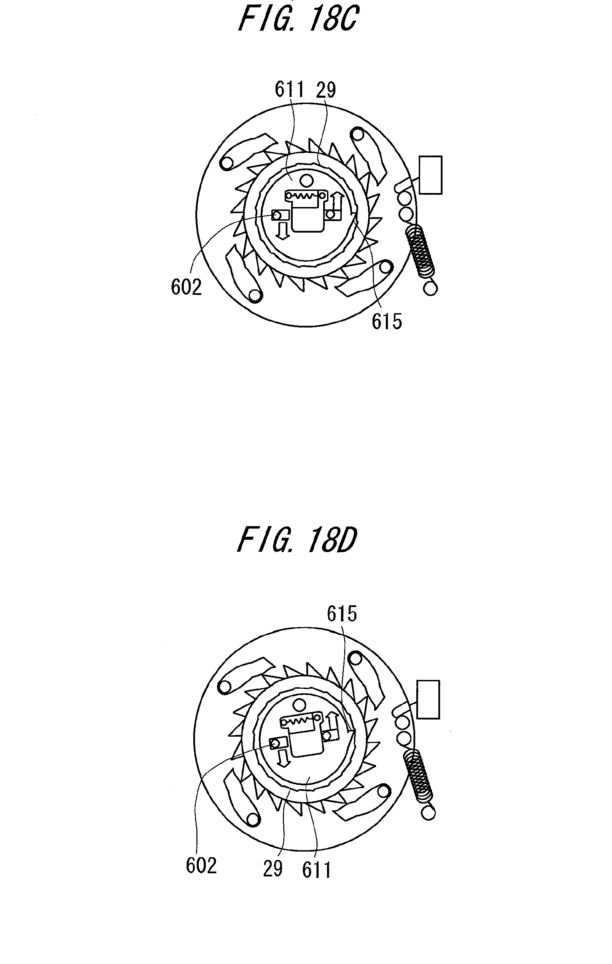

By adoption of such a configuration, the following acts on the ratchet wheel 621 as indicated by the hollow arrow of FIG. 18A: inertial torque in proportion to the acceleration of the rotary shaft 22, or holding torque which acts due to meshing with the stopper 44 when the rotary shaft 22 reaches a predetermined speed. As a result, a force F2 for sliding the stopper 611 acts on the pin 613 as illustrated in FIG. 18B. In this case, the spring 604 exerts a predetermined spring force Fk between the stopper 611 and the plate 601. Thus, when the force F2 exceeds the predetermined spring force Fk, the stopper 611 slides and comes into contact with the inner teeth 29 through intermediation of the protruding portion 615 thereof (state illustrated in FIG. 18C). Note that, the sliding direction of the stopper 611 is determined by a geometric relationship between the guide holes 612 and theguidepins602. Afterthat,inaccordancewiththerotation of the rotary shaft 22, the stopper 611 is rotated along the inner teeth 29 while coming into contact therewith, and finally enters a state of being hooked to the inner teeth 29 (state illustrated in FIG. 18D). From then on, similarly to the safety device 1 precedingly described, the claw rotation plate 27 is rotated, and the plurality of locking claws 201 to 204 simultaneously mesh with the ratchet wheel 24. Thus, locking of the rotary shaft 22 is effected.

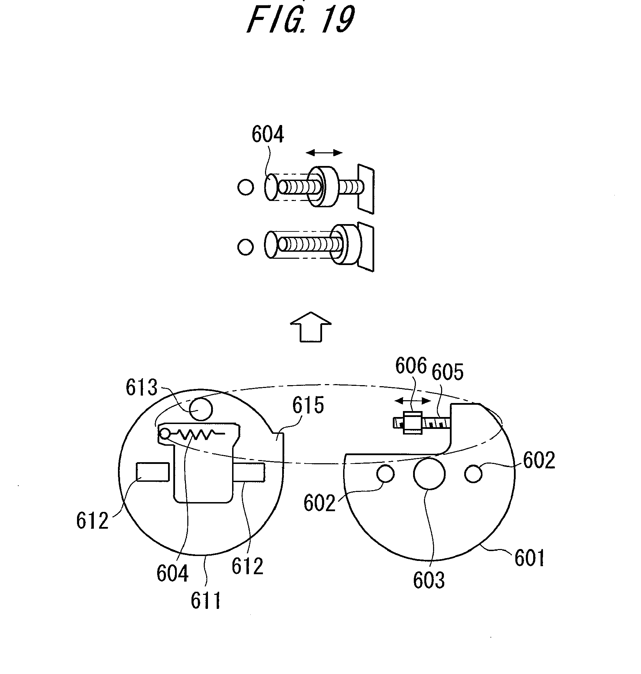

Note that, in order to change predetermined acceleration in the acceleration detecting portion 600, it is only necessary to change the predetermined spring force Fk which is generated by the spring 604 and acts between the plate 601 and the stopper 611. For this purpose, it is possible to adopt as pring having a spring constant different as that of the spring 604, or to adopt a structure in which theentirelengthofthespring604ischangeableasillustrated in FIG. 19 in the assembled state of the safety device 1. In the following, with reference to FIG. 19, description is made of a structure for changing the predetermined spring force Fk exerted by the spring 604. FIG. 19 is a view illustrating a relationship between the plate 601 and the stopper 611 in the acceleration detecting portion 600 while focusing on the spring 604.

In this context, a screw 605 extending in an installation direction of the spring 604 is installed on a plate 601 side. In addition, there is provided a nut 606 which is screwed together with the screw 605 and movable on the screw 605. Further, one end of the spring 604 is connected to the nut 606, and another end of the spring 604 is connected to the stopper 611. With this configuration, the nut 606 is moved on the screw 605, and thus the entire length of the spring 604 can be adjusted in the assembled state of the safety device 1. As a result, a value of the spring force Fk can be changed.

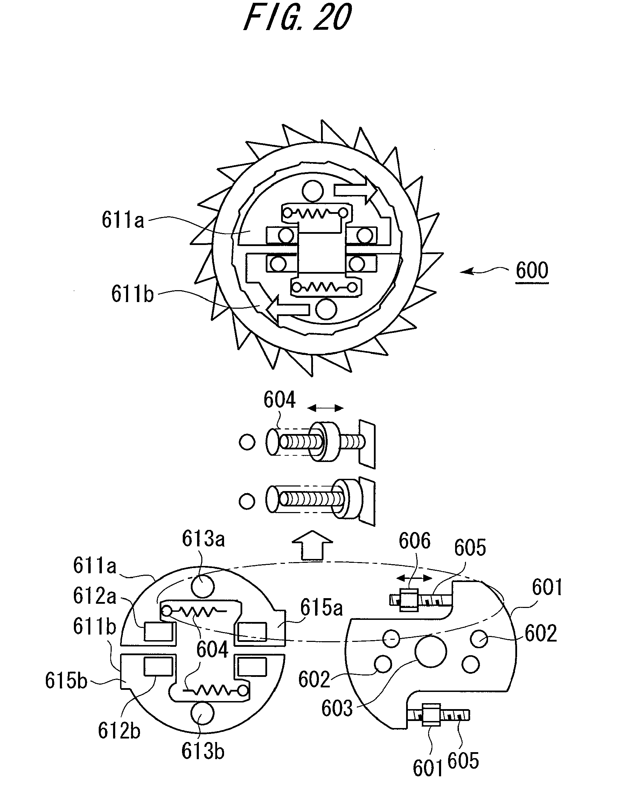

Alternatively, for the same purpose as that of the acceleration detecting portion 300 illustrated precedingly, two stoppers 611a and 611b illustrated in FIG. 20 may be adopted instead of the stopper 611. As a result, contacts with respect to the inner teeth 29 are made at a plurality of points, and thus the time period can be shortened between completion of detection of the fact that acceleration of the rotary shaft 22 has exceeded predetermined acceleration and locking of the rotary shaft 22. Specifically,thestoppers 611a and 611b illustrated in FIG. 20 have substantially the same semicircular shape. Correspondingly to the above-mentionedguideholes,twoguideholes612aareprovided in the stopper 611a, and two guide holes 612b are provided in the stopper 611b. Further, correspondingly to the above-mentioned pin, a pin 613a is provided to the stopper 611a, and a pin 613b is provided to the stopper 611b. Still further, correspondingly to the above-mentioned protruding portion, a protruding portion 615a is provided to the stopper 611a, and a protruding portion 615b is provided to the stopper 611b.

In this context, the plate 601 is provided with four guide pins 602: two guide pins corresponding to the guide holes 612a of the stopper 611a, and two guide pins corresponding to the guide holes 612b of the stopper 611b. Further, there are provided a spring 604a for elastically coupling the stopper 611a and the plate 601 to each other, and a spring 604b for elastically coupling the stopper 611b andtheplate601toeachother. Notethat,whilenotexplicitly shown in FIG. 20, the ratchet wheel 621 is provided with two pin holes into which the pin 613a and the pin 613b are inserted, respectively. With this configuration, the ratchet wheel 621 is elastically coupled by the springs 604a and 604b with respect to the plate 601 fixed to the rotary shaft 22. Further, each of the springs is connected to the plate 601 through intermediation of the screw 605 and the nut 606 described above, and hence it is possible to appropriately adjust the predetermined spring force Fk exerted between the plate 601 and the stoppers 611a and 611b.

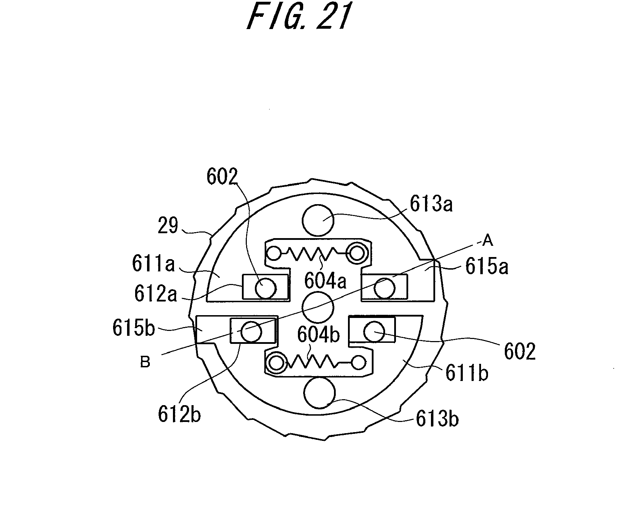

Further, for the same purpose as that of the acceleration detecting portion 300 illustrated precedingly (refer to FIG. 12), as illustrated in FIG. 21, the stoppers are installed so that the plurality of protruding portions 615a and 615b of the stoppers 611a and 611b come to the positions determined by equal division of the tooth width of each of the inner teeth 29 by the number of stoppers (bisected in thisembodiment). Byadoptionofsuchastructure,forexample, even in the case where the stopper 611a including the protruding portion 615a provided at the position A of FIG. 21 (end side part of the inner teeth) does not enter the state of being hooked to the inner teeth 29 at the moment of coming into contact with the inner teeth 29, when the stopper 611b including the protruding portion 615b coming to the position B of FIG. 21 (center part of the inner teeth) moves by an amount of a quotient obtained by division of the tooth width of each of the teeth 29 by the number of stoppers (1/2 of the tooth width in this embodiment), the stopper 611b including the protruding portion 615b at the position B enters the state of being hooked to the inner teeth 29. This configuration provides substantially the same advantage as that in the case where the number of the inner teeth 29 is multiplied by the number of stoppers, which contributes to shortening of the time period required for locking of the rotary shaft 22.

### Second embodiment

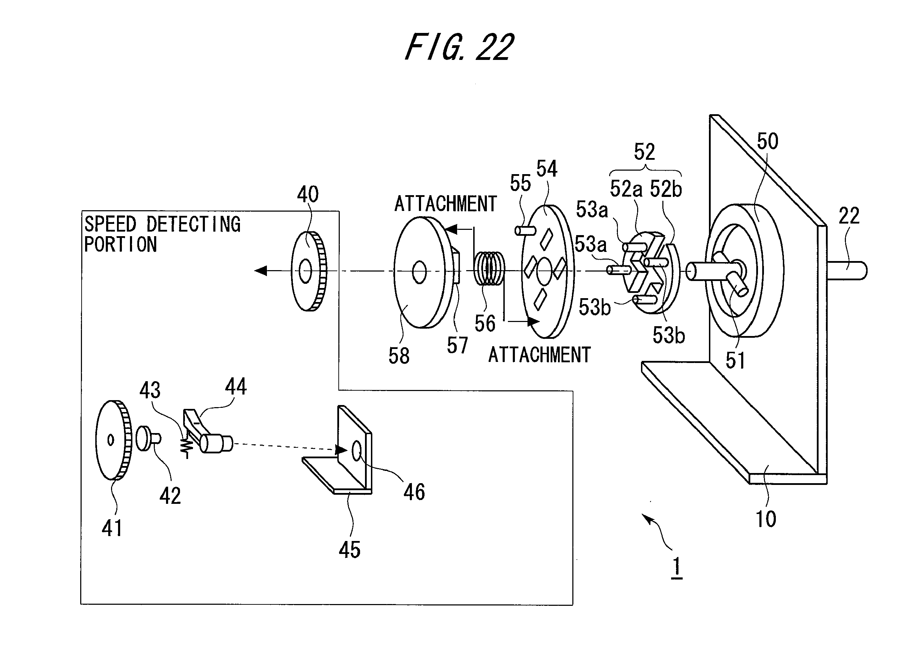

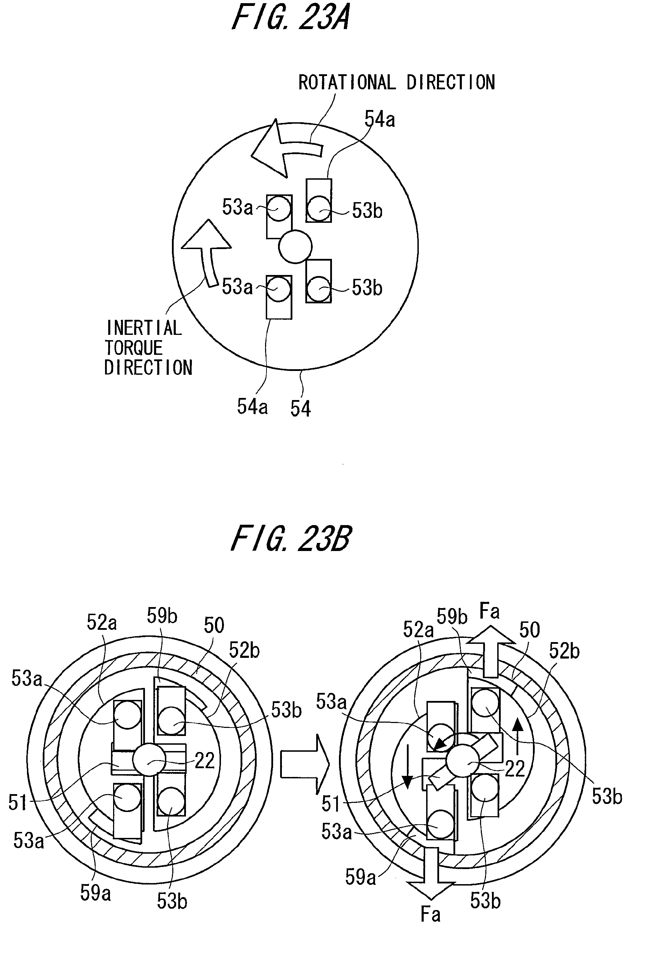

FIGS. 22, 23A and 23B illustrate the safety device 1 according to a second embodiment of the present invention. Also in the safety device 1 according to this embodiment, rotational movement of the rotary shaft 22 is stopped on the basis of at least one of the acceleration and speed of the rotary shaft 22 to which the drive force is transmitted from the actuator 200. FIG. 22 illustrates a structure of the safety device 1 according to this embodiment. Of the components therein, components same as those in the configuration of the safety device of the above-mentioned embodiment are denoted by the same reference symbols, and detailed description thereof is omitted. Note that, when the speed of the rotary shaft 22 exceeds a predetermined speed, the speed detecting portion including the gear 40 and the like which contribute to stopping of the rotary shaft 22 is the same as that in the preceding embodiment.

A brake drum 50 is provided on the frame 10 provided on the main-body side of the robot. The brake drum 50 interacts with a semicircular brake 52 described later, to thereby function as a brake for imparting a braking force to the rotary shaft 22. Further, in order to be housed in the brake drum 50, an arm 51, a stay 58, and the gear 40 are fixedly attached to the rotary shaft 22, and are rotated integrally with the rotary shaft 22. Note that, the arm 51 is a bar-like member attached perpendicularly to the rotary shaft 22, and is rotated on a bottom surface inside the brake drum 50 (surface along a wall surface of the frame 10) in accordance with the rotation of the rotary shaft 22. In this context, as illustrated in FIG. 22, the semicircular brake 52 (collectively referring to two semicircular brakes 52a and 52b), a ratchet wheel 54, and a torsion coil spring 56 are installed in this order from a brake drum 50 side between the brake drum 50 and the stay 58.

As illustrated in the figure, the semicircular brake 52 has a substantially semicircular shape, and a rectangular recess is provided at a center portion of the semicircular brake 52 so that a part of the arm 51 is hooked thereto. Accordingly, at the time of assembly of the safety device 1, the arm 51 is sandwiched between the two semicircular brakes52aand52b. Withthisconfiguration,thesemicircular brake 52 is rotated in the brake drum 50 in accordance with rotation of the arm 51. In this context, two guide pins projecting in an extending direction of the rotary shaft 22 are attached to each of the semicircular brakes 52. (The guide pins on a semicircular brake 52a side are denoted by reference symbol 53a, and the guide pins on a semicircular brake 52b side are denoted by reference symbol 53b.) Those four guide pins 53a and 53b are respectively inserted into four rectangular holes 54a provided in the ratchet wheel 54 (refer to FIGS. 23A and 23B). In an insertion state thus reached, each of the rectangular holes 54a has a space in a long-side direction thereof with respect to the guide pins 53a and 53b.

Further, the ratchet wheel 54 is connected to the stay 58 fixed to the rotary shaft 22 through intermediation of the torsion coil spring 56. Accordingly, the ratchet wheel 54 is elastically coupled by the torsion coil spring 56 with respect to the stay 58 fixed to the rotary shaft 22. Thus, the rotation of the rotary shaft 22 is transmitted from the stay 58 to the ratchet wheel 54 through intermediation of the torsion coil spring 56. As a result, the ratchet wheel 54 is rotated through intermediation of the torsion coil spring 56. In addition, the stay 58 is attached with a switch 57 for interrupting electric power supply to the actuator 200. When "displacement" in rotation described later occurs between the ratchet wheel 54 and the stay 58, the switch 57 is turned off by a switch pin 55 attached onto the ratchet wheel 54, and thus electric power supply to the actuator is interrupted.

In the safety device 1 having the structure as described above, when the rotary shaft 22 is rotated at certain acceleration in the direction of the left-hand rotation as illustrated in FIGS. 23A and 23B, inertial torque in proportion to the acceleration is generated in the ratchet wheel 54 (FIG. 23A). In this case, the ratchet wheel 54 is in a state of being connected to the rotary shaft 22 through intermediation of the torsion coil spring 56. Thus, when acceleration of the rotary shaft 22 rises, the inertial torque finally overcomes elastic torque exerted by the torsion coil spring 56, and the "displacement" (corresponding to the "displacement" in the preceding embodiment) in rotation occurs between the ratchet wheel 54 and the rotary shaft 22. Then, when the displacement in rotation occurs between the ratchet wheel 54 and the rotary shaft 22, by a geometric relationship between the guide pins 53a and 53b of the semicircular brakes 52a and 52b and the rectangular holes 54a of the ratchet wheel 54, sliding forces Fa by which the semicircular brakes 52a and 52b slide to the brake drum 50 side act on the respective semicircular brakes as illustrated inFIG.23B. Further,simultaneously,duetothedisplacement in rotation between the ratchet wheel 54 and the rotary shaft 22, the switch 57 attached to the stay 58 is turned off by the switch pin 55, and thus electric power supply to the actuator 200 is interrupted.

After that, the sliding forces cause a brake member 59a on the semicircular brake 52a to come into contact with the brake drum 50, a brake member 59b on the semicircular brake 52b to come into contact with the brake drum 50. As a result, a braking force is generated thereat, and thus the rotation of the rotary shaft 22 is stopped and a locked state is reached. Note that, when the acceleration of the rotary shaft 22 is eliminated after locking of the rotary shaft 22, inertial torque acting on the ratchet wheel 54 is eliminated in accordance therewith. As a result, the semicircular brake 52 is returned to the original position by the torsion coil spring 56. However, when the torque generated by the self-weight of the arm portion 100 of the robot acts, the sliding forces Fa act by the arm 51 as long as the torque acts, and hence the braking force generated by the semicircular brake 52 continues to act.

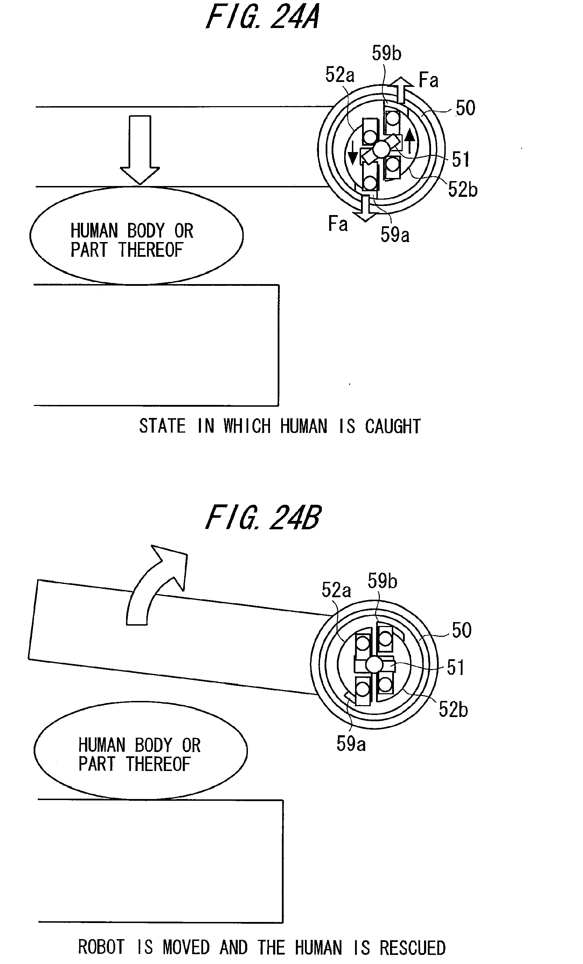

Further, also in the safety device 1 according to this embodiment, as illustrated in FIGS. 24A and 24B, in the case where a human body or a part thereof is caught at the time of locking of the rotary shaft 22 by the safety device 1, similarly to the safety device 1 described in the preceding embodiment, when the arm portion 100 of the robot is slowly liftedup in the inverse direction, the semicircular brake 52 is returned to the original position by the coil spring 56 and locking of the rotary shaft 22 is disengaged. Thus, the human thus caught can be rescued.

Note that, also regarding the speed detection, when an angular speed of the rotary shaft 22 reaches a predetermined speed, the ratchet wheel 54 is locked by the stopper 44 precedingly described, and the displacement in rotation occurs between the ratchet wheel 54 and the rotary shaft 22. Thus, the rotary shaft 22 is locked similarly to the case of the acceleration detection.

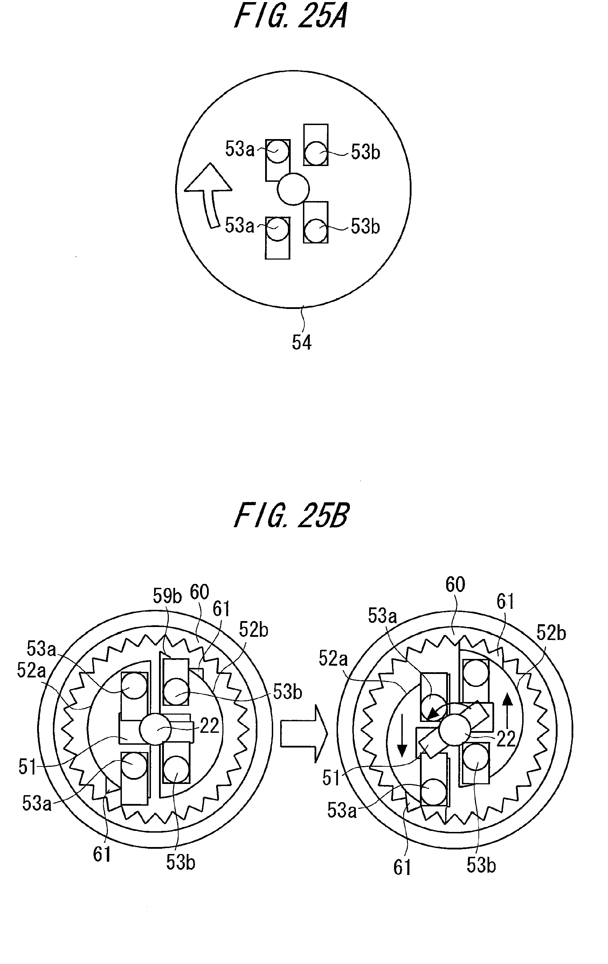

Further, as described above in this embodiment, the rotary shaft 22 is stopped by the braking force generated, between the semicircular brake 52 and the brake drum 50, by the brake members 59a and 59b. Alternatively, as illustrated in FIGS. 25A and 25B, breaking gears 60 and 61 meshing with each other may be provided between the semicircular brake 52 and the brake drum 50. The breaking gear 60 is provided on the brake drum 50 side and the breaking gear 61 is provided on a semicircular brake 52 side. As a result of meshing of the gears, a braking force is imparted to the rotary shaft 22. In addition, various configurations may be adopted as a configuration for generating a braking force (for example, other than the case illustrated in FIGS. 23A and 23B where the brake members (59a and 59b) are attached on a semicircular brake side, such as a case where the brake members are attached to an inner peripheral portion on a brake drum side). In this context, it is only necessary that, in any of the configurations, a braking force can be generated between the semicircular brake 52 and the brake drum 50.

### <Modification>

Further, in the safety devices of two types according to the first and second embodiments described above (the safety device 1 in which the ratchet wheel 24 is used, and the safety device 1 in which the arm 51 installed to the rotary shaft 22 is used), the spring 33 or the coil spring 56 for causing torque to act is used as a spring for holding the ratchet wheel 34 or the ratchet wheel 54. Alternatively, as long as being an elastic body capable of holding the ratchet wheel 34 or the ratchet wheel 54 around the rotary shaft 22, a linear spring or a constant force spring (spring yielding a constant force irrespective of a stroke of a spring) may be adopted. In other words, types of the spring are not particularly limited.

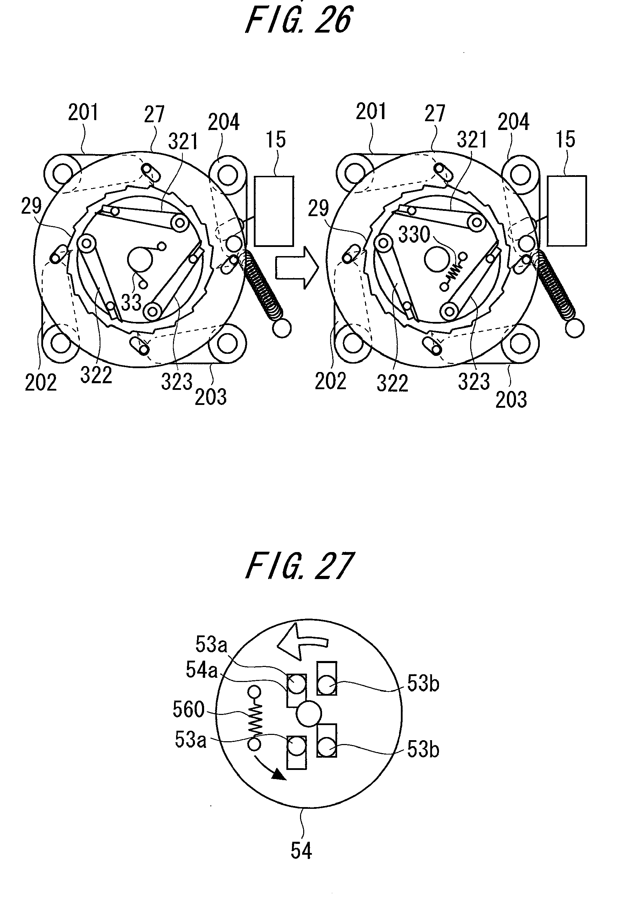

FIG. 26 illustrates an example in which, in the safety device 1 according to the above-mentioned first embodiment with use of the ratchet wheel 24, a linear spring 330 is used instead of the spring 33. The linear spring 330 is arranged so as to couple the plate 31 and the ratchet wheel 34 to each other. Further, FIG. 27 illustrates an example in which, in the safety device 1 according to the above-mentioned second embodiment with use of the arm 51 installed to the rotary shaft 22, a linear spring 560 is used instead of the torsion coil spring 56. The linear spring 560 is arranged so as to couple the stay 58 and the ratchet wheel 54 to each other.

### Third embodiment

As described above in the embodiments, the safety device 1 according to the present invention stops the drive shaft of the robot on the basis of at least one of the acceleration and speed of the rotary shaft 22 in the safety device 1. Specifically, with reference to magnitude of the elastic torque imparted by the elastic bodies including the spring 33, the torsion coil spring 56, the spring 43, and the like which are provided in the acceleration detecting portion and the speed detecting portion, when the acceleration and speed of the rotary shaft 22 exceed certain magnitude (predetermined acceleration and predetermined speed) related to the referential elastic torque, the rotary shaft 22 is stopped. In this context, in this embodiment, description is made of a method of making referential predetermined acceleration and predetermined speed for stopping of the rotary shaft 22 substantially adjustable by changing of elastic torque and other elements of those elastic members.

### <Setting of a predetermined speed>

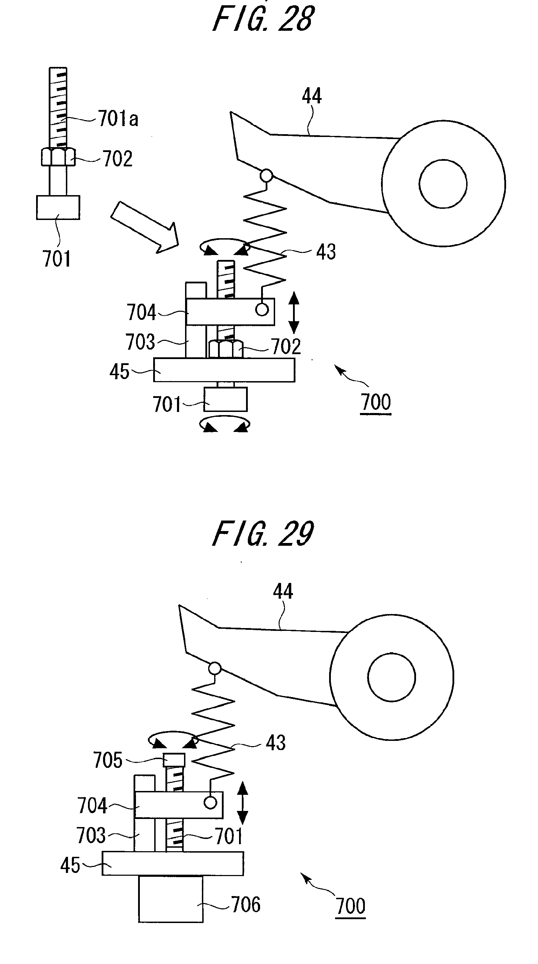

First, description is made of the adjustment of a predetermined speed with reference to FIGS. 28 and 29. The predetermined speed in the safety device 1 described above is determined by the spring 43 or the rotary damper 42. In this context, the following methods may be adopted for the adjustment of a predetermined speed:
(1) exchange the spring 43 for a spring having a different spring constant;
(2) adjust a viscous modulus of the rotary damper 42, or exchange the rotary damper 42 for one having a different viscous modulus; or
(3) change the attachment position of the spring 43 with respect to the frame 45 for the purpose of changing the length of the spring 43 at the time of attachment.

In this context, description is made of the item (3) in the following. FIG. 28 illustrates a slider device 700 for changing the attachment position of the spring 43. In the slider device 700, a bolt 701 is made to pass through the frame 45 and a nut 702 is attached thereto so that the bolt 701 does not fall. Then, a slider 704 is screwed together with a screw portion 701a of the bolt 701, and a guide rail 703 is installed lateral to the bolt 701 so that the slider 704 is allowed to slide in the extending direction of the screw portion 701a. In the slider device 700 having such a configuration, the slider 704 is allowed to slide along the guide rail 703 in accordance with the rotation of the bolt 701. Further, the one end of the spring 43 is connected to the slider 704 and the another end thereof is connected to the stopper 44, and thus an elastic force acting from the spring 43 to the stopper 44 can be adjusted due to rotation of the bolt 701. This substantially corresponds to the adjustment of the referential predetermined speed for stopping of rotation of the rotary shaft 22.

Note that, as illustrated in FIG. 29, a motor 706 may be attached to the frame 45 so that the bolt 701 is rotated by the motor 706. Further, at a distal end part of the bolt 701, there is installed a fastener (double nut and the like) 705 for prevention of falling-out of the slider 704. With this configuration, the elastic force exerted by the spring 43 is adjusted through intermediation of the slider 704 within a limited range. As a result, safety of manipulation of the safety device 1 is secured.

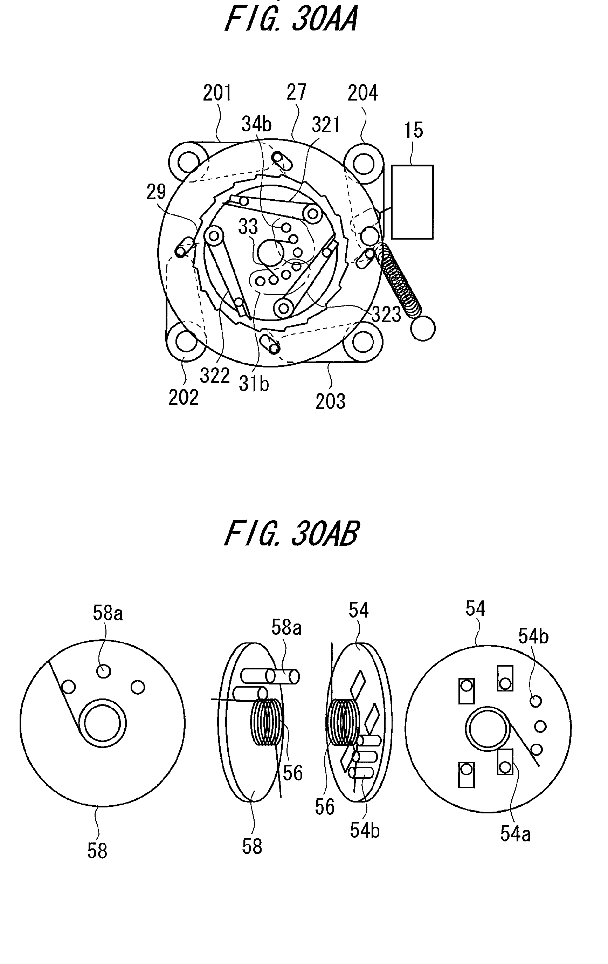

<Setting of predetermined acceleration> Next, description is made of the adjustment of predetermined acceleration with reference to FIGS. 30AA, 30AB, 30BA, 30BB, 31A, 31B, 31C, 31D, 32, 33, 34A, 34B, 35A, 35B, 36A, 36B and 37. The predetermined acceleration in the safety device 1 described above is determined by the spring 33, the torsion coil spring 56, and the like, or by inertial moments of the ratchet wheel 34 and the ratchet wheel 54. In this context, the following methods may be adopted for the adjustment of predetermined acceleration:
(1) exchange the spring 33 and the like for the purpose of adjusting magnitude of elastic torque made to act thereby;
(2) change attachment positions of the spring 33 and the like for the purpose of changing the lengths of the spring 33 and the like at the time of attachment; or
(3) change inertial moments of the ratchet wheel 34 and the like.

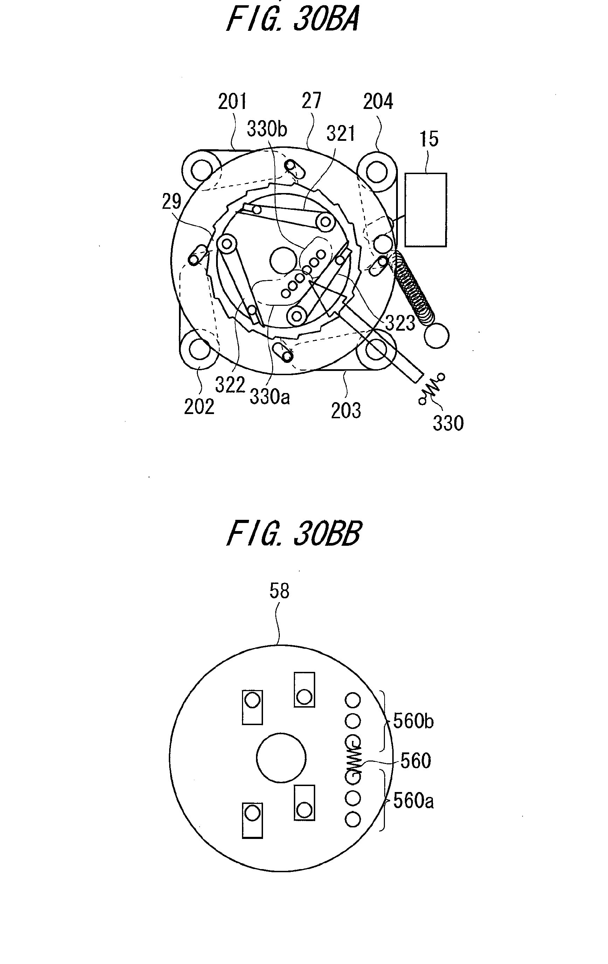

Regarding the item (2), description is made with reference to FIGS. 30AA, 30AB, 30BA and 30BB of an embodiment in which a plurality of positions for attachment are set for the purpose of changing the attachment positions of the spring 33 and the like. FIG. 30AA illustrates an example in which a plurality of pins are provided for fixation of the spring 33 in the safety device 1 according to the above-mentioned first embodiment with use of the ratchet wheel 24. As just described above, the plate 31 is provided with a plurality of pins 31b for attachment of the spring 33, and the ratchet wheel 34 is provided with a plurality of pins 34b for attachment of the spring 33. By appropriate selection of the pins to be used at the time of attachment of the spring 33, the elastic torque made to act by the spring 33 is adjusted. Further, FIG. 30AB illustrates an example in which a plurality of pins are provided for fixation of the spring 56 in the safety device 1 according to the above-mentioned second embodiment with use of the arm 51. As just described above, the stay 58 is provided with a plurality of pins 58a for attachment of the spring 56, and the ratchet wheel 54 is provided with a plurality of pins 54b for attachment of the spring 56. By appropriate selection of the pins to be used at the time of attachment of the spring 56, the elastic torque made to act by the spring 56 is adjusted. Thisadjustment of the elastic torque substantially corresponds to the adjustment of the referential predetermined acceleration for stopping of rotation of the rotary shaft 22.

Further, instead of the provision of the plurality of pins for attachment of the spring 33 and the like as illustrated in FIGS. 30AA and 30AB, it is possible to set the number of the pins to two corresponding to end portions of the spring 33 and the like, and to provide a plurality of pin holes for attachment of each of the pins. That is, in the case of adjusting the elastic torque exerted by the spring 33 and the like, the pin holes into which the pin 31b and the like are fitted are appropriately selected, the spring 33 and the like being attached to the pin 31b and the like.

Further, as illustrated in FIGS. 30BA and 30BB, also when the linear springs 330 and 560 described above are used, elastic torque exerted by the linear springs is adjusted by adjustment of positions of pins to which end portions of those springs are connected. For example, FIG. 30BA illustrates the safety device 1 in which the linear spring330 illustrated in FIG. 26 is used. This safety device 1 is provided with a plurality of pins 330a for connecting one end of the linear spring 330 onto a plate 31 side, and a plurality of pins 330b for connecting another end thereof onto a ratchet wheel 34 side. Further, FIG. 30BB illustrates the safety device 1 in which the linear spring 560 illustrated in FIG. 27 is used. This safety device 1 is provided with a plurality of pins 560a for connecting one end of the linear spring 560 onto a stay 58 side, and a plurality of pins 560b for connecting another end thereof onto a ratchet wheel 54 side. Also in those cases, the configuration including a single pin and a plurality of pin holes may be adopted similarly to the case described above.

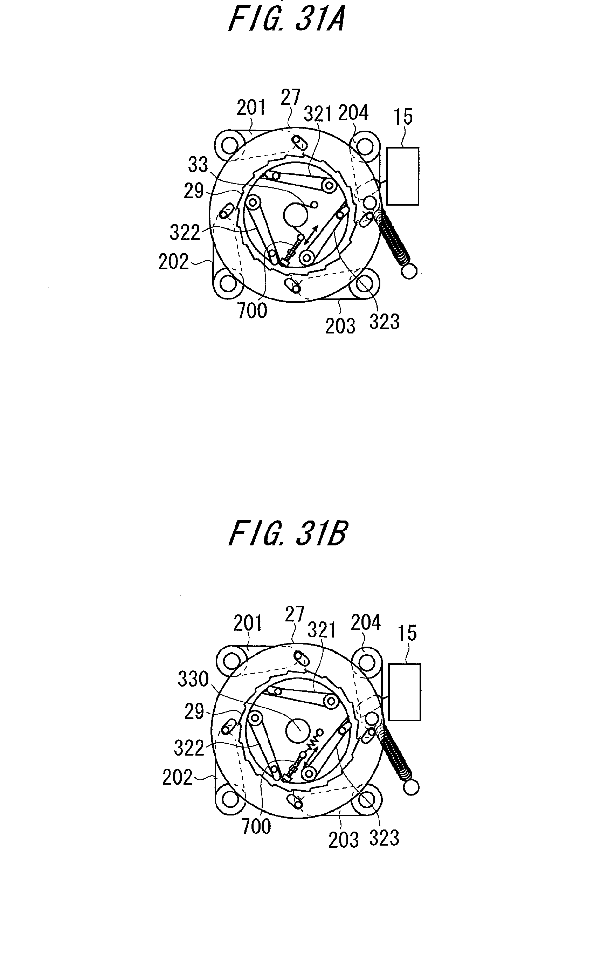

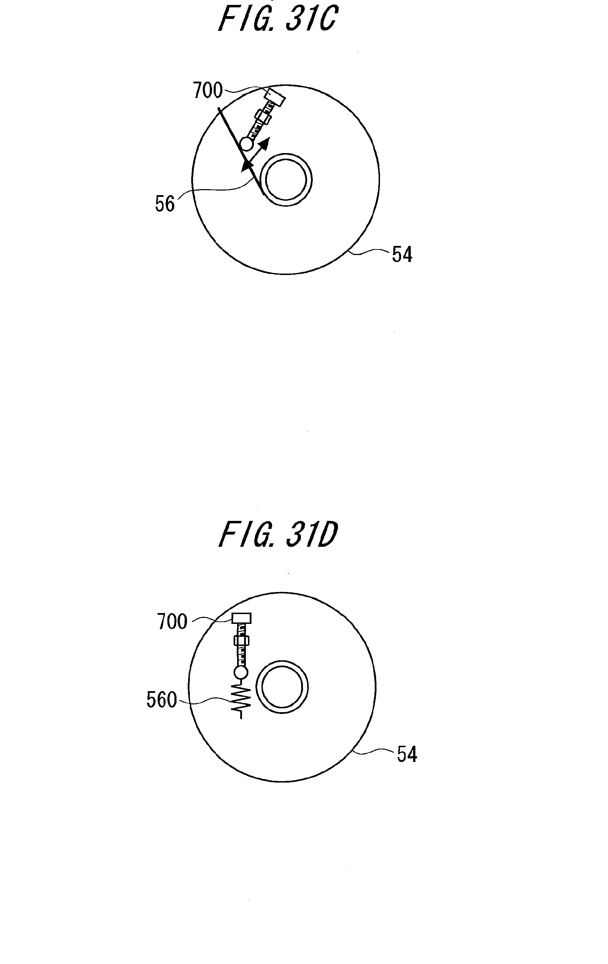

Next, FIGS. 31A, 31B, 31C and 31D illustrate an embodiment in which the slider device 700 described above is applied for the purpose of moving the attachment positions of the spring 33 and the like. FIG. 31A illustrates a state in which the slider device 700 is applied to the safety device 1 in which the ratchet wheel 24 is used and the spring 33 is incorporated therein. Under this state, the one end of the spring 33 is moved by the slider device 700, with the result that the magnitude of the elastic torque exerted by the spring 33 is adjusted. Further, FIG. 31B illustrates a state in which the slider device 700 is similarly applied to the safety device 1 in which the ratchet wheel 24 is used and the linear spring 330 is incorporated therein. Also under this state, one end of the linear spring 330 is moved by the slider device 700, with the result that the magnitude of the elastic torque exerted by the linear spring 330 is adjusted. The slider device 700 is provided on the plate 31 or ratchet wheel 34 to which the one end moved thereby is attached.

Next, FIG. 31C illustrates a state in which the slider device 700 is applied to the safety device 1 in which the arm 51 is used and the spring 56 is incorporated therein. Under this state, one end of the spring 56 is moved by the slider device 700, with the result that the magnitude of the elastic torque exerted by the spring 56 is adjusted. Further, FIG. 31D illustrates a state in which the slider device 700 is similarly applied to the safety device 1 in which the arm 51 is used and the linear spring 560 is in corporated. Also under this state, one end of the linear spring 560 is moved by the slider device 700, with the result that the magnitude of the elastic torque exerted by the linear spring 560 is adjusted. The slider device 700 is provided on the stay 58 or ratchet wheel 54 to which the one end moved thereby is attached.

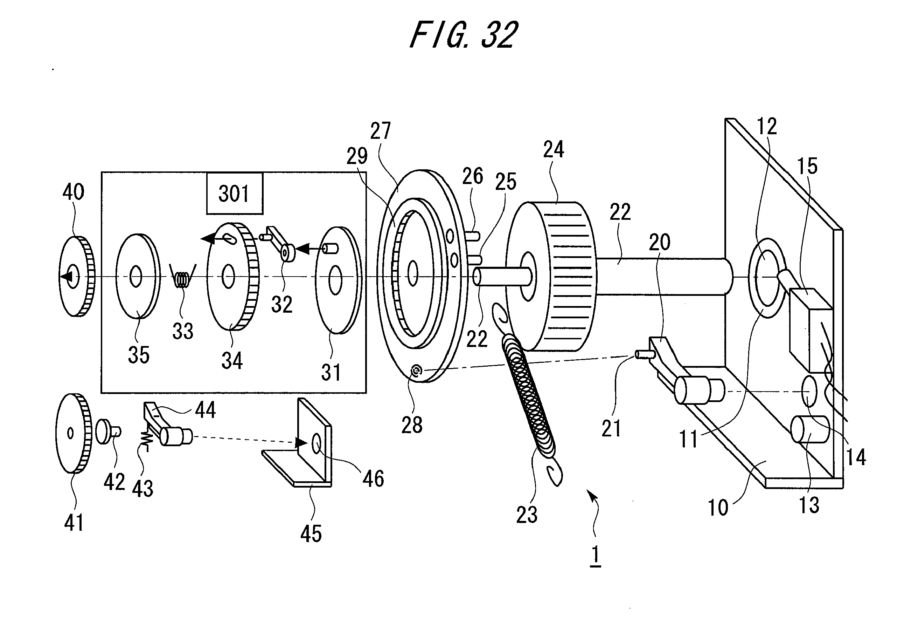

Further, in the safety device 1 illustrated in FIG. 30A or 30B, when a space for attachment of the slider device 700 cannot be secured in the acceleration detecting portion 30 and the like, the attachment space for the slider device 700 may be secured by adoption of the acceleration detecting portion 301 having the configuration illustrated in FIG. 32. In the acceleration detecting portion 301, a stay 35 to be fixed to the rotary shaft 22 is newly provided on the gear 40 side subjected to fixation with respect to the rotary shaft 22. Further, the spring 33 is arranged between the stay 35 and the ratchet wheel 34. With this configuration, in the acceleration detecting portion 30', the slider device 700 can be provided on the stay 35, and hence the slider device 700 can be installed relatively freely from limitation on the space.

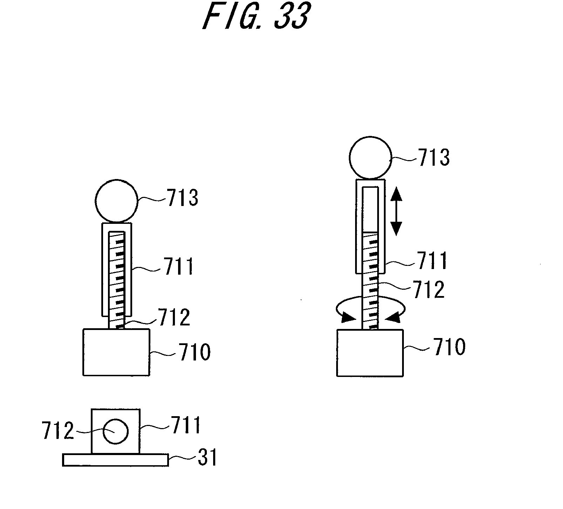

Further, as another embodiment of the slider device 700, the following configuration may be adopted as illustrated in FIG. 33: a screw shaft 712 is attached to a rotary shaft of a motor 710; a nut portion 711 having a rectangular-parallelepiped outer shell is attached in a manner of covering the screw shaft 712; and a pin 713 for attachment of a spring is provided at a distal end part of the nut portion 711. Because the nut portion 711 has a rectangular-parallelepiped outer shell, an attachment surface of the slider device 700 serves as a guide rail, with the result that the nut portion 711 slide-moves along the attachment surface in accordance with rotation of the screw shaft 712. Heretofore, although use of the slider device 700 and the modifications thereof is described, alternatively, it is possible to use a device being constituted by a bolt and a nut and having a mechanism which allows the bolt to advance and retract, with the nut being fixed. In this case, it is only necessary to attach a spring to a pin attached to a distal end of the bolt so that rotation of the bolt is not transmitted.

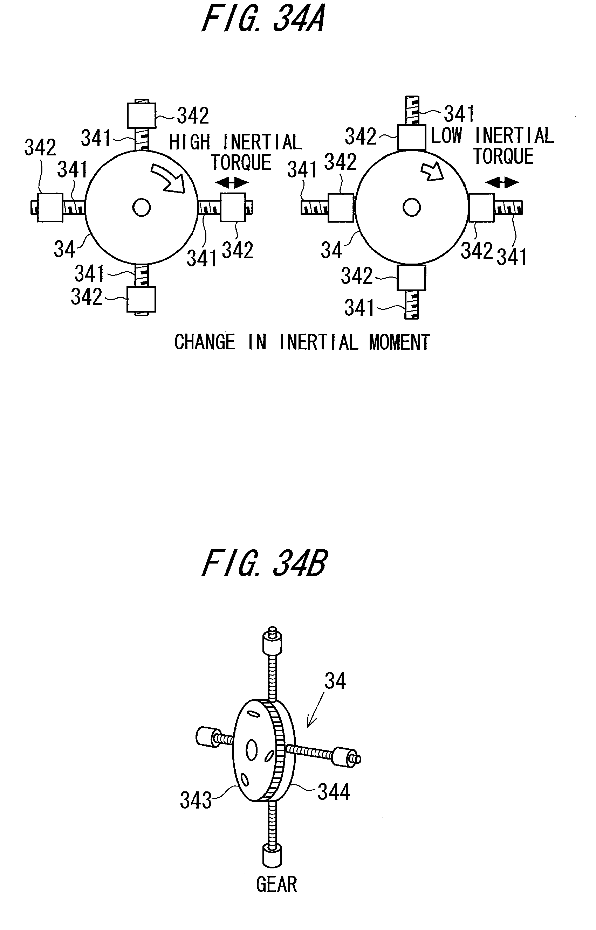

Next, regarding the item (3), description is made with reference to FIGS. 34A and 34B of an embodiment for changing the inertial moments of the ratchet wheel 34 and the like. FIG. 34A illustrates an example of the ratchet wheel 34 capable of changing an inertial moment. The ratchet wheel 34 includes apair of a screw portion 341 and an adjustment weight 342 provided at each of the positions determined by quadrisection of an outer periphery thereof. Each of the adjustment weights 342 is screwed together with the screw portion 341, and thus relative positions with respect to the screw portions 341 can be arbitrarily adjusted. Accordingly, each of the adjustment weights 342 moves on the screw portion 341 so as to be gradually positioned on the outer peripheral side, to thereby be capable of increasing the inertial moment of the ratchet wheel 34. Note that, in consideration of rotational balance of the rotary shaft 22, it is desired that all the relative positions of the weight portions 342 on the four screw portions 341 be identical to each other.

Note that, in consideration of engagement of the stopper 44 of the speed detecting portion with the ratchet wheel 34, it is desired that the ratchet wheel 34 be constituted, as illustrated in FIG. 34B, by a combination of a ratchet wheel portion 343 meshing with a stopper and an inertial-moment changing portion 344 provided with the screw portions 341. Note that, the adjustment weight portions 341 may be manually moved, or moved by an actuator such as a motor.

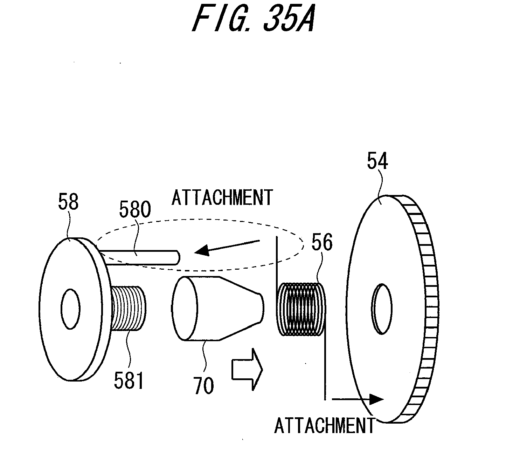

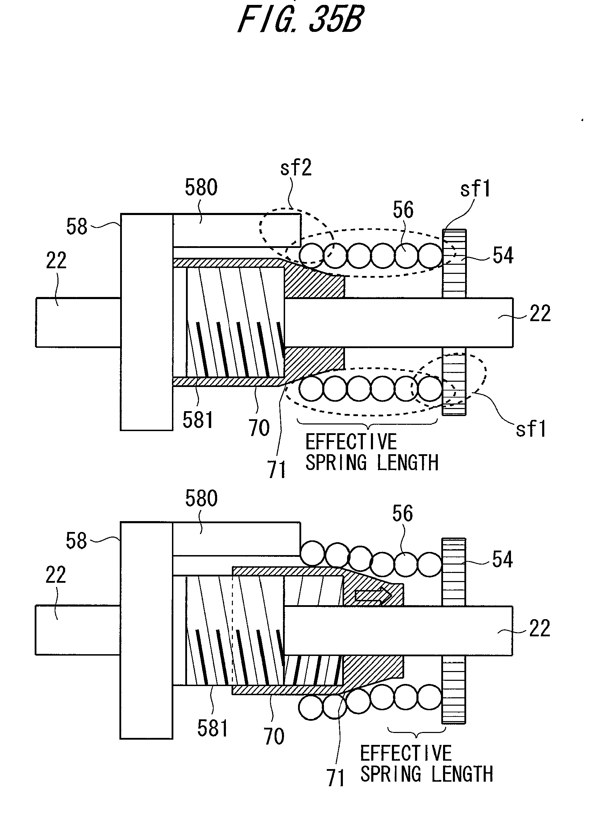

Further, by the methods other than those according to the items (1) to (3), predetermined acceleration can be substantially adjusted. As an example thereof, rigidity of the torsion coil spring 56 and the like may be changed. In this context, description is made in the following of a mechanism for making the rigidity of the torsion coil spring 56 and the like variable with reference to FIGS. 35A, 35B, 36A, 36B and 37. Note that, although relating to the torsion coil spring 56, a rigidity changing mechanism illustrated in those figures may be similarly adopted to other springs, for example, the spring 33 by appropriate modifications made thereto. As illustrated in FIG. 35B, the one end of the torsion coil spring 56 is fixed to the ratchet wheel 54 through intermediation of a fixing portions f1, and another end thereof is fixed onto the stay 58 side through intermediation of a fixing portion sf2. In this case, the fixing portion sf2 is provided on a protruding portion 580 extending along the rotary shaft 22 from the stay 58.

Further, the stay 58 is provided with a screw portion 581, and a guide rod 70 is provided in a manner of being screwed together with and covering the screw portion 581. Further, as illustrated in the figure, the guide rod 70 is provided with a tapered portion 71, the tapered portion 71 being arranged so as to be capable of getting inside the torsion coil spring 56 and coming into contact with the spring. In this case, when the guide rod 70 is rotated so as to advance in a direction of the ratchet wheel 54, the tapered portion 71 of the guide rod 70 expands the torsion coil spring 56 and advances thereinside. A state illustrated in the upper portion of FIG. 35B is the state in which the guide rod 70 has not yet got inside the torsion coil spring 56. Thus, an effective spring length of the torsion coil spring 56 is equal to the entire length thereof. Meanwhile, a state illustrated in the lower portion of FIG. 35B is the state in which the guide rod 70 has got inside the torsion coil spring to some extent. Thus, a part of the torsion coil spring 56 is held in contact with the guide rod 70 or the tapered portion 61 thereof, and hence the function thereof as an elastic body is not exerted. Accordingly, in this state, as illustrated in the lower portion of FIG. 35B, the effective spring length of the torsion coil spring 56 is equal to a part of the entire length thereof. As described above, by moving the guide rod 70 for the purpose of adjusting the effective length of the torsion coil spring 56, the spring constant thereof is increased and reduced so that the rigidity thereof can be made variable. This adjustment substantially corresponds to the adjustment of the referential predetermined acceleration for stopping of rotation of the rotary shaft 22.

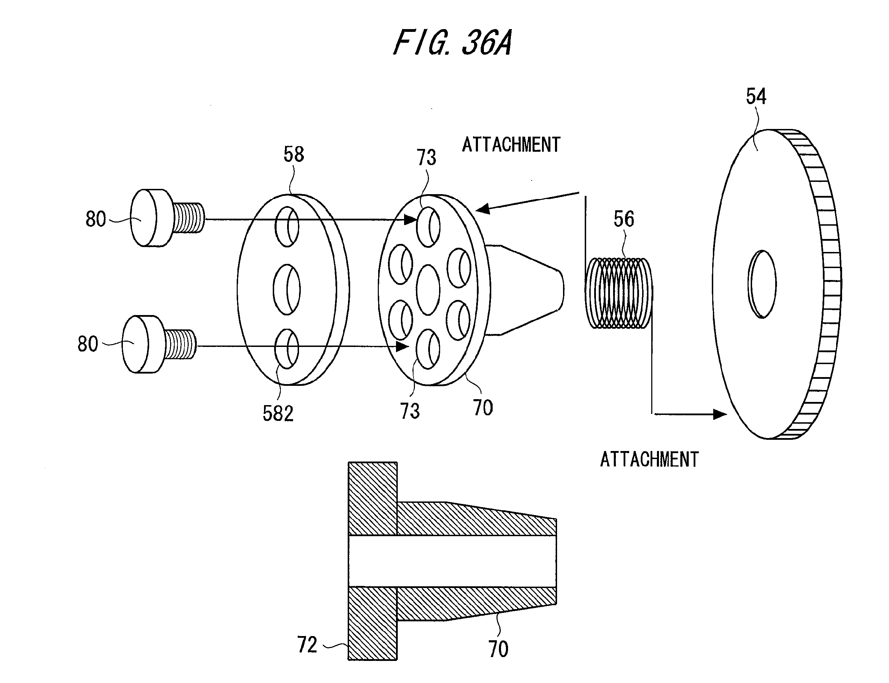

Further, on the basis of the technical idea similar tothatdescribedabove,asdescribedbelow,itisalsopossible to adjust predetermined acceleration by changing of the rigidity of the torsion coil spring 56. As illustrated in FIG. 36A, a flange portion 72 is provided on the stay 58 side of the guide rod 70, and further, the flange portion 72 is provided with a plurality of screw holes 73 which can be screwed together with bolts 80. In addition, the stay 58 fixed to the rotary shaft 22 has through-holes 58 which are formed at two points and allow the bolts 80 to pass therethrough. In this case, the one end of the torsion coil spring 56 is fixed to the flange portion 72 of the guide rod 70, and the another end thereof is fixed to the ratchet wheel 54. At the center portion of the guide rod 70, a through-hole is formed so that the rotary shaft 22 can be inserted thereinto.

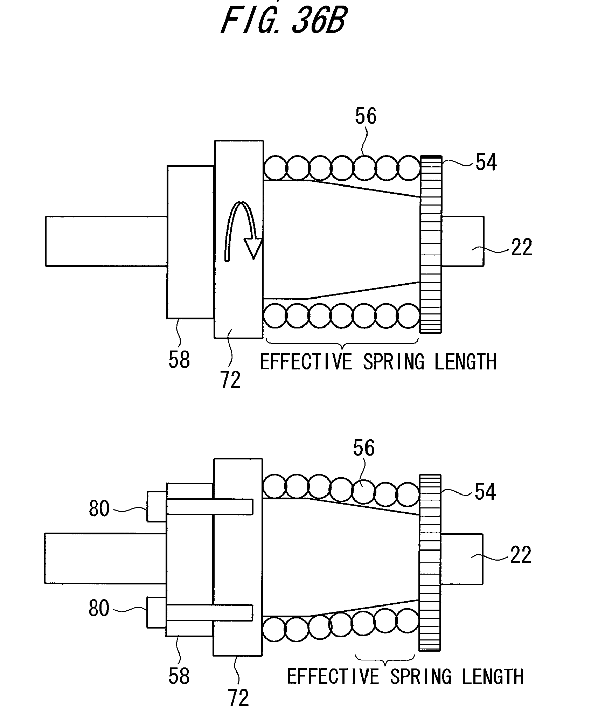

In the rigidity changing mechanism of the spring 56 configured as described above, as illustrated in FIG. 36B, when the guide rod 70 is rotated with respect to the screw portion 581 provided to the stay 58, the torsion coil spring 56 is gradually twisted, and a contact amount between the torsion coil spring 56 and the tapered portion 71 is increased in accordance therewith. As a result, as described above, the effective length of the torsion coil spring 56 is changed. After the torsion coil spring 56 is twisted until the torsion coil spring 56 has an effective length corresponding to aimed predetermined acceleration, the guide rod 70 is fixed to the stay 58 with the bolts 80 illustrated in FIG. 36A. When the screw holes 73 are provided in advance at positions corresponding to desired predetermined acceleration, predetermined acceleration in the safety device 1 can be easily adjusted. Note that, as an example, although bolts and the like are used as means for fixing the guide rod 70 in this case, another means may be adopted as long as the guide rod 70 can be fixed after the coil spring 56 is twisted.

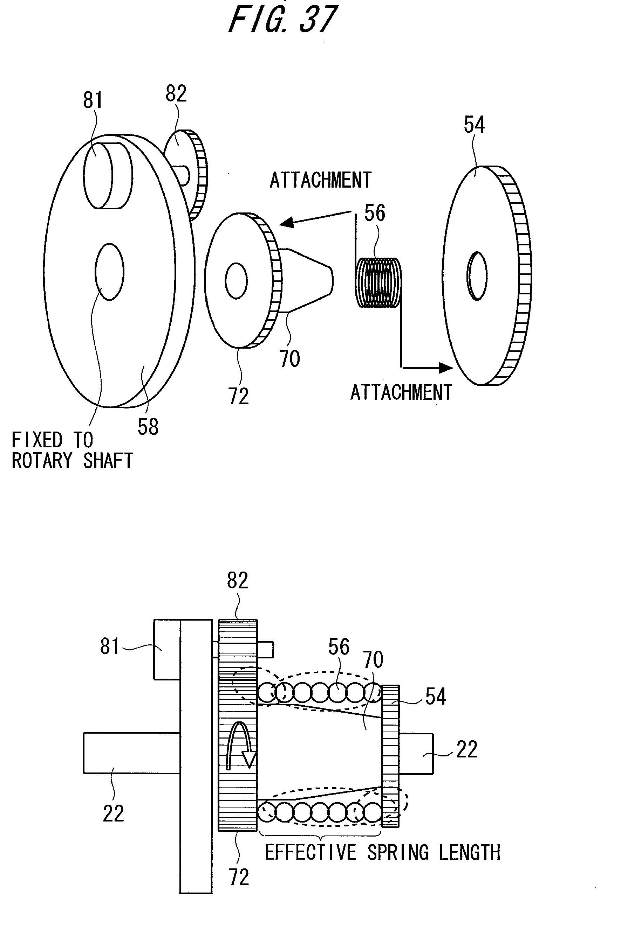

Further, the guide rod 70 is manually rotated in the rigidity changing mechanism illustrated in FIGS. 36A and 36B. Alternatively, for example, as illustrated in FIG. 37, the guide rod 70 may be rotated by rotation of a motor 81 attached to the stay 58, the rotation of the motor 81 being transmitted to the guide rod 70 attached with a gear 72 through intermediation of a gear 82. In this manner, the effective length of the torsion coil spring 56 can be made to be variable.

### <Modification>

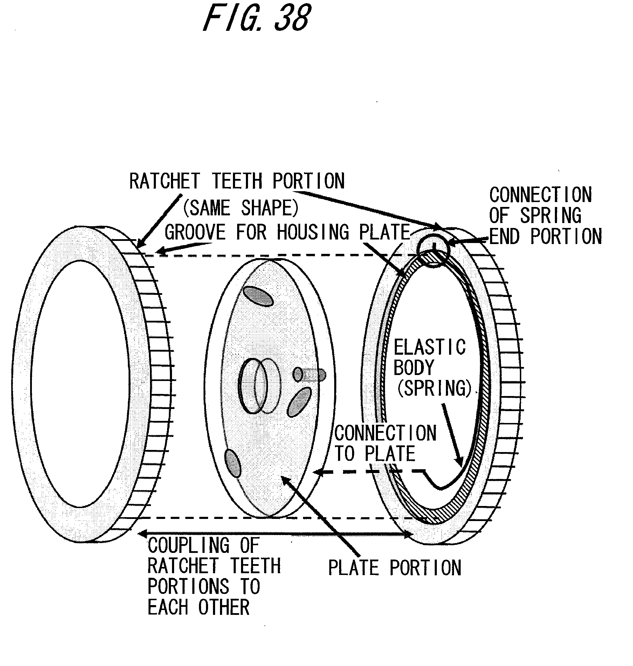

In each of the first to third embodiments described above, as illustrated in FIG. 38, the ratchet wheel 34, 54, 340, or the like meshing with the stopper 44 may be constituted by a ratchet teeth portion and a plate portion which are separated from each other and coupled to each other by an elasticbodysuchasaspring, theplateportionbeingprovided with guide holes. (Note that, FIG. 38 is a view of the ratchet wheel 340.) With this configuration, the plate portion is coupled and fixed inside the ratchet teeth portion through intermediation of an elastic body. As a result, an impact force and the like generated upon meshing with the stopper 44 are mitigated, and load on the stopper 44 and the teeth of the ratchet are reduced. In addition, "displacement" between the rotary shaft 22 and the ratchet wheel can be caused more smoothly by meshing with the stopper 44. Further, other structures may be adopted as long as being capable of smoothly causing the "displacement" between the rotary shaft 22 and the ratchet wheel by meshing with the stopper 44. For example, without use of the elastic body of FIG. 38, the structure may be adopted in which a frictional force is generated in grooves on the ratchet teeth side and in the plate portion to the extent that the "displacement" between a rotary shaft and a ratchet wheel can be smoothly caused.

### Fourth embodiment

### <Configuration of turning off the electric source of the actuator on the basis of detected speed>

This embodiment discloses, regarding a switch which turns on and off electric power supply to an actuator for driving arobot,aconfigurationofmechanicallyeffectingtheturning off on the basis of a speed of a rotary shaft drivingly rotated by the actuator. Specifically, for simplification of description, this embodiment mainly discloses a configuration in which the switch to be focused on turns off electric source. Meanwhile, disclosure of the configurations of locking the rotary shaft described in the above-mentioned first to third embodiments is omitted, which does not hinder adoption of the configuration of locking the rotary shaft. In accordance with design ability of those skilled in the art, the configuration disclosed in this embodiment may be appropriately combined with the configuration described in the preceding embodiments. Note that, components essentially the same as those in the configuration described in the preceding embodiments are denoted by the same reference symbols, and detailed description thereof is omitted.

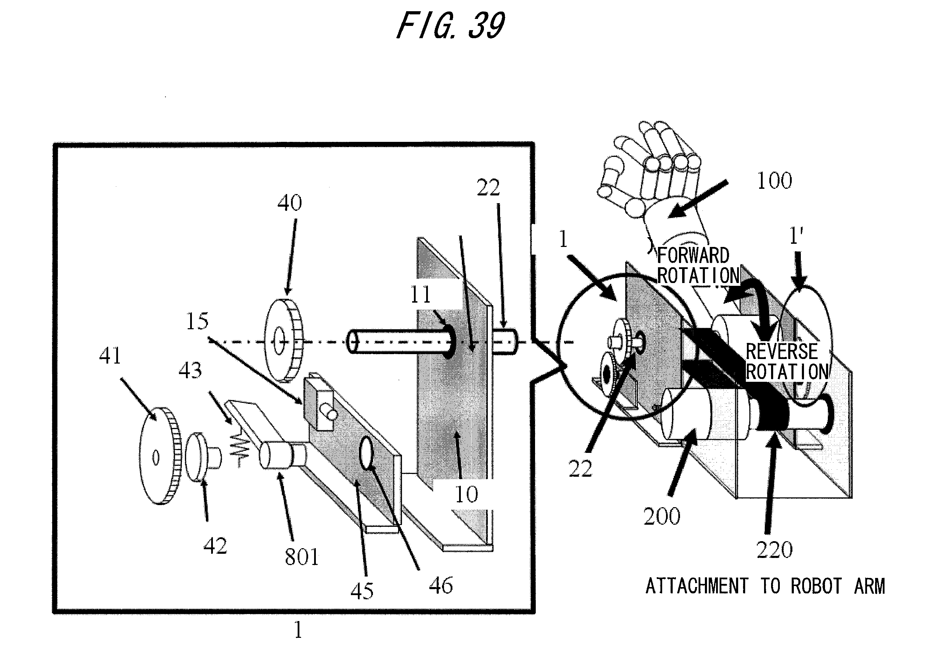

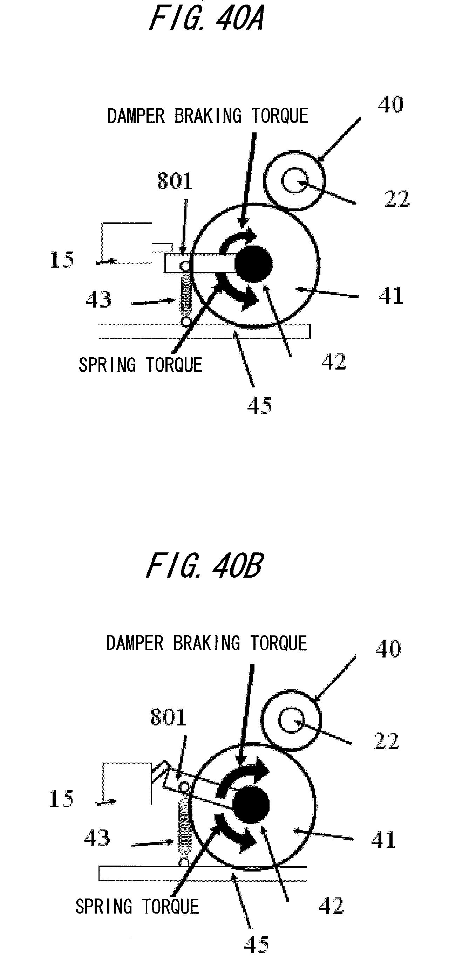

FIGS. 39, 40A and 40B illustrate a configuration of the safety device 1 according to this embodiment. FIG. 39 illustrates a schematic configuration of the safety device 1, and FIGS. 40A and 40B illustrate a state of the safety device 1 at the time of rotary shaft low speed rotation when a rotary shaft is normally driven (FIG. 40A), and another state of the safety device 1 when a rotational speed of a rotary shaft exceeds a predetermined speed and a robot gets out of control (FIG. 40B). In the safety device 1 illustrated in those figures, as just described above, the mechanisms illustrated the first to third embodiments for locking the rotary shaft 22 is omitted, and turning off (electric power supply interruption) on the basis of the rotational speed of the rotary shaft is mechanically effected with respect to the switch 15 for controlling electric power supplied to the actuator 200 which effects driving of the rotary shaft 22. In the following, detailed description thereof is made.

In the safety device 1 according to this embodiment, the configuration of locking the rotary shaft 22 is omitted, and the gear 40 is connected at an end portion of the rotary shaft 22 to which the arm 100 of the robot is connected. Then, rotation of the rotary shaft 22 is transmitted to the gear 41 through intermediation of the gear 40. In addition, although being same as those in the embodiments described above in that the rotary damper 42 is connected to the gear 41, the configuration is different therefrom in that a plate 801 instead of the above-mentioned stopper 44 is rotatably arranged coaxially with the gear 41 and the rotary shaft of the rotary damper 42 so that braking torque of the rotary damper 42 is transmitted. In addition, a rotary shaft part of the plate 801 is fitted to the bearing 46 installed on the frame 45, and a plate-shaped part of the plate 801 has aback surface to which the one end of the spring 43 is connected. Meanwhile, on a front surface side of the plate 801, the switch 15 for the actuator 200 is arranged in a manner of being opposed to theplate-shapedpart . Note that, the switch 15 is installed on the frame 45, and the frame 45 itself is fixed onto the frame 10. In addition, the another end of the spring 43 is connected to the frame 45.

In the safety device 1 configured as described above, when the rotary shaft 22 is rotated, the braking torque exerted by the rotary damper 42 acts on the plate 801 through intermediation of the gears 40 and 41. When the rotational speed of the rotary shaft 22 is relatively low (refer to FIG. 40A), the spring torque exerted by the spring 43 is higher than the braking torque exerted by the rotary damper 42. Thus, the plate 801 does not enter the state of imparting a pressing force to the switch 15, and the switch 15 is in a state of being turned on (energized). Then, when the rotary shaft 22 reaches a predetermined rotational speed (refer to FIG. 40B), the braking torque exerted by the rotary damper 42 overcomes the spring torque exerted by the spring 43, and hence the plate 801 pushes up a lever of the switch 15. In this manner, electric source of the actuator 200 is turned off, and thus the actuator 200 can be stopped.

As just described above, the actuator can be mechanically stopped on the basis of the rotational speed of the rotary shaft 22, and thus a human working around the robot can be effectively protected. Further, in the above-mentioned embodiments, although description is made only of the safety device 1 on one side of the arm portion 100 of the robot, by adoption of a similar configuration to the safety device 1' on the opposite side thereof, safety can be sufficiently secured with respect to behavior at the time of out-of-control in a reverse rotation direction of the arm portion.

### <First modification>

In the following, description is made of a first modification of the configuration described above of turning off the electric source of the actuator on the basis of the detected speed. In the above-mentioned example, the safety devices 1 and 1' respectively corresponding to different rotational directions are provided on both sides of the arm portion 100 of the robot. Meanwhile, in this modification, the safety device 1 corresponding to two different rotational directions of the arm portion is provided only on one side of the arm portion 100. This is significant difference therebetween. With this configuration, the safety device 1 is downsized, and space saving and cost reduction are promoted.

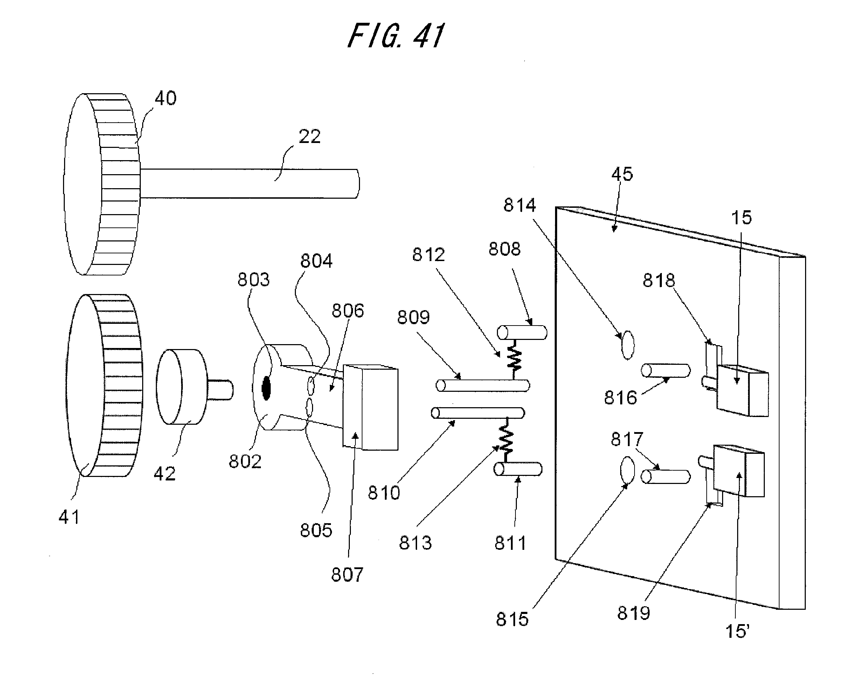

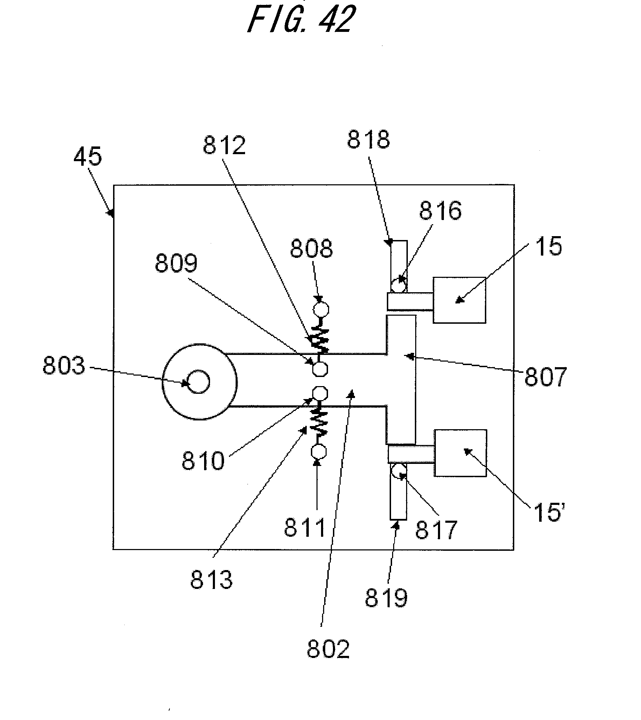

FIG. 41 and FIGS. 42 to 46 illustrate the configuration of the safety device 1 according to this modification. FIG. 41 illustrates a schematic configuration of the safety device 1, and FIGS. 42 to 46 illustrate how the safety device 1 works (switch turning-off operation is performed by the safety device 1). Note that, FIG. 41 illustrates, for ease of understanding of this modification, an exploded state of the safety device 1, and an assembled state thereof can be easily understood with reference to FIGS. 42 to 46.

In this case, the rotary shaft 22 is connected to the arm portion 100 of the robot, and the rotational speed of the rotary shaft 22 is transmitted from the gear 40 fixed to the rotary shaft 22 to the rotary damper 42 through inter mediation of the gear 41. The rotary damper 42 is attached with a plate 802 through a hole 803, and hence the braking torque from the rotary damper 42 acts on the plate 802. In this case, the plate 802 includes a main-body portion 806 rectangularly extending from a proximal end portion provided with the hole 803, and a distal end portion 807 provided at a distal end part of the main-body portion 806 to extend in a direction orthogonal to an extending direction of the main-body portion 806. Accordingly, the plate 802 has a T-shape formed of the main-body portion 806 and the distal end portion 807. In addition, a hole 804 and a hole 805 are provided in a width direction of the main-body portion 806 (direction perpendicular to the extending direction of the main-body portion 806 and same as an extending direction of the distal end portion 807).

Meanwhile, on the frame 45, two switches 15 and 15' for interrupting electric power supplied to the actuator 200 for driving the arm portion 100 of the robot are aligned inaverticaldirection. Inthiscase, the switch 15 installed on the upper side is capable of interrupting electric power supplied to the actuator 200 when the lever thereof is pushed down to the upper side. Meanwhile, in contrast, the switch 15' installed on the lower side is capable of interrupting electric power supplied to the actuator 200 when the lever thereof is pushed down to the lower side. In directions in which those switches are pushed down, there are provided two slide grooves extending in the frame 45, one of which corresponding to the switch 15 is defined as a slide groove 818, and another of which corresponding to the switch 15' is defined as a slide groove 819. Further, in the frame 45, a hole 814 and a hole 815 are vertically arranged so as to be aligned with the slide grooves 818 and 819 aligned vertically with each other.

In this case, a pin 808 is inserted and fixed in the hole 814, a pin 809 in the hole 804, a pin 810 in the hole 805, and a pin 811 in the hole 815. Further, one end of a tension spring 812 is fixed to the pin 808, and another end thereof is fixed to the pin 809. Similarly, a tension spring 813 is fixed between the pin 810 and the pin 811. With this configuration, the plate 802 enters a state of being coupled to the frame 45 through intermediation of the two tension springs 812 and 813, and then, those pins and tension springs cause a force generated by the springs to act on the plate 802. Further, the force of the springs acting on the plate 802 can be changed by changing the rigidity of the springs. Still further, a pin 816 is inserted into the slide groove 818, and a pin 817 is inserted into the slide groove 819. Those pins 816 and 817 are slidable in their respective slide grooves, and are in a state of being held in contact with levers of the switches corresponding thereto.

In the safety device 1 according to this modification configured as described above, as illustrated in FIG. 42, under a state in which the distal end portion 807 of the plate 802 is interposed between the switches 15 and 15' aligned in the vertical direction on the frame 45, the plate 802 receives the braking torque from the rotary damper 42. As a result, the lever of each of the switches corresponding to the rotational directions of the rotary shaft 22 can be pushed down, and electric power supply to the actuator 200 can be interrupted. In the following, detailed description is made of the process of interrupting electric power supply.

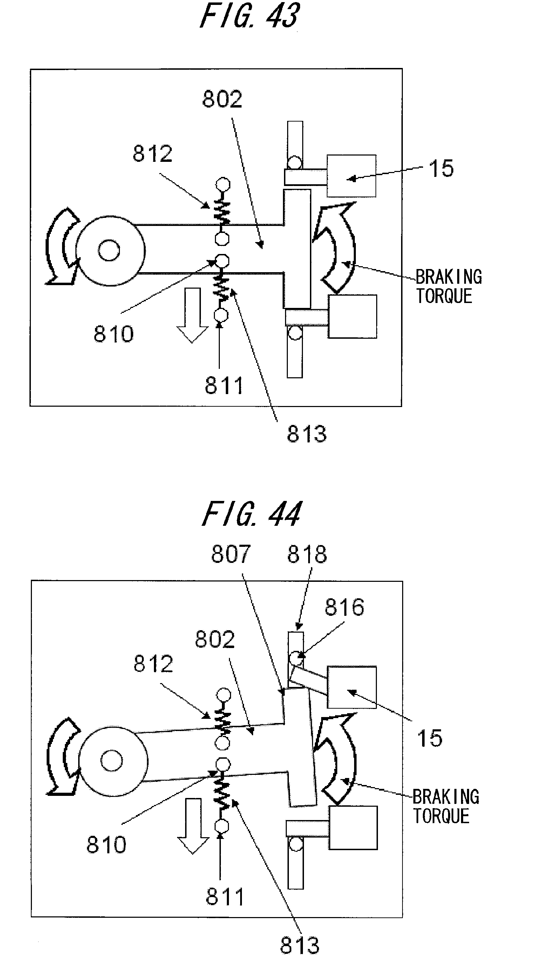

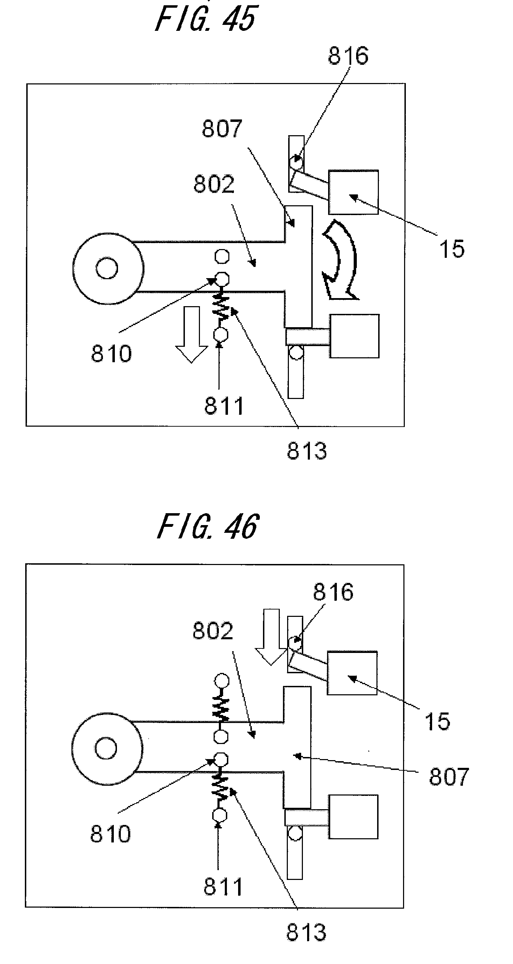

First, description is made on the assumption that the rotary shaft 22 is in a state of being rotated counterclockwise. The rotational speed of the rotary shaft 22 is transmitted from the gear 40 to the rotary damper 42 through intermediation of the gear 41. Then, the braking torque exerted by the rotary damper 42 in proportion to the speed acts on the plate 802 (refer to FIG. 43). In this case, spring torque exerted by the tension spring 813 acts on the plate 802 in a direction inverse to that of the braking torque. As the rotational speed of the rotary shaft 22 is increased, the braking torque exerted by the rotary damper 42 becomes higher. When a predetermined speed is reached, the braking torque overcomes the spring torque so that the plate 802 is rotated. Then, the distal endportion 807 pushes down the lever of the switch 15, and switchover to the turn-off state is effected (refer to FIG. 44). As a result, electric power supply to the actuator 200 is interrupted. In this case, due to switchover of the switch 15, the pin 816 moves along the slide groove 818. After that, when the switch 15 is switched-over and electric power supply to the actuator 200 is interrupted, the braking torque exerted by the rotary damper 42 is eliminated. As a result, theplate 802 is rotated clockwise by the tension spring 812, and stops at the original position at which the spring torque exerted by the tension spring 813 is balanced out (refer to FIG. 45). In this case, the switch 15 remains in the turn-off state, and hence the arm portion 100 of the robot is not activated. In order that the armportion 100 is reactivated, it is only necessary that an external force be applied to the lever of the switch 15 through intermediation of the pin 816 (refer to FIG. 46) so that the switch 15 is returned to the original state (returned to the state illustrated in FIG. 42).

Further, also in the case where the rotary shaft 22 is rotated clockwise, essentially similarly to the above-mentioned case, when the rotational speed of the rotary shaft 22 exceeds a predetermined speed, the distal end portion 807 of the plate 802 pushes down the lever of the switch 15'. Accordingly, electric power supply to the actuator 200 is interrupted.

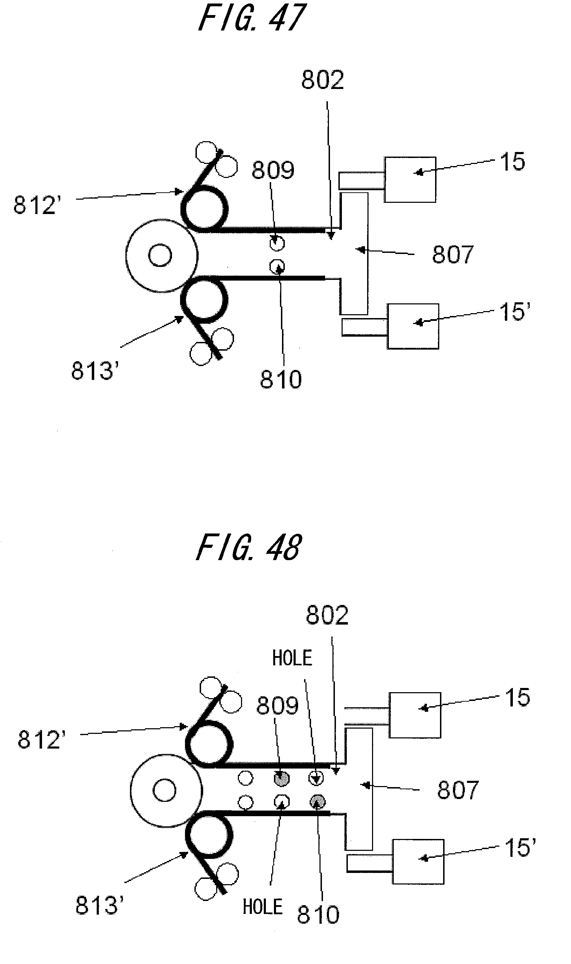

Further, FIGS. 47 to 51 illustrate additional aspects of the modification. FIG. 47 illustrates an aspect inwhichtorsion coil springs 812' and 813' are adopted instead of the above-mentioned tension springs 812 and 813. It is only necessary that one ends of those torsion coil springs be connected to the frame 45 side, and the other ends thereof be respectively connected to the pins 809 and 810 on the plate 802. FIG. 48 illustrates an aspect in which connecting positions of connection ends on the plate 802 side of the torsion coil springs 812' and 813' can be selected from a plurality of points. In the aspect illustrated in FIG. 48, three holes into which the pin 809 or 810 can be installed are prepared for each of the pins 809 and 810. By selection of any one of the three holes, spring torque imparted by the springs to the plate 802 can be changed. With this configuration, spring torque acting on the plate 802 can be finely adjusted, and hence it is possible to finely set the rotational speed (predetermined speed) of the rotary shaft 22, the rotational speed being used as a threshold at the time of interruption of electric power supplied to the actuator 200. Note that, in FIG. 48, holes in which pins are inserted are indicated by black circles, and holes in which pins are not inserted are indicated by white circles. Such indication is applied to the following figures.

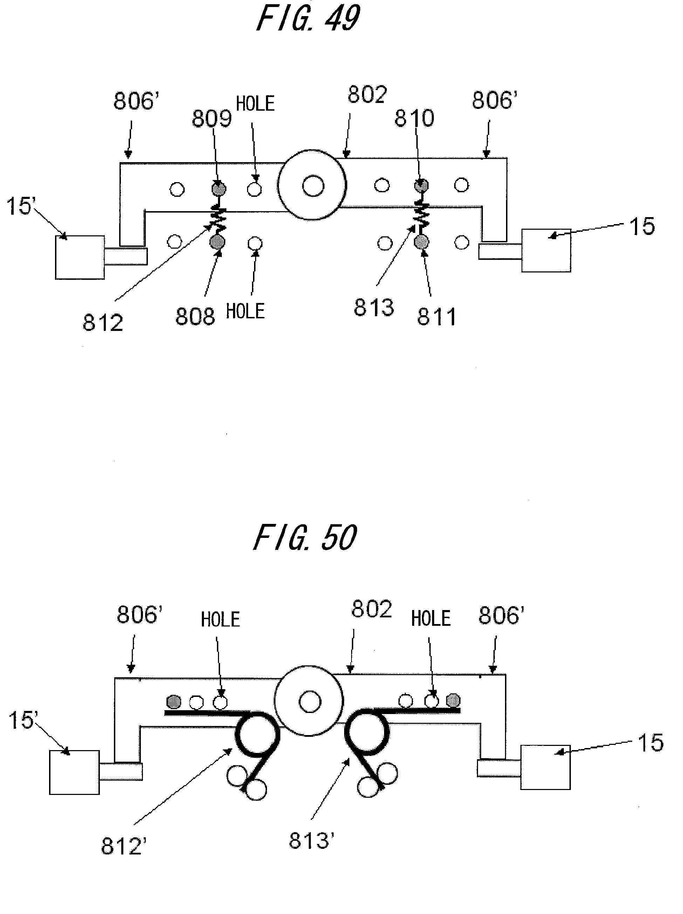

Next, FIG. 49 illustrates an aspect in which the shape of the plate 802 is changed into one in which armportions 806' extend on both sides of the proximal end port i on provided with the hole 803. Further, in this aspect, in each of the arm portions 806', three holes into which the pin 809 or 810 can be installed are prepared, and also on the frame 45 side, three holes for installation of the pin 808 or 811 are prepared so as to correspond to the holes provided to each of the arm portions 806'. With this configuration, it is possible to change the magnitude of spring torque which is derived from the forces from the tension springs 812 and 813 and which acts around the proximal end portion as a center, the forces being applied to the arm portions 806' extending right and left. Further, on the basis of the similar technical idea, when connecting positions of the coil springs and the arm portions 806' are adjusted as illustrated in FIG. 50, the magnitude of the spring torque can be changed similarly to the case illustrated in FIG. 49.

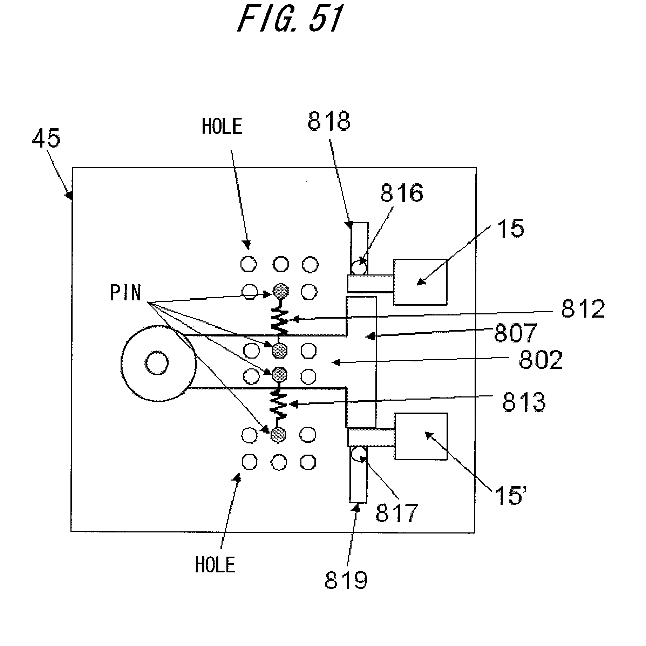

Further, in an aspect illustrated in FIG. 51, a change is made to the spring torque exerted by the tension springs 812 and 813 in the modification illustrated in FIGS. 41 and 42. Inthisaspect,whenthetension-springsconnecting positions on the frame 45 side are adjusted, the magnitude of the spring torque acting on the plate 802 is changed. Note that, regarding the spring torque imparted to the plate 802 by the two springs in the aspects described above, it is preferred that the springs exert spring torque of equal magnitude.

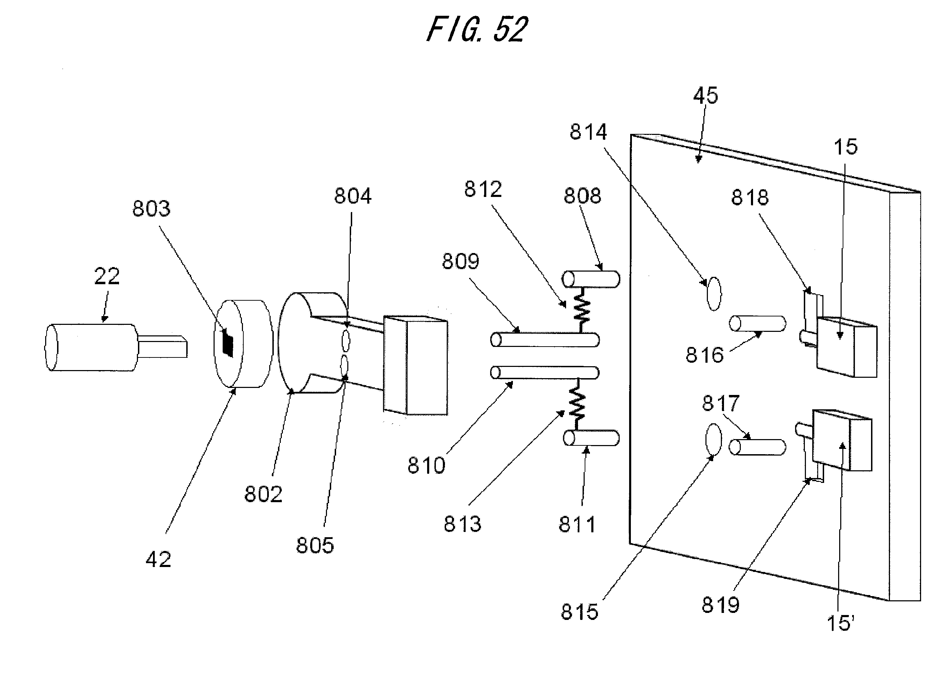

Further,althoughtherotationoftherotaryshaft 22 is input to the rotary damper 42 through intermediation of the gears 40 and 41 in the aspect illustrated in FIG. 41, a configuration may be adopted in which the rotary damper 42 is directly connected to the rotary shaft 22 as illustrated in FIG. 52.

### <Second modification>

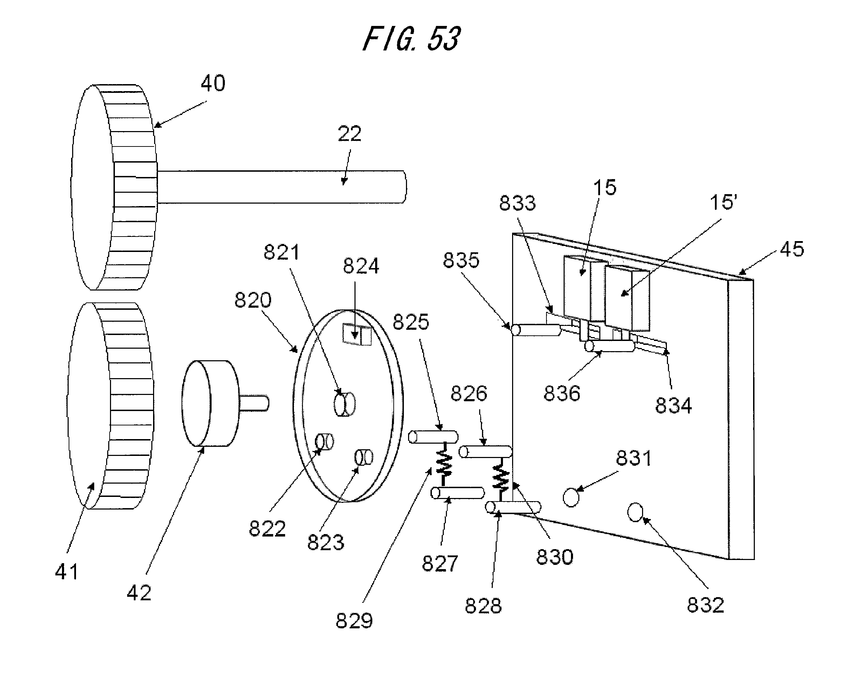

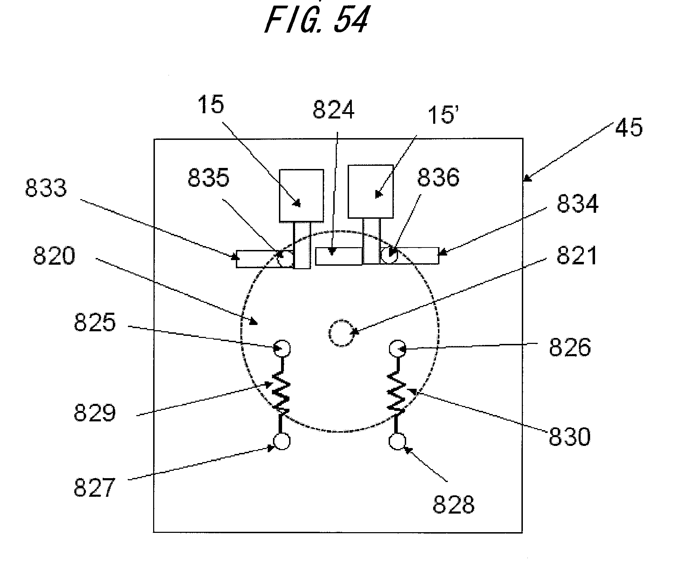

In the following, description is made of a secondmodification of the configuration described above of turning off the electric source of the actuator on the basis of the detected speed. In this modification, a change into a circular shape is made to the shape of the plate 802 in the aspects of the preceding first modification. FIG. 53 and FIGS. 54 to 58 illustrate the configuration of the safety device 1 according to this modification. FIG. 53 illustrates a schematic configuration of the safety device 1, and FIGS. 54 to 58 illustrate how the safety device 1 works (switch turning-off operation is performed by the safety device 1). Note that, FIG. 53 illustrates, for ease of understanding of this modification, an exploded state of the safety device 1, and an assembled state thereof can be easily understood with reference to FIGS. 54 to 58.

In this case, the rotary shaft 22 is connected to the arm portion 100 of the robot, and the rotational speed of the rotary shaft 22 is transmitted from the gear 40 fixed to the rotary shaft 22 to the rotary damper 42 through inter mediation of the gear 41. The rotary damper 42 is attached with a plate 820 through a hole 821, and hence the braking torque from the rotary damper 42 acts on the plate 820. In this case, the plate 820 is a circular plate-shaped body, and the hole 821 is provided at a center thereof. A hole 822 and a hole 823 are provided below the hole 821 and at two positions of being separated from the hole 821 by an equal distance. Further, a protrusion 824 protruding from a surface of the plate 820 is installed on the side opposite to those holes 822 and 823, that is, above the hole 821. Note that, the protrusion 824 is provided on, of the surfaces of the plate 820, the surface on the side of facing the frame 45, and hence is in a state of being hidden by the plate 820 in FIG. 53.

Meanwhile, on the frame 45, the two switches 15 and 15' for interrupting electric power supplied to the actuator 200 for driving the arm portion 100 of the robot are aligned in a lateral direction. In this case, the switch 15 installed on the left side is capable of interrupting electric power supplied to the actuator 200 when the lever thereofispusheddowntotheleftside. Meanwhile,incontrast, the switch 15' installed on the right side is capable of interrupting electric power supplied to the actuator 200 when the lever thereof is pushed down to the right side. In directions in which those switches are pushed down, there are provided two slide grooves extending in the frame 45, one of which corresponding to the switch 15 is defined as a slide groove 833, and another of which corresponding to the switch 15' is defined as a slide groove 834. Further, in the frame 45, a hole 831 and a hole 832 are arranged side by side so as to be aligned with the slide grooves 833 and 834 aligned side by side.

In this case, a pin 825 is inserted and fixed in the hole 822, a pin 826 in the hole 823, a pin 827 in the hole 831, and a pin 828 in the hole 832. Further, one end of a tension spring 829 is fixed to the pin 825, and another end thereof is fixed to the pin 827. Similarly, a tension spring 830 is fixed between the pin 826 and the pin 828. With this configuration, the plate 820 enters a state of being coupled to the frame 45 through intermediation of the two tension springs 829 and 830, and then, those pins and tension springs cause a force generated by the springs to act on the plate 820. Further, the force of the springs acting on the plate 820 can be changed by changing the rigidity of the springs. Still further, a pin 835 is inserted into the slide groove 833, and a pin 836 is inserted into the slide groove 834. Those pins 835 and 836 are slidable in their respective slide grooves, and are in a state of being held in contact with levers of the switches corresponding thereto.

In the safety device 1 according to this modification configured as described above, as illustrated inFIG. 54, under a state in which the protrusion 824 installed on the plate 820 is interposed between the switches 15 and 15' aligned in the lateral direction on the frame 45, the plate 820 receives the braking torque from the rotary damper 42. As a result, the lever of each of the switches corresponding to the rotational directions of the rotary shaft 22 can be pushed down, and electric power supply to the actuator 200 can be interrupted. In the following, detailed description is made of the process of interrupting electric power supply.

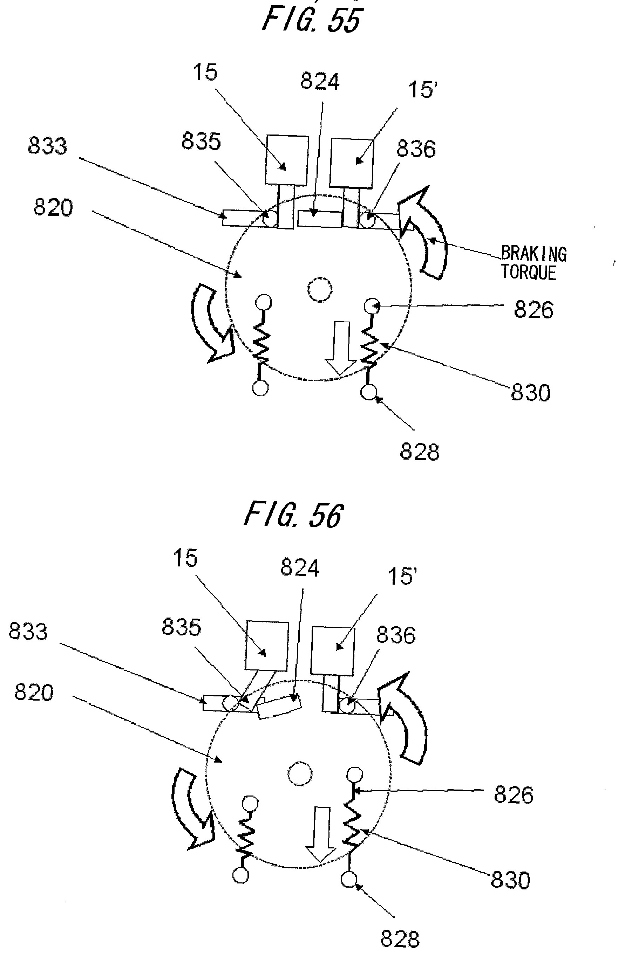

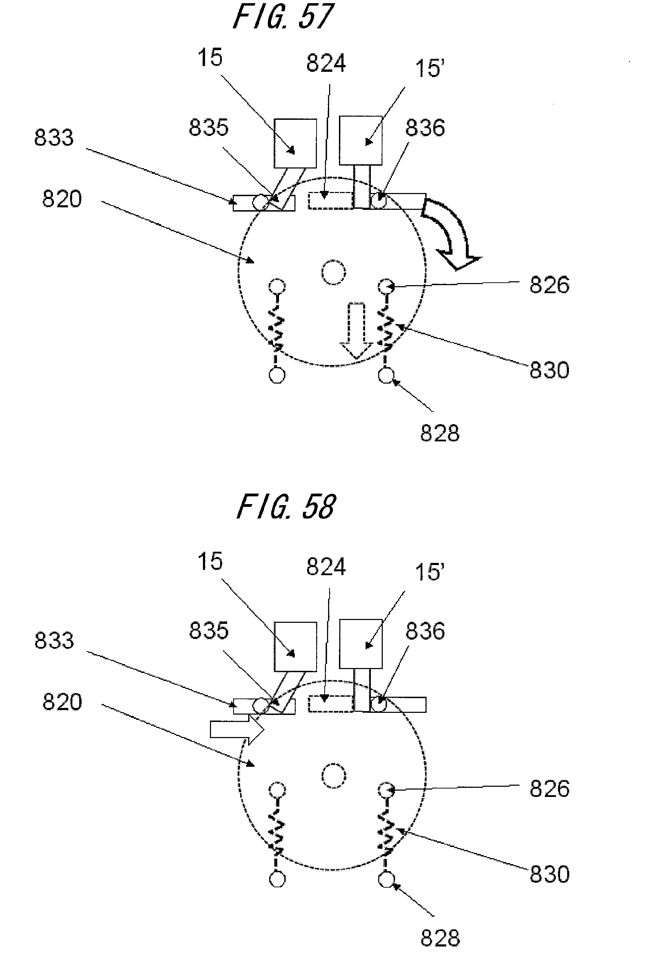

First, description is made on the assumption that the rotary shaft 22 is in a state of being rotated counterclockwise. The rotational speed of the rotary shaft 22 is transmitted from the gear 40 to the rotary damper 42 through intermediation of the gear 41. Then, the braking torque exerted by the rotary damper 42 in proportion to the speed acts on the plate 820 counterclockwise (refer to FIG. 55). In this case, spring torque exerted by the tension spring 830 acts on the plate 820 in a direction inverse to that of the braking torque. As the rotational speed of the rotary shaft 22 is increased, the braking torque becomes higher and, the braking torque overcomes the spring torque so that the plate 820 is rotated. Then, the protrusion 824 pushes down the lever of the switch 15, and switchover to the turn-off state is effected (refer to FIG. 56). As a result, electric power supply to the actuator 200 is interrupted. In this case, due to switchover of the switch 15, the pin 835 moves along the slide groove 833. After that, when the switch 15 is switched-over and electric power supply to the actuator 200 is interrupted, the braking torque exerted by the rotary damper 42 is eliminated. As a result, the plate 820 is rotated clockwise by the tension spring 829, and stops at the original position at which the spring torque exerted by the tension spring 830 is balanced out (refer to FIG. 57). In this case, the switch 15 remains in the turn-off state, and hence the arm portion 100 of the robot is not activated. In order that the arm portion 100 is reactivated, it is only necessary that an external force be applied to the lever of the switch 15 through intermediation of the pin 835 (refer to FIG. 58) so that the switch 15 is returned to the original state (returned to the state illustrated in FIG. 54).

Further, also in the case where the rotary shaft 22 is rotated clockwise, essentially similarly to the above-mentioned case, when the rotational speed of the rotary shaft 22 exceeds a predetermined speed, the protrusion 824 of the plate 820 pushes down the lever of the switch 15'. Accordingly, electric power supply to the actuator 200 is interrupted.

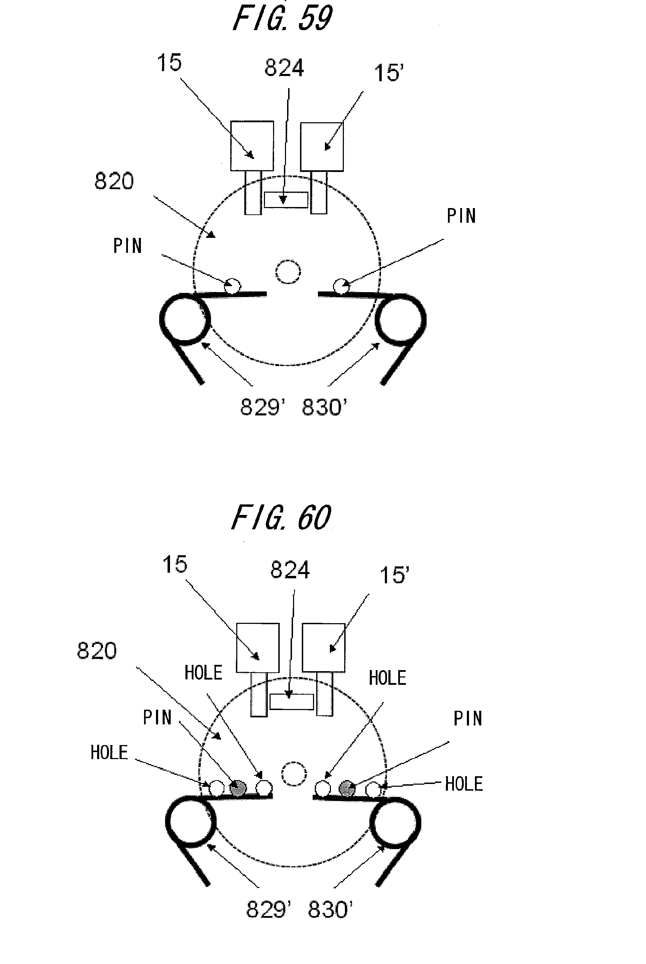

Further, FIGS. 59 to 62 illustrate additional aspects of the modification. FIG. 59 illustrates an aspect inwhichtorsioncoilsprings829' and830' areadoptedinstead of the above-mentioned tension springs 829 and 830. It is only necessary that one ends of those torsion coil springs be connected to the frame 45 side, and the other ends thereof be respectively connected to the pins 825 and 826 on the plate 820. FIG. 60 illustrates an aspect in which connecting positions of connection ends on the plate 820 side of the torsion coil springs 829' and 830' can be selected from a plurality of points. In the aspect illustrated in FIG. 60, three holes into which the pin 825 or 826 can be installed are prepared for each of the pins 825 and 826. By selection of any one of the three holes, spring torque imparted by the springs to the plate 820 can be changed. With this configuration, spring torque acting on the plate 820 can be finely adjusted, and hence it is possible to finely set the rotational speed (predetermined speed) of the rotary shaft 22, the rotational speed being used as a threshold at the time of interruption of electric power supplied to the actuator 200.

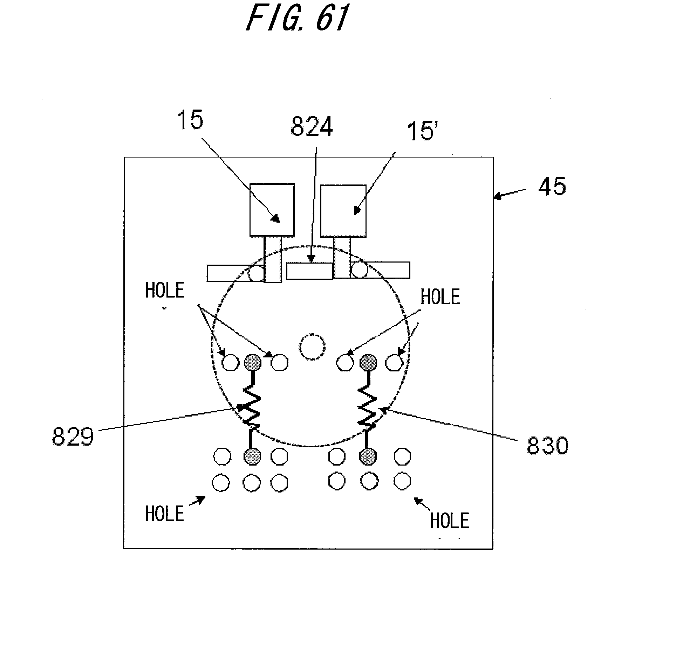

Further, in an aspect illustrated in FIG. 61, a change is made to the spring torque exerted by the tension springs 829 and 830 in the modification illustrated in FIGS. 53 and 54. Inthisaspect,whenthetension-springsconnecting positions on the frame 45 side are adjusted, the magnitude of the spring torque acting on the plate 820 is changed. Note that, regarding the spring torque imparted to the plate 820 by the two springs in the aspects described above, it is preferred that the springs exert spring torque of equal magnitude.

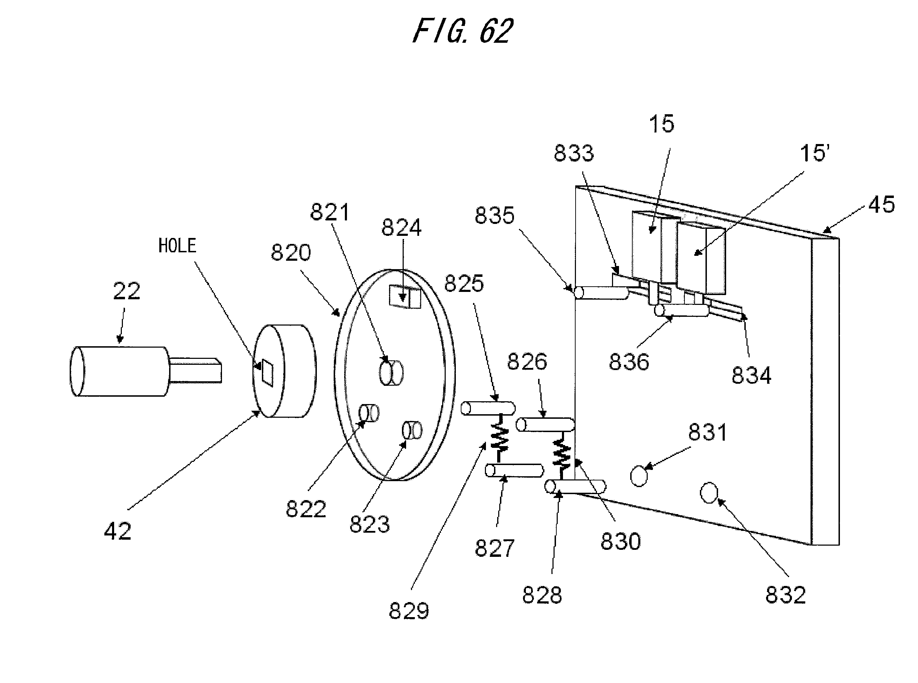

Further,althoughtherotationoftherotaryshaft 22 is input to the rotary damper 42 through intermediation of the gears 40 and 41 in the aspect illustrated in FIG. 53, a configuration may be adopted in which the rotary damper 42 is directly connected to the rotary shaft 22 as illustrated in FIG. 62.

### <Third modification>

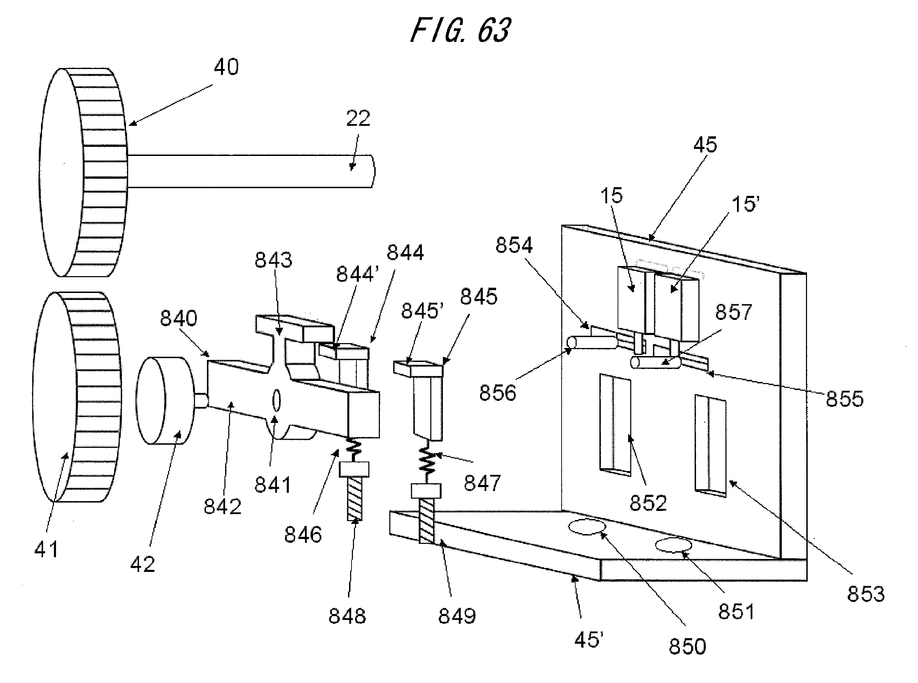

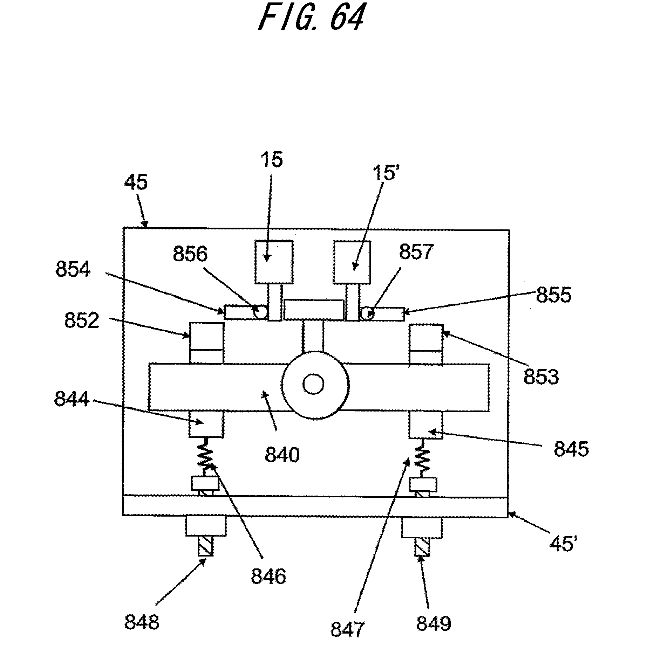

In the following, description is made of a third modification of the configuration described above of turning off the electric source of the actuator on the basis of the detected speed. In this modification, a further change is made to the shape of the plate 802 in the aspects of the preceding first modification. FIG. 63 and FIGS. 64 to 68 illustrate the configuration of the safety device 1 according to this modification. FIG. 63 illustrates a schematic configuration of the safety device 1, and FIGS. 64 to 68 illustrate how the safety device 1 works (switch turning-off operation is performed by the safety device 1). Note that, FIG. 63 illustrates, for ease of understanding of this modification, an exploded state of the safety device 1, and an assembled state thereof can be easily understood with reference to FIGS. 64 to 68.

In this case, the rotary shaft 22 is connected to the arm portion 100 of the robot, and the rotational speed of the rotary shaft 22 is transmitted from the gear 40 fixed to the rotary shaft 22 to the rotary damper 42 through inter mediation of the gear 41. The rotary damper 42 is attached with a plate 840 through a hole 841, and hence the braking torque from the rotary damper 42 acts on the plate 840. In this case, the plate 840 includes a rectangular main-body portion 842 extending in a bilaterally symmetrical manner with respect to the hole 841 as a center, and a T-shaped contact portion 843 provided at a center portion of the main-body portion 842 (above the hole 841).

Meanwhile, on the frame 45, the two switches 15 and 15' for interrupting electric power supplied to the actuator 200 for driving the arm portion 100 of the robot are aligned in a lateral direction. In this case, the switch 15 installed on the left side is capable of interrupting electric power supplied to the actuator 200 when the lever thereofispusheddowntotheleftside. Meanwhile,incontrast, the switch 15' installed on the right side is capable of interrupting electric power supplied to the actuator 200 when the lever thereof is pushed down to the right side. In directions in which those switches are pushed down, there are provided two slide grooves extending in the frame 45, one of which corresponding to the switch 15 is defined as a slide groove 854, and another of which corresponding to the switch 15' is defined as a slide groove 855. Further, in the frame 45, a slide groove 852 and a slide groove 853 are arranged side by side so as to be aligned with the slide grooves 854 and 855 aligned side by side. Those slide grooves 852 and 853 extend in a direction orthogonal to the direction in which the preceding slide grooves 854 and 855 and the grooves extend, that is, in a vertical direction on the frame 45. Further, a frame 45' is provided orthogonal to the frame 45, and two holes 850 and 851 are provided in the frame 45' at positions respectively adjacent to the slide grooves 852 and 853.

In this case, the safety device 1 is provided with plates 844 and 845 slidable in the slide grooves 852 and 853. Those plates 844 and 845 respectively include claw portions 844' and 845' projecting at upper portions thereof to the plate 840 side. As illustrated in FIG. 64, in the assembled state of the safety device 1, the respective claw portions of the plates 844 and 845 are arranged so as to be hooked to points on a main-body portion of the plate 840, the points being opposite to each other with respect to the hole 841 therebetween. In this case, tension springs 846 and 847 are respectively connected to lower end portions of the plates 844 and 845. Meanwhile, other end portions ofthosetensionsprings846and847arerespectivelyconnected into holes 850 and 851 of the frame 45' through intermediation of adjustment screws 848 and 849. Those adjustment screws 848 and 849 adjust attachment positions of the tension springs 846 and 847 connected thereto, and can adjust a spring force exerted from each of the springs with respect to the plate 840. Accordingly, in the safety device 1 according to this modification, the plate 840 which receives braking torque from the rotary damper 42 is elastically coupled to the frames 45 and 45' through intermediation of the plates 844 and 845, in other words, rotation caused by braking torque of the plate 840 is in a state of being hindered by any one of the plates 844 and 845.

In the safety device 1 according to this modification configured as described above, as illustrated inFIG. 64, under a state in which the T-shaped contact portion 824 installed on the plate 840 is interposed between the switches 15 and 15' aligned in the lateral direction on the frame 45, the plate 840 receives the braking torque from the rotary damper 42. As a result, the lever of each of the switches corresponding to the rotational directions of the rotary shaft 22 can be pushed down, and electric power supplytotheactuator200canbeinterrupted. In the following, detailed description is made of the process of interrupting electric power supply. Note that, FIG. 64 illustrates a state in which the plate 840 does not receive the braking torque from the rotary damper 42. In this case, the main-body portion 842 of theplate 840 is inahorizontal state. Further, under a state in which the plates 844 and 845 are positioned at lowermost positions of the slide grooves 852 and 853 respectively corresponding thereto, the respective claw portions 844' and 845' thereof are in a state of being hooked to the main-body portion 842 by elastic forces of the tension springs 848 and 849.

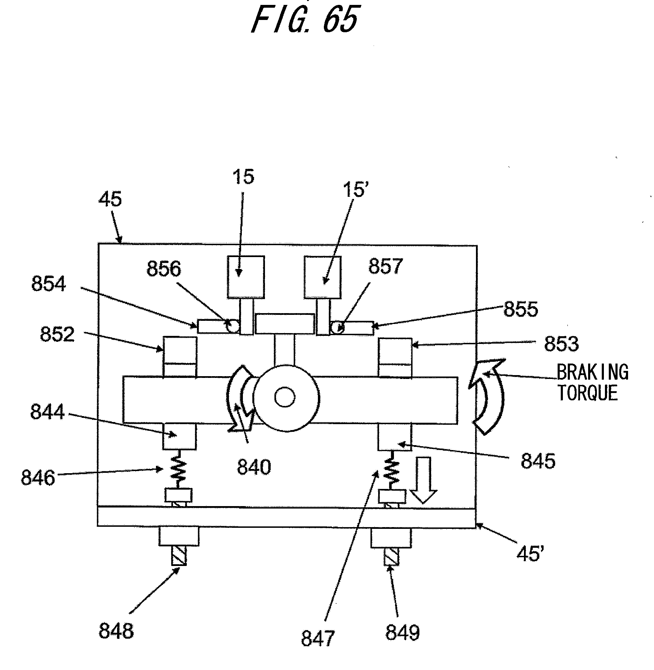

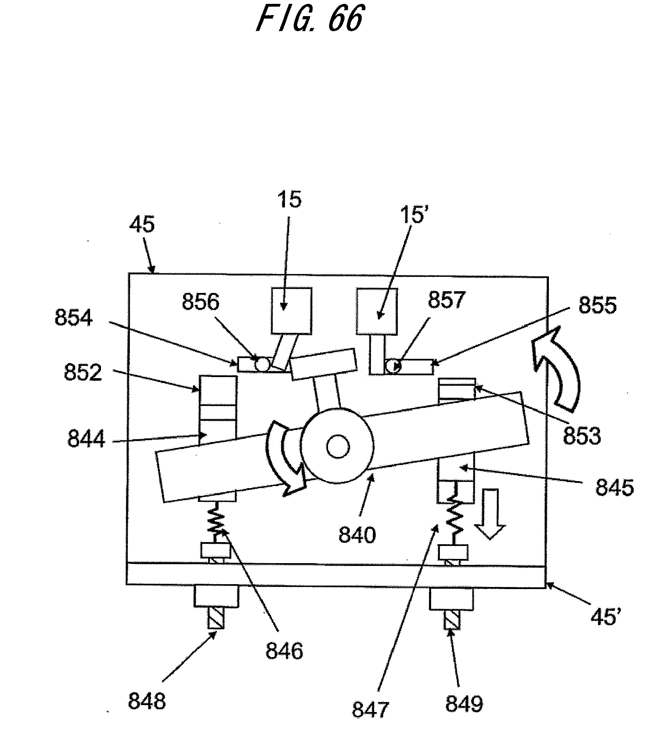

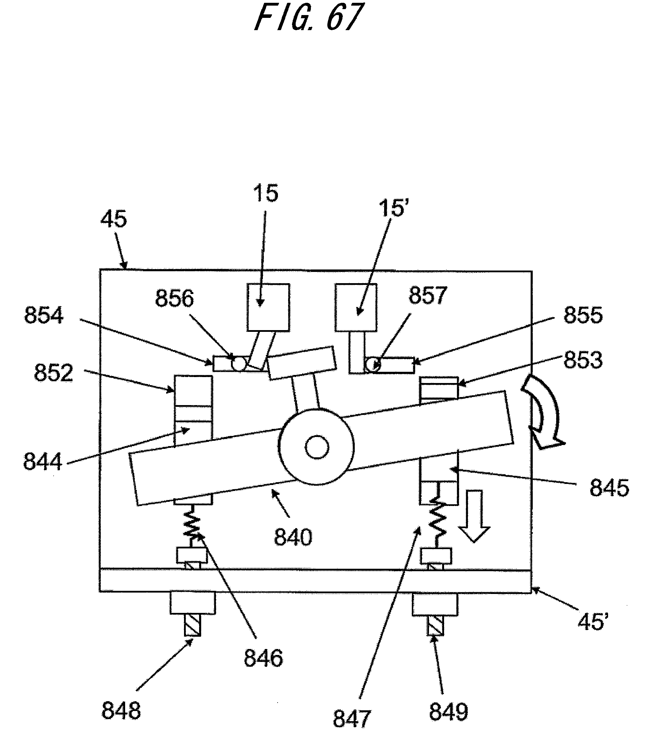

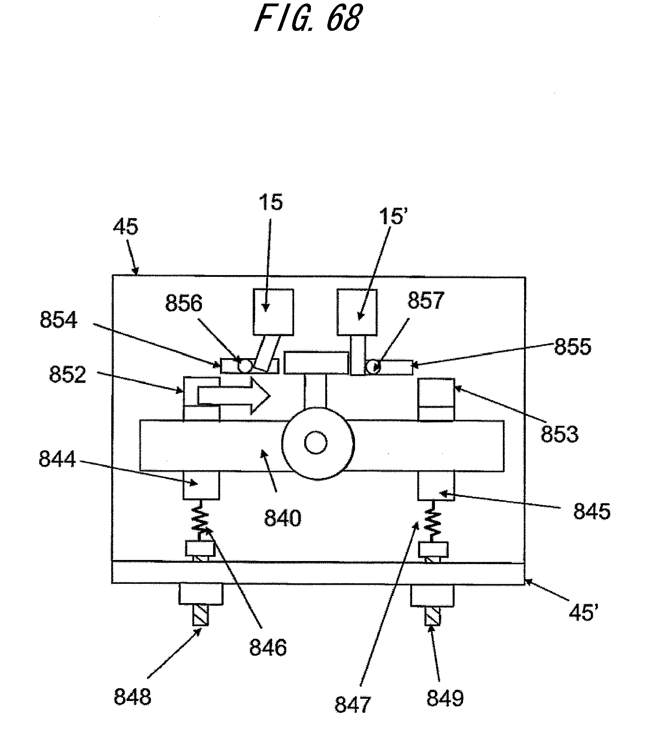

First, description is made on the assumption that the rotary shaft 22 is in a state of being rotated counterclockwise. The rotational speed of the rotary shaft 22 is transmitted from the gear 40 to the rotary damper 42 through intermediation of the gear 41. Then, the braking torque exerted by the rotary damper 42 in proportion to the speed acts on the plate 840 counterclockwise (refer to FIG. 65). In this case, spring torque exerted by the tension spring 847 acts on the plate 840 in a direction inverse to that of the braking torque. Note that, regarding the tension spring 846, the plate 844 to which the tension spring 846 is connected is not allowed to move in the slide groove 852. Thus, the contact state of the claw portion 844' and the main-bodyportion 842 is canceled, with the result that spring torque does not act from the tension spring 846 on the plate 840. Then, as the rotational speed of the rotary shaft 22 is increased, the braking torque becomes higher and, the braking torque overcomes the spring torque so that the plate 840 is rotated. Then, the contact portion 843 pushes down the lever of the switch 15, and switchover to the turn-off state is effected (refer to FIG. 66). As a result, electric power supply to the actuator 200 is interrupted. In this case, due to switchover of the switch 15, the pin 856 moves along the slide groove 854. After that, when the switch 15 is switched-over and electric power supply to the actuator 200 is interrupted, the braking torque exerted by the rotary damper 42 is eliminated. As a result, the plate 840 is rotated clockwise by the tension spring 847 (refer to FIG. 67), and stops at the original position at which the spring torque exerted by the tension spring 846 is balanced out. In this case, the switch 15 remains in the turn-off state, and hence the arm portion 100 of the robot is not activated. In order that the armportion 100 is reactivated, it is only necessary that an external force be applied to the lever of the switch 15 through intermediation of the pin 856 (refer to FIG. 68) so that the switch 15 is returned to the original state (returned to the state illustrated in FIG. 64).

Further, also in the case where the rotary shaft 22 is rotated clockwise, essentially similarly to the above-mentioned case, when the rotational speed of the rotary shaft 22 exceeds a predetermined speed, the contact portion 843 of the plate 840 pushes down the lever of the switch 15'. Accordingly, electric power supply to the actuator 200 is interrupted.

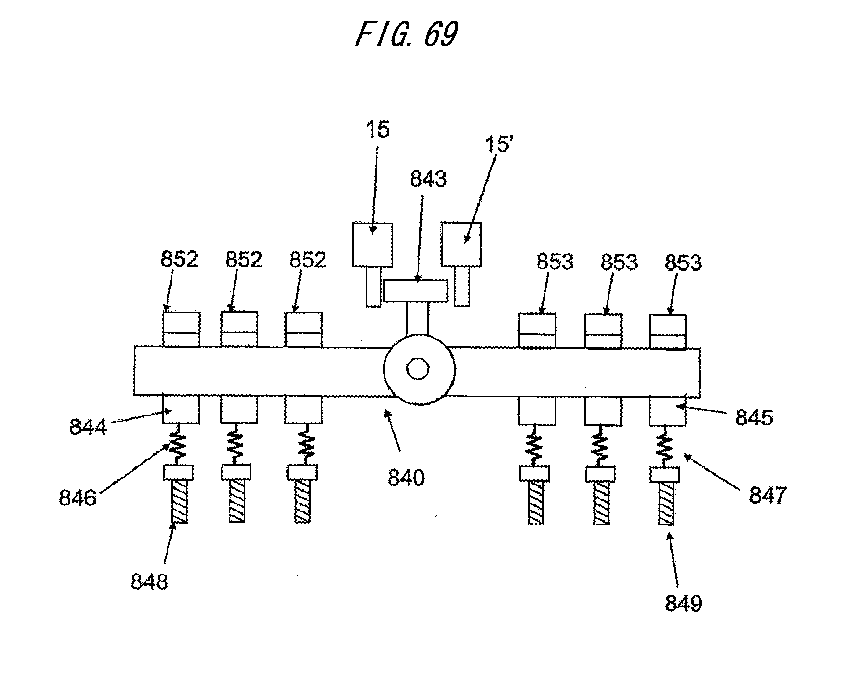

Further, FIGS. 69 to 71 illustrate additional aspects of the modification. FIG. 69 illustrates an aspect in which there are provided three or more plates (844 and 845) each having a claw portion which comes into contact with the main-body portion 842 of the plate 840. (In FIG. 69, there are provided six plates each having the claw portion.) In this aspect, it is preferred that the plates each having the claw portion be installed in a bilaterally symmetrical mannerwithrespecttothehole841. Withthisconfiguration, spring torque acting on the plate 840 can be finely adjusted, and hence it is possible to finely set the rotational speed (predetermined speed) of the rotary shaft 22, the rotational speed being used as a threshold at the time of interruption of electric power supplied to the actuator 200.

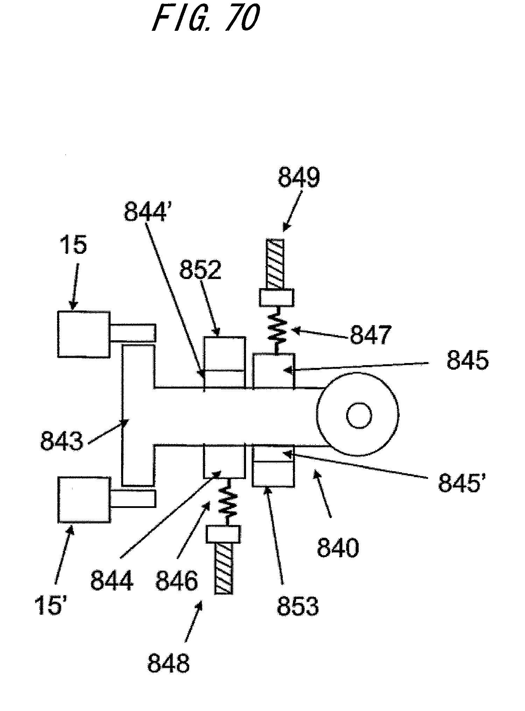

Further, in an aspect illustrated in FIG. 70, the main-body portion of the plate 840 is formed into the T-shape illustrated in the preceding first modification. Accordingly, in the aspect illustrated in FIG. 70, similarly to the first modification, the switches 15 and 15' are aligned in the vertical direction. In this case, when the claw portions 844' and 845' of the plates 844 and 845 are in a state of being hooked to the main-body portion 842 of the plate 840 respectively from inverse directions, turn-off controls of the switches 15 and 15' can be effected similarly to this modification.

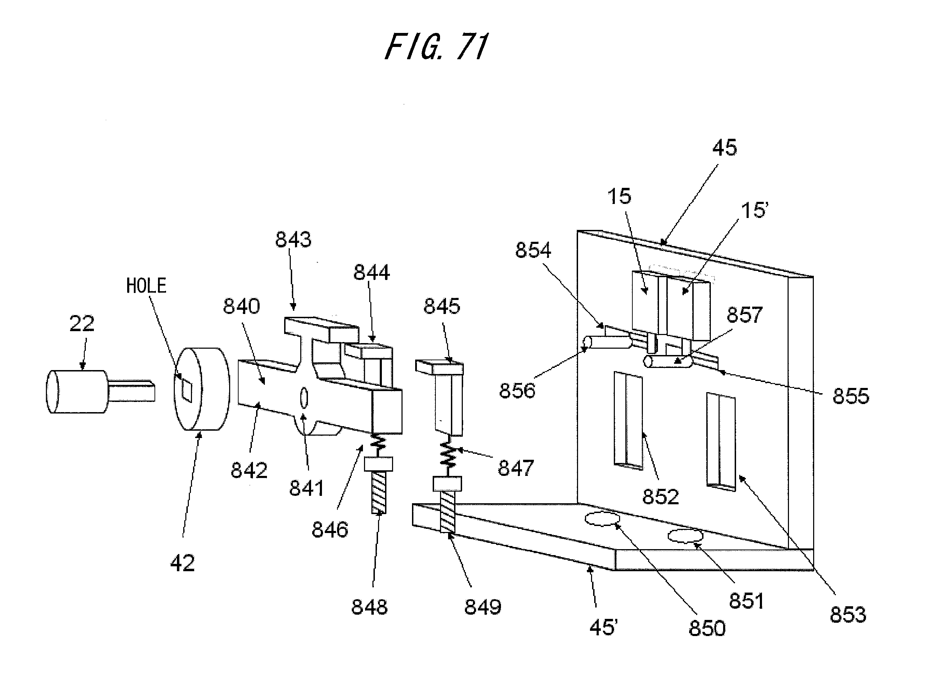

Further,althoughtherotationoftherotaryshaft 22 is input to the rotary damper 42 through intermediation of the gears 40 and 41 in the aspect illustrated in FIG. 63, a configuration may be adopted in which the rotary damper 42 is directly connected to the rotary shaft 22 as illustrated in FIG. 71.

### <Fourth modification>

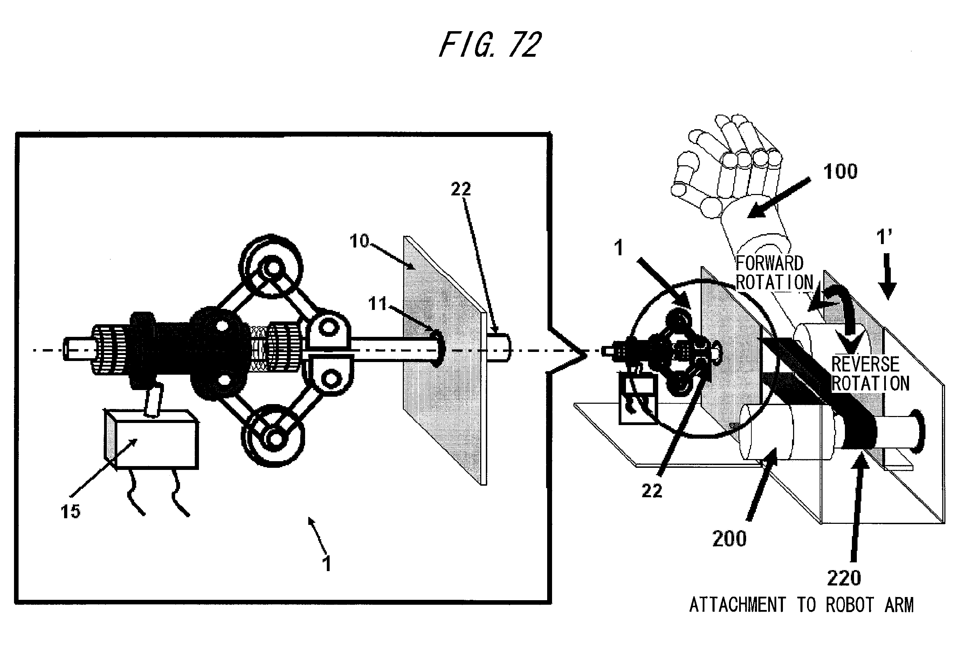

In the modifications described above, the rotational speed of the rotary shaft 22 is converted into braking torque by the rotary damper 42, and turn-off controls of the switches on the basis of the rotational speed are effected with use of the braking torque. This modification discloses a safety device 1 in which turn-off controls of the switches on the basis of the rotational speed of the rotary shaft 22 are realized with use of an inertial body instead of the rotary damper 42. Then, description is made of the safety device 1 according to this modification with reference to FIGS. 72 to 79.

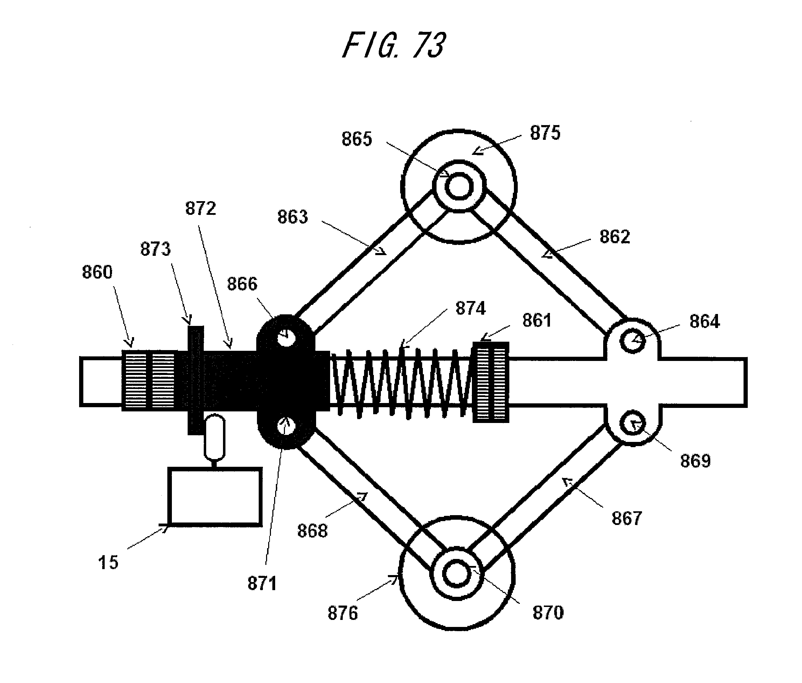

As illustrated in FIGS. 72 and 73, the rotary shaft 22 is attached to the arm shaft 100 of the robot. In this context, the safety device 1 according to this embodiment is constituted mainly by a linkage mechanism. In the linkage mechanism, a link 862 and a link 867 are pin-supported by the rotary shaft 22, a pin 864, and a pin 869. Further, an inertial body 875 and a link 863 are connected to the link 862 by a pin 865, and meanwhile, an inertial body 876 and a link 868 are connected to the link 867 by a pin 870. Further, the link 863 is connected to a slider 872 by a pin 866, and the link 868 is connected to the slider 872 by a pin 871. In this context, lengths of the links 862, 863, 867, and 868 are equal to each other, and hence the linkage mechanism constituting the safety device 1 exhibits a rhombic shape.

In this context, the slider 872 is allowed to slide in the axial direction of the rotary shaft 22 by the bearing. Incidentally, a spring (compression spring) 874 is attached to an arm portion 100 side end portion of the slider 872. Further, at another end of the spring 874, there is provided a double nut 861 constituted by two nuts and fixed to a screwportion of the rotary shaft 22. Still further, a double nut 860 is arranged as well on another end side of the slider (side of an end portion opposite to the end portion to which the spring 874 is connected). The slider 872 is attached with a flange 873 projecting relative to other surfaces, and the lever of the switch 15 is arranged beside the flange. Thus, when the slider 872 slides in the axial direction of the rotary shaft 22 (in the right direction in FIGS. 72 and 73), the flange 873 provided to the slider 872 pushes down the lever of the switch 15. As a result, electric power supply to the actuator can be interrupted.

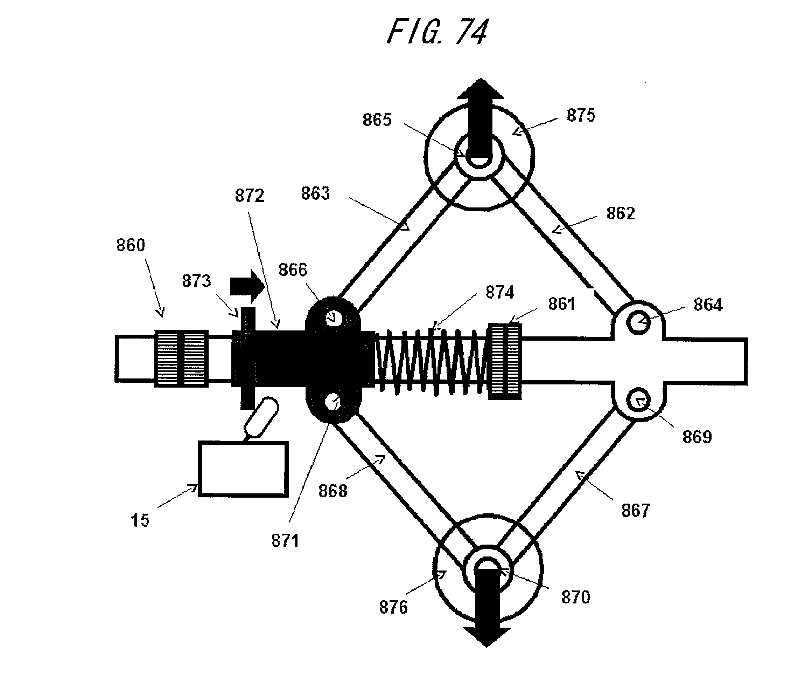

In detail, as illustrated in FIG. 74, when the rotary shaft 22 is rotated at a rotational angular speed ω [rad/s], a centrifugal force F acts on each of the pin 865 and the pin 870 by the inertial bodies 875 and 876. In this case, on an assumption that a mass of each of the inertial bodies 875 and 876 is represented by m [kg], and a distance of each of the inertial bodies from the center of the rotary shaft is represented by r [m], a centrifugal force which acts on each of the pin 865 and the pin 870 is represented by F=mrω² [N]). Further, the centrifugal force F acting on each of the pins 865 and 870 is converted by geometric holding effected by the links into a force for sliding the slider 872 to the spring 874 side. The slider 872 slides to a position at which the sliding force thus generated and a force generated by the spring 874 are balanced out. Thus, when the rotary shaft 22 reaches a preset rotational speed, the lever of the switch 15 for the actuator 200 and the flange 873 of the slider 872 come into contact with each other. As a result, electric source of the actuator 200 is turned off, and out-of-control of the robot can be prevented.

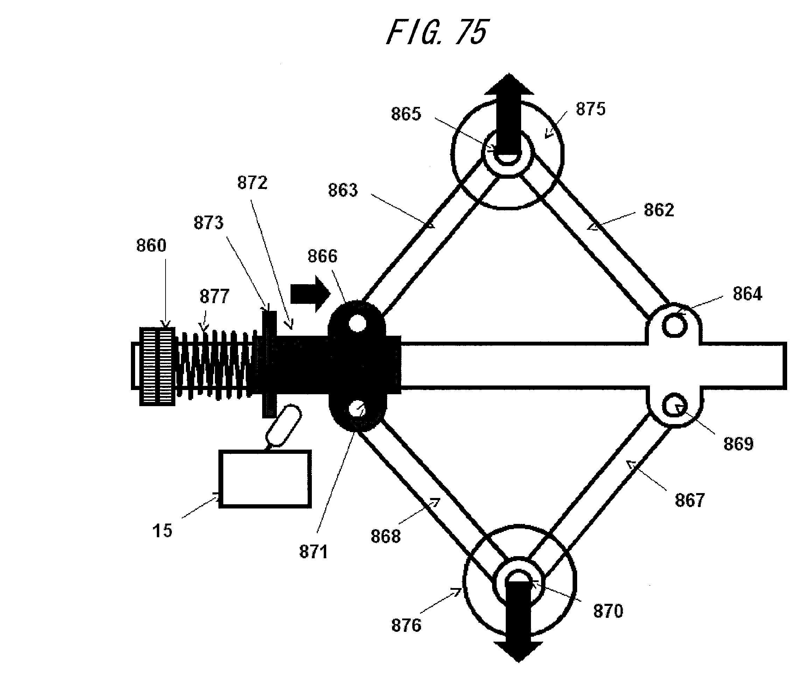

In this case, setting of the rotational speed of the rotary shaft 22 for the purpose of turning off the electric source of the actuator 200 can be realized as follows. (1) The position of the double nut 861 on a spring 874 side is adjusted. (2) The spring 874 is exchanged with a spring having different rigidity, (3) Spring rigidity is adjusted with use of the spring rigidity changing mechanism (refer to FIGS. 35A, 35B, 36A, 36B and 37) described above in the third embodiment. (4) The positions of the double nuts 860 and 861 on both sides of the slider 872 are adjusted so that a distance r from the rotary shaft 22 to each of the inertial bodies 875 and 876 is changed. (5) The inertial bodies 875 and 876 are set to have different masses. (6) The attachment position of the switch 15 is shifted in the axial direction. Note that, although the compression spring 874 is used in the above-mentioned case, as illustrated in FIG. 75, it is possible to attach a tension spring 877 to an end portion on the opposite side of the slider 872, and to fix another end of the spring 877 to the double nut 860. In this case, setting of the rotational speed of the rotary shaft 22 for the purpose of turning off the electric source of the actuator 200 can be realized as follows. (1) The position of the double nut 860 is adjusted. (2) The spring 877 is exchanged with a spring having different rigidity. (3) Spring rigidity is adjusted with use of the above-mentioned rigidity changing mechanism. (4) The above-mentioned distance r is adjusted by the double nuts 860 and 861. (5) The inertial bodies 875 and 876 are set to have different masses. (6)Theattachment position of the switch 15 is shifted in the axial direction.

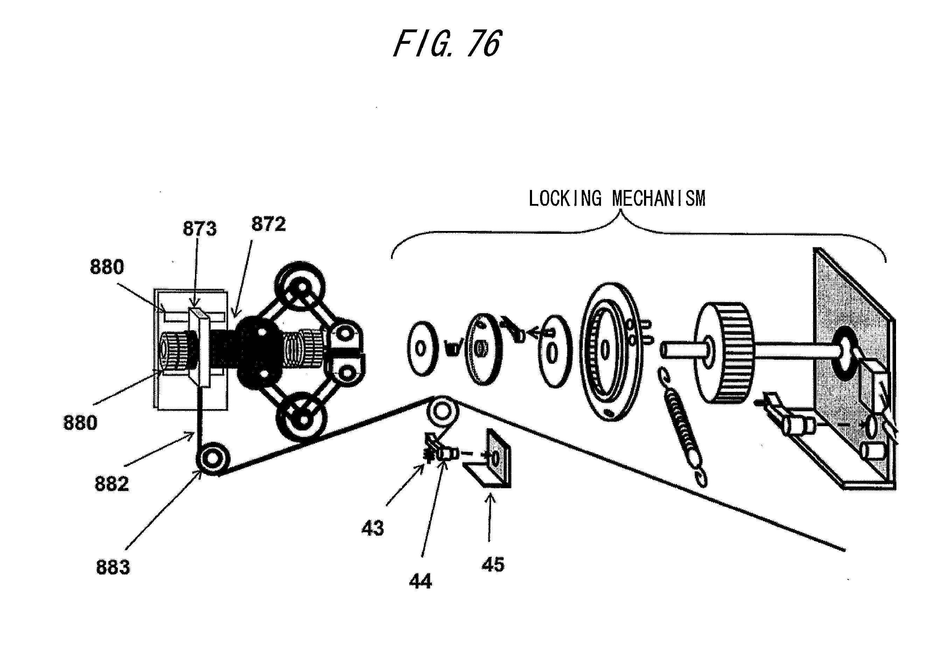

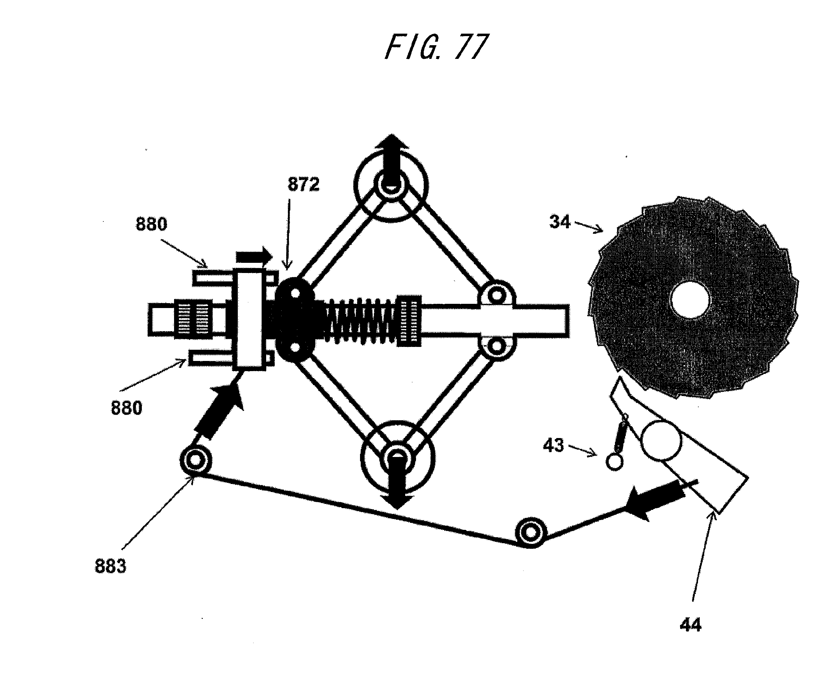

In this context, description is made with reference to FIGS. 76 and 77 of an aspect in which a turn-off control of the switch 15 with use of the "centrifugal force" described above applied to the inertial bodies and on the basis of the speed detection of the rotary shaft 22 is applied to the locking mechanisms described, for example, in the above-mentioned first embodiment. The "locking mechanism" illustrated in FIG. 76 is the same as the mechanisms described, for example, in the above-mentioned first embodiment, the mechanisms effecting locking on the rotation of the rotary shaft 22 when angular acceleration of the rotary shaft 22 exceeds a predetermined value. Accordingly, detailed description thereof is omitted. In this case, the linkage mechanisms according to this modification including the slider 872 are installed on a distal end side of the rotary shaft 22 through intermediation of the locking mechanisms. In this case, the flange 873 attached to the slider 872 includes a bearing 881 provided between the flange 873 and the slider 872, guides 880 are installed on side surfaces of the flange 873 so that the flange 873 is held and moved in the axial direction. With this configuration, the flange 873 is moved together with the slider 872 in the axial direction of the rotary shaft 22, with the rotation of the slider 873 (rotary shaft 22) not being transmitted to the flange 873. In addition, a wire 882 is attached to the flange 873, and the wire 882 is connected through intermediation of a pulley 883 to the stopper 44 on each of both the right and left sides of the arm portion 100 of the robot. (In FIG. 76, only the stopper 44 on one side is illustrated.) Note that, only the spring 43 is attached to the stopper 44 in this case, and the rotary damper 42 described, for example, in the above-mentioned first embodiment is not installed. Note that, similarly tothose,forexample,intheabove-mentionedfirstembodiment, the stopper 44 is supported by the bearing 46 to the frame 45.

By adoption of such a configuration, when the rotational speed of the rotary shaft 22 is increased, the flange 873 moves along the guides 880. The movement of the flange 873 causes the wire 883 to be pulled, with the result that the stopper 44 is rotated about the axis thereof. Then, when the rotary shaft 22 reaches a predetermined rotational speed, the stopper 44 meshes with the ratchet wheel 34 in the locking mechanism. After that, the rotary shaft 22 is locked by the processes having already been described above. The adjustment of the speed set for locking of the rotary shaft 22 can be performed by the methods described above, for example, by the adjustment of the spring forces of the spring 874 of the slider 872 and the spring 43 of the stopper 44.

Note that, in the case of meshing between the stopper 44 and the ratchet wheel 34, when it is difficult to install the wire 882 and the pulley 883, as illustrated in FIG. 77, the wire 882 may be attached to the stopper 44. That is, the safety device according to the present invention may be used in any aspect of the embodiments as long as the stopper 44 is allowed to mesh with the ratchet wheel 34 when the wire 882 is pulled. Further, in this modification, description is made of a structure in which the sliding force of the slider 872 is transmitted to the stopper 44 with use of the wire 882 and the pulley 873. Alternatively, the structure may be adopted in which the sliding force is transmittedtothestopper44withuseoftransmissionelements such as gears, a linkage mechanism, and a timing belt in addition to the wire 882 and the pulley 883.

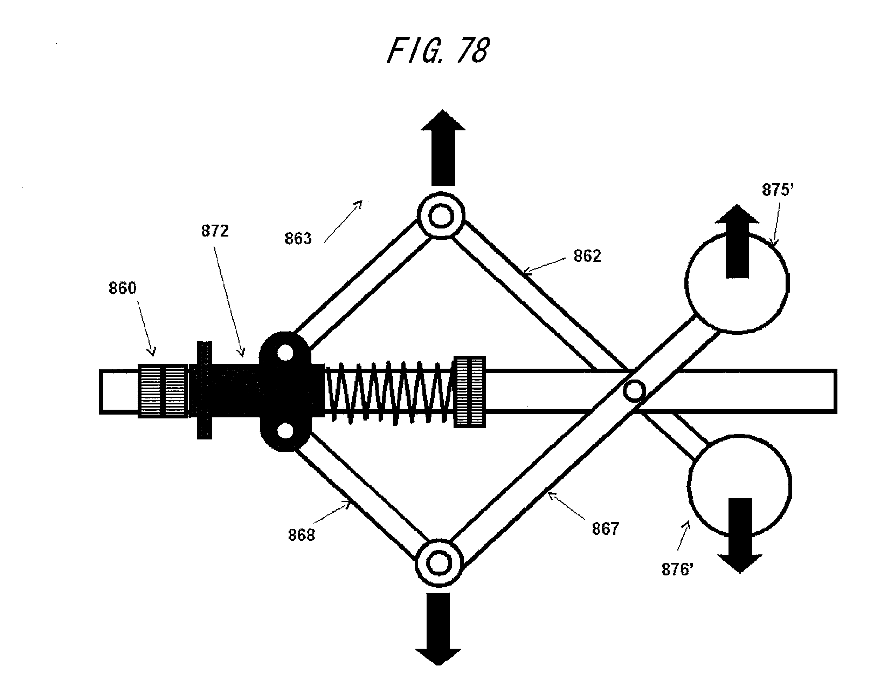

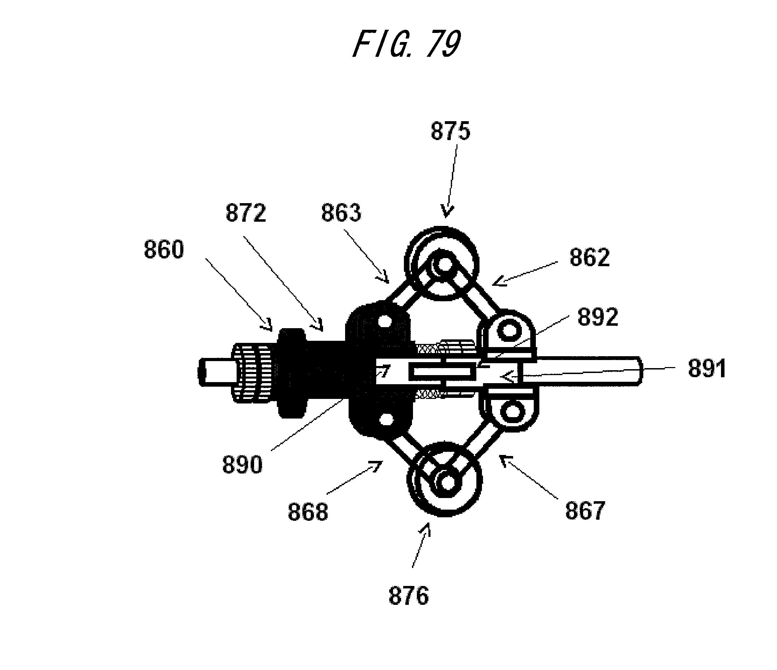

Further, FIGS. 78 and 79 illustrate additional aspects of the modification. FIG. 78 illustrates an aspect in which changes are made to the installation positions of the inertial bodies in the above-mentioned modifications. Specifically, a structure is adopted in which the links 862 and 867 are extended and connected to the rotary shaft 22 withapin, and inertial bodies 875' and 876' are respectively attached to distal ends of the links. In this aspect, centrifugal forces which act on the inertial bodies are determined by distances between the rotary shaft 22 and the inertial bodies respectively installed at the distal ends of the links 862 and 867. Further, FIG. 79 illustrates an aspect in which the number of the linkage mechanisms is changed. In the aspect illustrated in FIGS. 72 and 73, there are provided two linkage mechanisms to which inertial bodies are attached (two: the linkage mechanism constituted by the links 862 and 863 and the linkage mechanism constituted by the links 867 and 868). Meanwhile, in the aspect illustrated in FIG. 79, there are provided four linkage mechanisms the same as just described above. That is, FIG. 79 illustrates an aspect in which four linkage mechanisms are arranged at intervals of 90 degrees around the rotary shaft 22 (four: the linkage mechanism constituted by the links 862 and 863, a linkage mechanism by the links 867 and 868, a linkage mechanism by links 890 and 891 (including an inertial body 892), and two links (including inertial bodies (not shown)) positioned behind the rotary shaft 22 and hence not shown in the figure). With this configuration, it is possible to increase a sum of centrifugal forces which act on the inertial bodies, and hence to quickly perform detection of the rotational speed of the rotary shaft 22. Further, when there is no problem with rotational balance of the rotary shaft 22, the number of the linkage mechanisms may be one.

### Fifth embodiment

<Configuration of turning off the electric source of the actuator on the basis of detected acceleration> This embodiment discloses, regarding a switch which turns on and off electric power supply to an actuator for driving arobot,aconfigurationofmechanicallyeffectingtheturning off the electric source on the basis of acceleration of a rotary shaft drivingly rotated by the actuator. Specifically, for simplification of description, this embodiment mainly discloses a configuration in which the switch to be focused on turns off electric source. Meanwhile, disclosure of the configurations of locking the rotary shaft described in the above-mentioned first to third embodiments is omitted, which does not hinder adoption of the configuration of locking the rotary shaft. In accordance with design ability of those skilled in the art, the configuration disclosed in this embodiment may be appropriately combined with the configuration described in the preceding embodiments. Note that, components essentially the same as those in the configuration described in the preceding embodiments are denoted by the same reference symbols, and detailed description thereof is omitted.

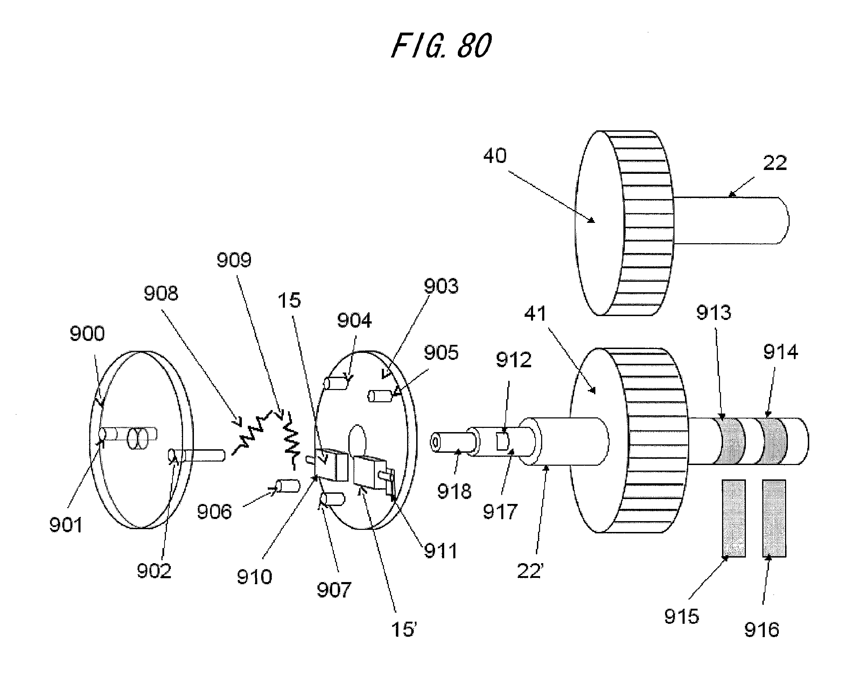

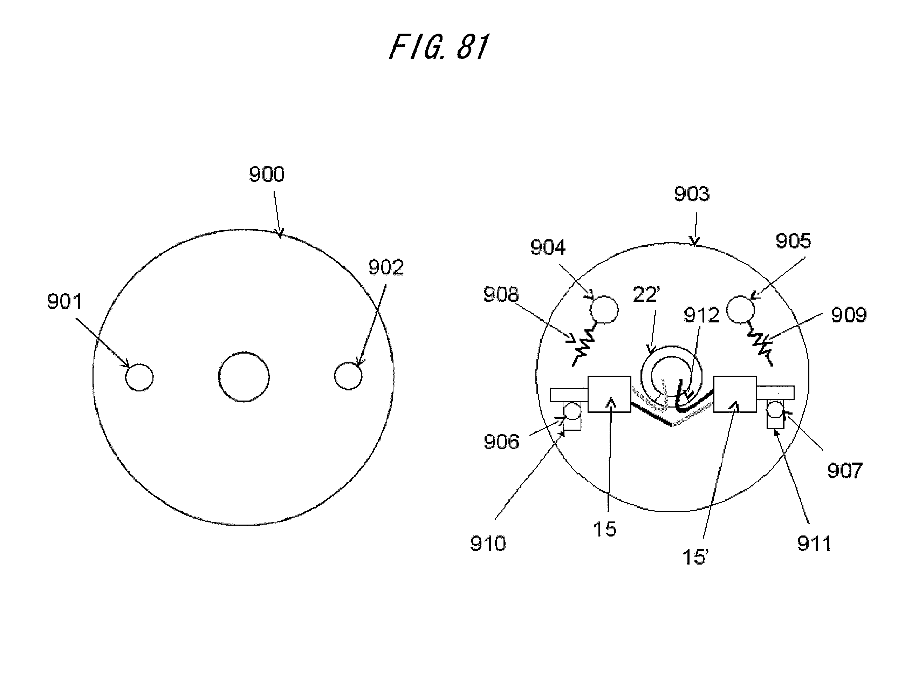

FIGS. 80 and 81 illustrate a configuration of the safety device 1 according to this embodiment. FIG. 80 illustrates a schematic configuration of the safety device 1, and FIG. 81 is a view of a surface configuration of each of plates 900 and 903 facing each other as illustrated in FIG. 80. Note that, FIG. 80 illustrates, for ease of understanding of this modification, an exploded state of the safety device 1, and an assembled state thereof can be easily understood with reference to FIGS. 81 to 87.

The rotary shaft 22 is connected to the drive shaft of the arm portion 100 of the robot, the arm portion 100 being driven by the actuator 200. Rotation of the rotary shaft 22 is transmitted to a shaft 22' through intermediation of the gears 40 and 41. Note that, the shaft 22' has a stepped shape in which step portions 917 and 918 are provided on a distal end side thereof, and is hollow. The step portion 917 is larger in outer diameter than the step portion 918, and a hole 912 communicating to a hollow part of the shaft 22' existing thereinside is provided at a midportion of the step portion 917. Further, as a material of the shaft 22', an insulative material is adopted except parts illustrated as conductive portions 913 and 914.

In this case, a circular plate 903 is fixed to the step portion 917 of the shaft 22', and is rotated integrally with the shaft 22'. Further, a pin 904 and a pin 905 are installed on a surface on a side opposite to the gear 41 side of the plate 903. In addition, near the shaft 22' on a surface of the plate 903, the two switches 15 and 15' for interrupting electric power supplied to the actuator 200 for driving the arm portion 100 of the robot are aligned in a lateral direction. In this case, the levers of the switches 15 and 15' extend to sides opposite to each other. The switch 15 installed on the left side in FIG. 80 is allowed to interrupt electric power supplied to the actuator 200 when the lever thereof is pushed down to the lower side. Meanwhile, the switch 15' installed on the right side in FIG. 80 is allowed to interrupt electric power supplied to the actuator 200 when the lever thereof is pushed down to the lower side. Note that, conductive wires from the switches 15 and 15' are inserted into the hole 912 of the shaft 22' and pass through the hollow part of the shaft 22' , to thereby be connected to the conductive portions 913 and 914. Further, in directions in which those switches are pushed down, there are provided two slide grooves extending on the plate 903, one of which corresponding to the switch 15 is defined as a slide groove 910, and another of which corresponding to the switch 15' is defined as a slide groove 911. A pin 906 is inserted into the slide groove 910, and a pin 907 is inserted into the slide groove 911. Those pins 906 and 907 are slidable in their respective slide grooves, and are in a state of being held in contact with levers of the switches corresponding thereto.

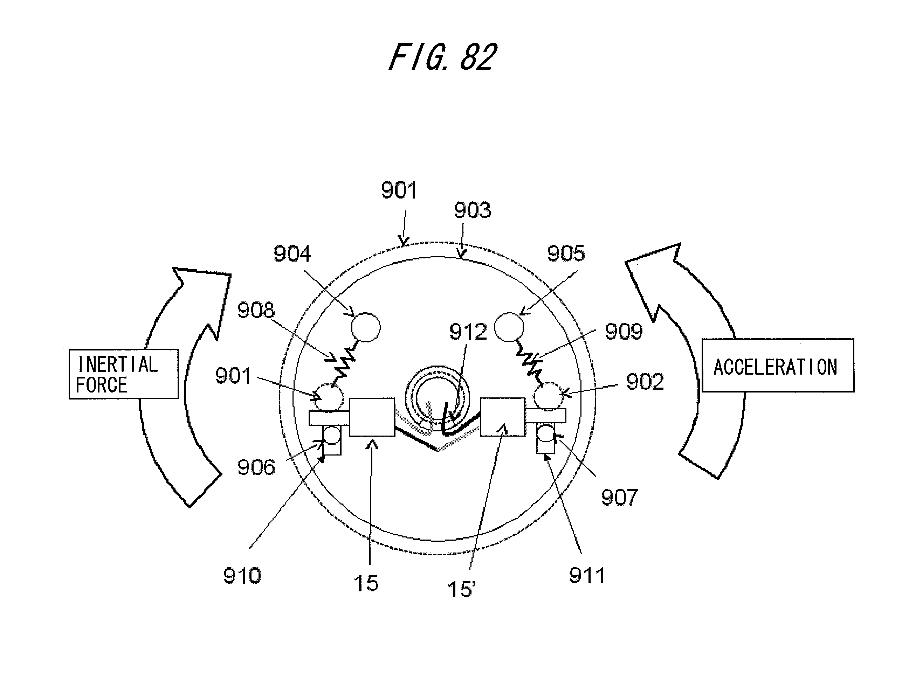

Further,thecircularplate900isprepared. Pins 901 and 902 are installed on a surface of the gear 41 side of the plate 900 (surface on the plate 903 side). Further, one end of a tension spring 908 is attached to the pin 901, and another end thereof is attached to the pin 904. Similarly, a tension spring 909 is attached between the pin 902 and the pin 905. Note that, the plate 900 is arranged onto the step portion 918 of the shaft 22', and is not fixed to the shaft 22'. With this configuration, the plate 900 is rotated integrally with the plate 903 through intermediation of the tension springs 908 and 909 to which the pins 901 and 902 are attached. In other words, rotation of the shaft 22' is elastically transmitted to the plate 900. In this case, at the time of assembly of the safety device 1, as described above, the plate 900 is elastically coupled to the plate 903. In this case, the pins 901 and 902 on the plate 900 are in a state of being positioned while interposing, respectively together with the pins 906 and 907, the lever of the switch 15 and the lever of the switch 15' therebetween (refer to FIG. 82, for example).

In the safety device 1 according to this modification configured as described above, as illustrated in FIG. 82, the pins 901 and 902 on the plate 900 are allowed to come into contact with the switches of the switches 15 and 15' aligned in the lateral direction on the plate 903 and apply forces thereon. Then, due to an inertial force of the plate 900 in proportion to the rotational acceleration of the rotary shaft 22, the lever of the switch corresponding to the rotational direction of the rotary shaft 22 can be pushed down, and thus electric power supply to the actuator 200 can be interrupted. In the following, detailed description is made of the processes of interrupting electric power supply.

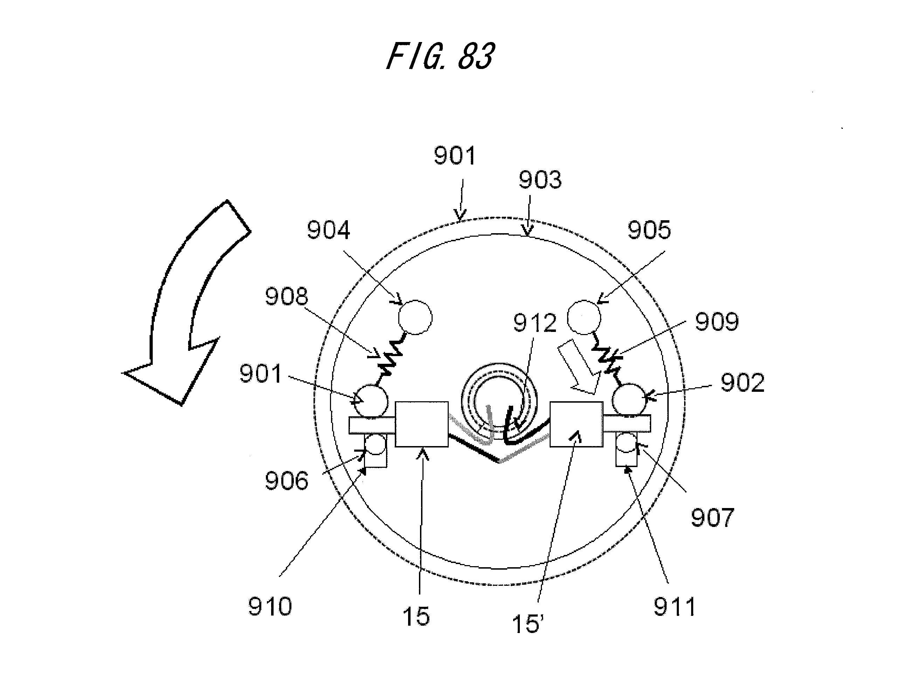

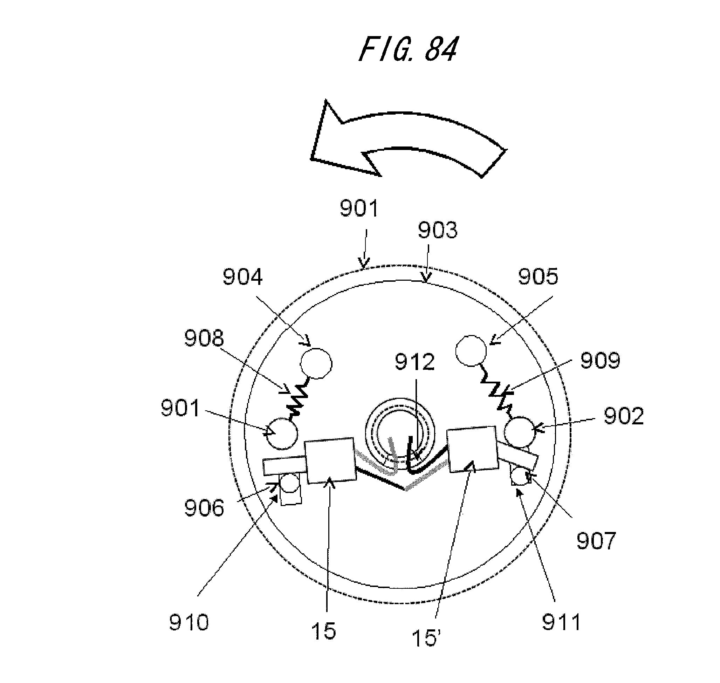

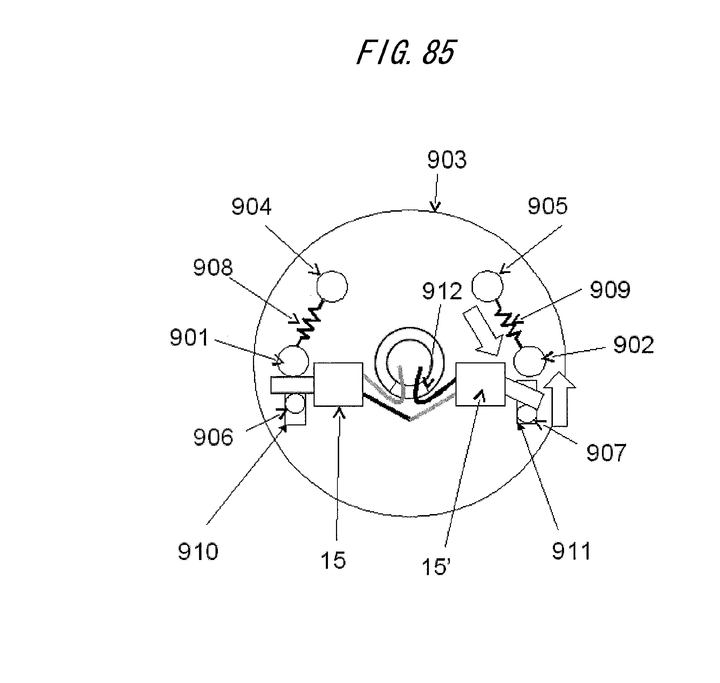

First, description is made on the assumption that the rotary shaft 22 is in a state of being rotated counterclockwise. The acceleration generated in the rotary shaft 22 is transmitted to the shaft 22' and the plate 903 through intermediation of the gears 40 and 41. Then, the acceleration thus transmitted causes inertial torque to act on the plate 900 (refer to FIG. 82). Simultaneously, in a direction inverse to that of inertial torque, spring torque generated by a spring force of the tension spring 905 attached between the pin 902 and the pin 905 also acts on the plate 900 (refer to FIG. 83). In this context, as the acceleration of the rotary shaft 22 becomes higher, the inertial torque acting on the plate 900 as illustrated in FIG. 82 becomes higher. Then, when the acceleration of the rotary shaft 22 reaches predetermined acceleration, the inertial torque causes displacement of a relative position of the plate 900 and the plate 903, that is, displacement in rotation. This displacement causes the pin 902 fixed to the plate 1 to push down the lever of the switch 15', and thus electric power supply to the actuator 200 is interrupted (refer to FIG. 84). Note that, after the electric power supply is interrupted, the inertial torque on the plate 900 is eliminated, and thus the plate 900 is returned to an original relative position by the tension spring 909. However, the switch 15' remains turned off, and hence the arm portion 100 of the robot is not activated (refer to FIG. 85). In order that the arm portion 100 is reactivated, it is only necessary that the pin 907 be slid so that the lever of the switch 15' is restored.

Further, also in the case where the rotary shaft 22 is rotated clockwise, essentially similarly to the above-mentioned case, when the rotational speed of the rotary shaft 22 exceeds predetermined acceleration, the pin 901 on the plate 900 pushes down the lever of the switch 15, and thus electric power supply to the actuator 200 is interrupted.

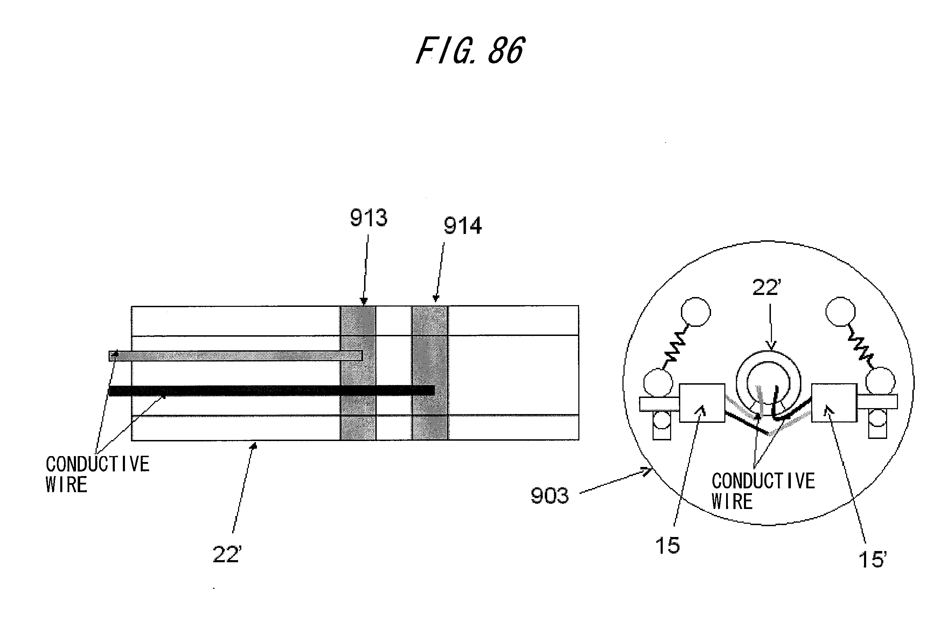

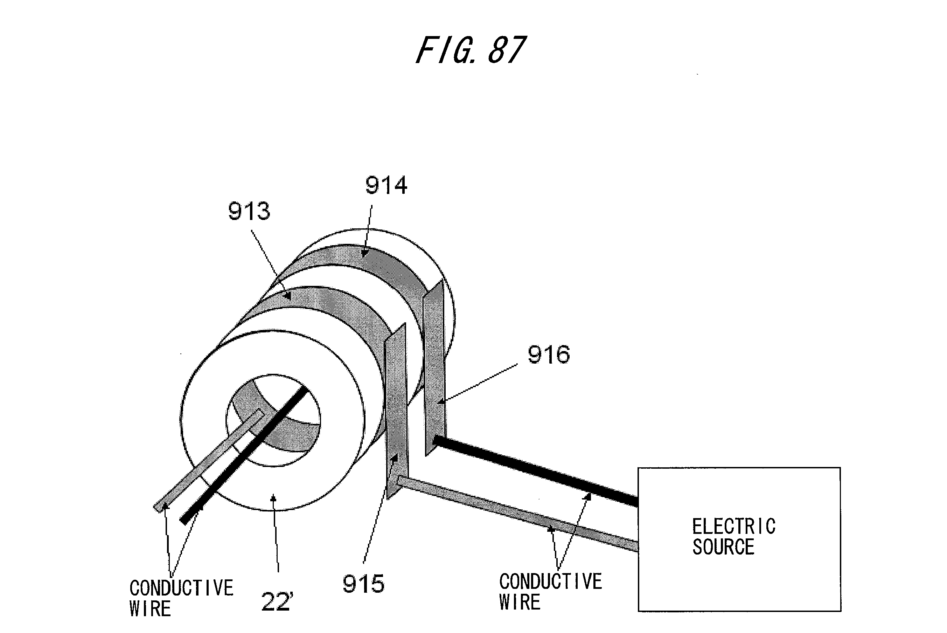

In this context, detailed description is made, with reference to FIGS. 86 and 87, of the conductive portions 913 and 914 provided to the shaft 22'. The switch 15 and the switch 15' are wire-connected in series (refer to the right view of FIG. 86). The conductive wire extending from the switch 15 is connected to the conductive portion 913, and the conductive wire extending from the switch 15' is connected to the conductive portion 914 (refer to the left view of FIG. 86). Further, the conductive portions 913 and 914 on the shaft 22' side and terminals 915 and 916 to which the conductive wires leading to the electric source of the actuator 200 constitute a brush structure. With this structure, a signal for shutting off the electric source of the actuator 200 can be transmitted from the switches 15 and 15' to the electric source, with the shaft 22' being rotated.

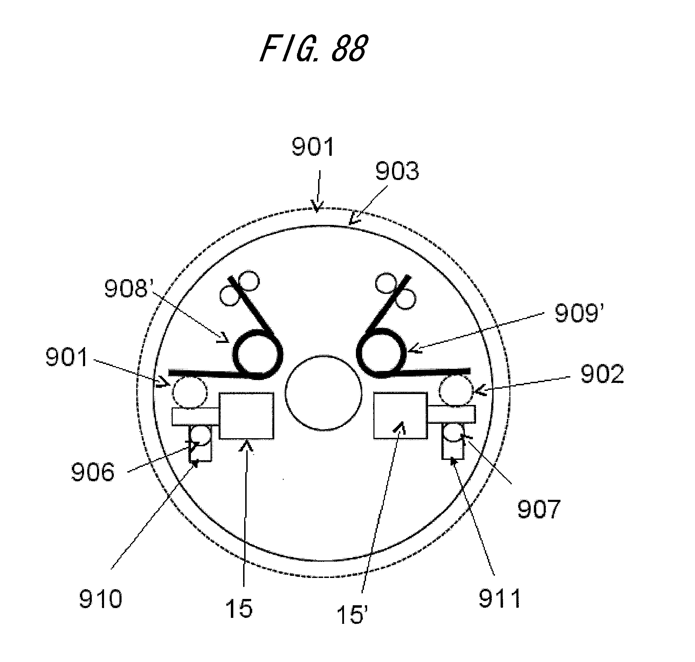

Further, FIG. 88 illustrates an additional aspect of the modification. FIG. 88 illustrates an aspect in which torsion coil springs 908' and 909' are adopted instead of the above-mentioned tension springs 908 and 909. It is only necessary that one ends of those torsion coil springs be also connected to the plate 903 side, and other ends thereof be respectively connected to the pins 901 and 902 on the plate 900.

### <Modification>

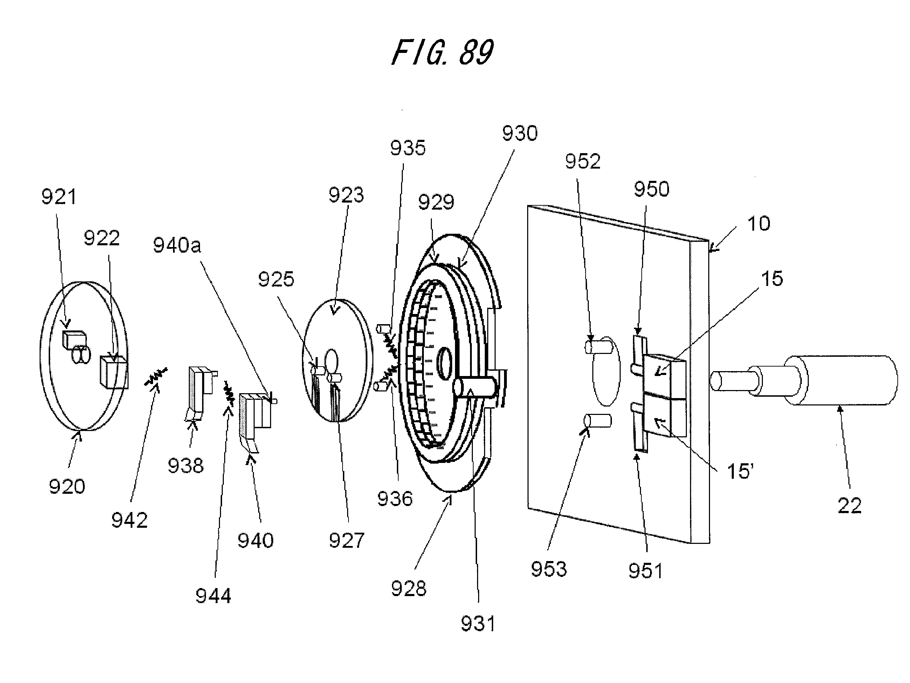

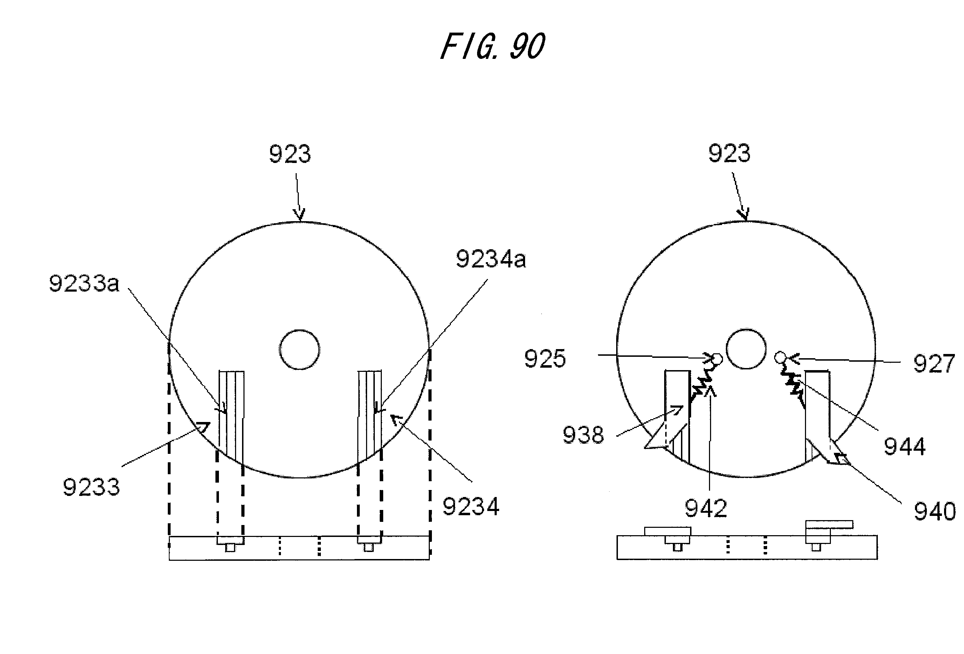

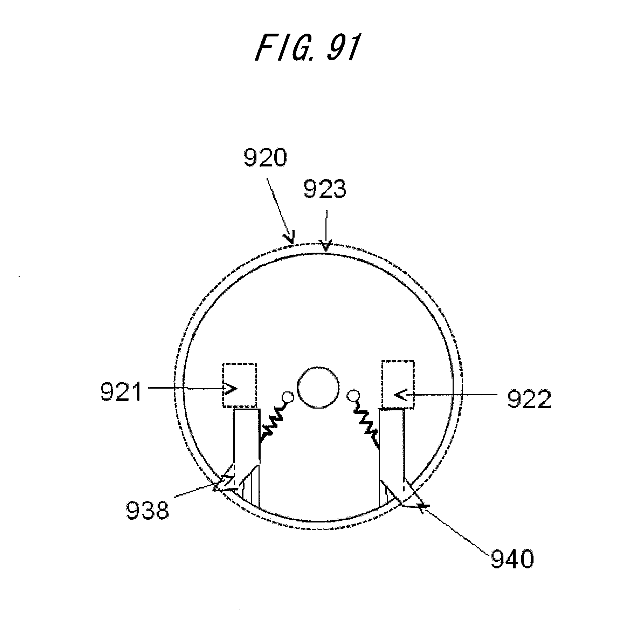

In the following, description is made of a modification of the configuration described above of turning off the electric source of the actuator on the basis of the detected acceleration. FIGS. 89 to 99 illustrate the configuration of the safety device 1 according to this modification. FIGS. 89 and 90 illustrate a schematic configuration of the safety device 1, and FIGS. 91 to 98 illustrate how the safety device 1 works (switch turning-off operation is performed by the safety device 1). Note that, FIG. 89 illustrates, for ease of understanding of this modification, an exploded state of the safety device 1, and an assembled state thereof can be easily understood with reference to FIGS. 90 to 99.

In this case, the rotary shaft 22 is connected to the arm portion 100 of the robot. Further, on the frame 10, the two switches 15 and 15' for interrupting electric power supplied to the actuator 200 for driving the arm portion 100 of the robot are aligned in a vertical direction. In this case, the switch 15 installed on the upper side is allowed to interrupt electric power supplied to the actuator 200 when the lever thereof is pushed down to the upper side. Meanwhile, in contrast, the switch 15' installed on the lower side is allowed to interrupt electric power supplied to the actuator 200 when the lever thereof is pushed down to the lower side. In directions in which those switches are pushed down, there are provided two slide grooves extending on the frame 10, one of which corresponding to the switch 15 is defined as a slide groove 950, and another of which corresponding to the switch 15' is defined as a slide groove 951. Further, a pin 952 is inserted into the slide groove 950 and a pin 953 is inserted into the slide groove 951. Those pins 952 and 953 are slidable in their respective slide grooves, and are in a state of being held in contact with the levers of the switches corresponding thereto.

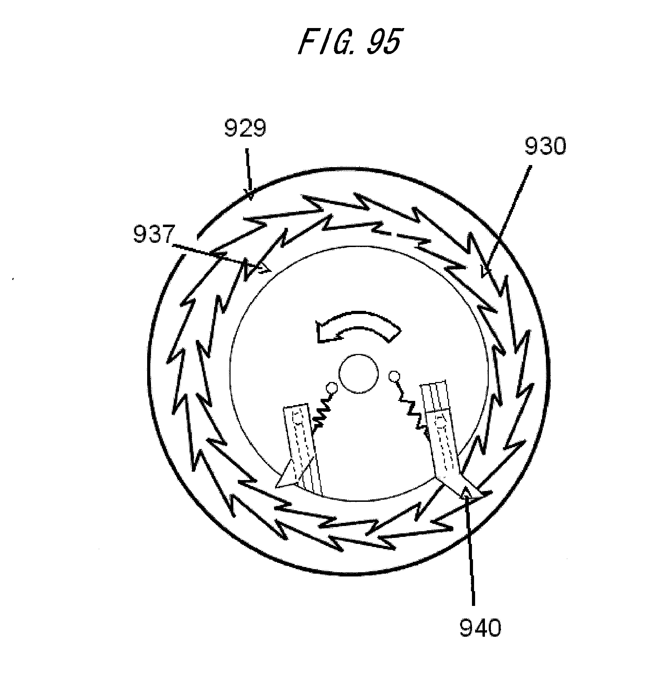

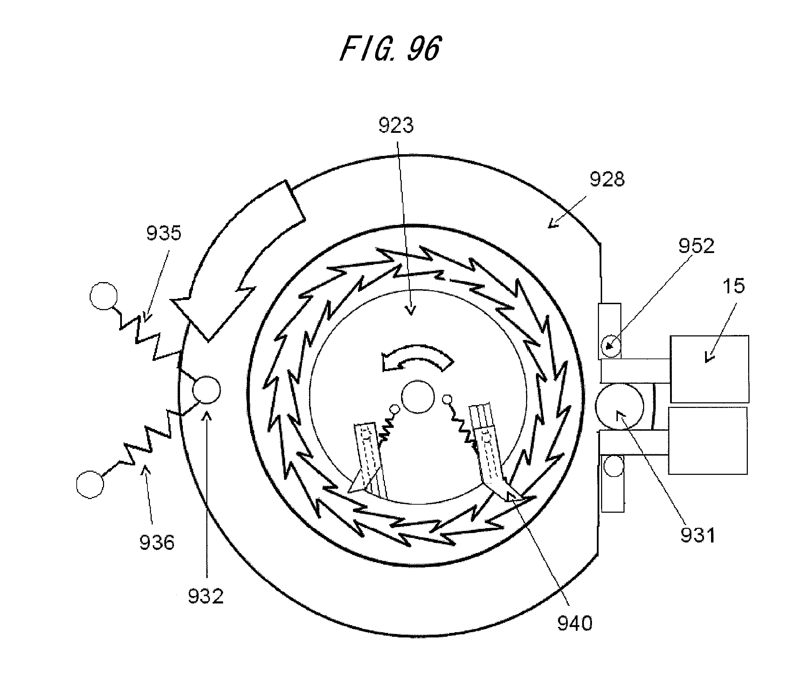

In this case, the safety device 1 according to this modification includes three circular plates 920, 923, and 928. The plate 928 is provided with inner teeth 929 and 930 on two different stages in piles. As illustrated, for example, in FIG. 95, an inner diameter of the inner teeth 929 is larger than an inner diameter of the inner teeth 930. Notethat,theplate928isnotfixedtotheshaft22. Meanwhile, tension springs 935 and 936 are connected from two directions with respect to a pin 932 provided on a surface of the plate 928, and the plate 928 is in a state of being always subject to restoring forces generated by those tension springs. Note that, one end of each of the tension springs 935 and 936 is connected onto a static structure independent of the rotation of the rotary shaft 22. Further, a part of the plate 928 is cutout as illustrated, for example, in FIGS. 89 and 96, and a pin 931 is provided thereto.

Next, description is made of the plate 923. The plate 923 is housed in the inner diameter parts of the above-mentioned inner teeth 929 and 930, and is fixed to the rotary shaft 22. Pins 925 and 927 are fixed to the plate 923,andslidegrooves9233and9234areprovidedasillustrated in the left view of FIG. 90, the slide grooves being respectively provided with deeper grooves 9233a and 9234a. Those grooves 9233a and the like extend in the same direction as that of the slide groove 9233 and the like corresponding thereto. In addition, claws 938 and 940 are respectively inserted into the slide grooves (refer to the right view of FIG. 90). In detail, the claws are respectively provided with columnar protruding portions 938a and 940a for restraining movements in the slide grooves corresponding thereto as illustrated in FIG. 89. The movements of the protruding portions in the grooves 9233a and the like provided in the slide grooves corresponding thereto cause the claws to slide. Further, the claw 938 is connected to the pin 925 through inter mediation of a tension spring 942, and the claw 940 is connected to the pin 927 through intermediation of a tension spring 944.

Further, the claw 940 is larger than the claw 938, and exhibits, in a state of being installed to the plate 923, a shape reverse to a shape of the claw 938 as illustrated in the right view of FIG. 90. In this context, in order that the claw 938 slides in the slide groove 9233 so as to be allowed to mesh with the inner teeth 930 having a small inner diameter, and that the claw 940 slides in the slide groove 9234 so as to be allowed to mesh with the inner teeth 929 having a large inner diameter, the claws 938 and 940 are different from each other in installation height with respect to the plate 923 (different in position in a thickness direction of the plate 923).

Next, description is made of the plate 920. Of surfaces of the plate 920, protrusions 921 and 922 are provided on a surface opposed to the plate 923. Regarding configurations of those protrusions, at the time of assembly of the safety device 1, the protrusion 921 is arranged so as to come into contact with the claw 938, and the protrusion 922 is arranged so as to come into contact with the claw 940 (refer to FIG. 91, for example). Further, the plate 920 itself is not fixed to the rotary shaft 22. Accordingly, the rotation of the plate 923 is transmitted to the plate 920 through intermediation of the claws, the tension springs, and the protrusions.

In the safety device 1 according to this modification configured as described above, as illustrated, for example, in FIG. 96, under a state in which the pin 931 of the plate 928 is interposed between the switches 15 and 15' aligned in the vertical direction on the frame 10, the plate 928 receives an external force. As a result, the lever of each of the switches corresponding to the rotational directions of the rotary shaft 22 can be pushed down, and electric power supply to the actuator 200 can be interrupted. In the following, detailed description is made of the process of interrupting electric power supply.

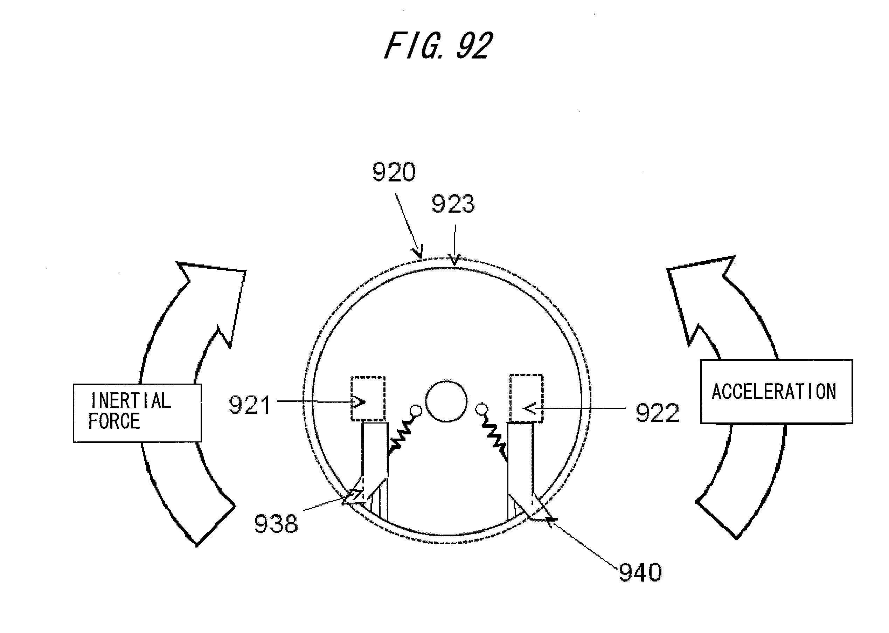

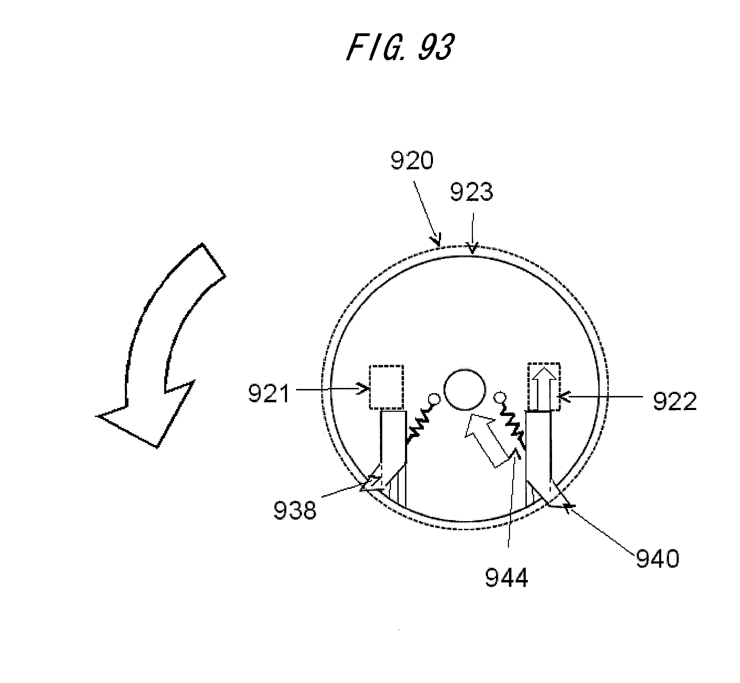

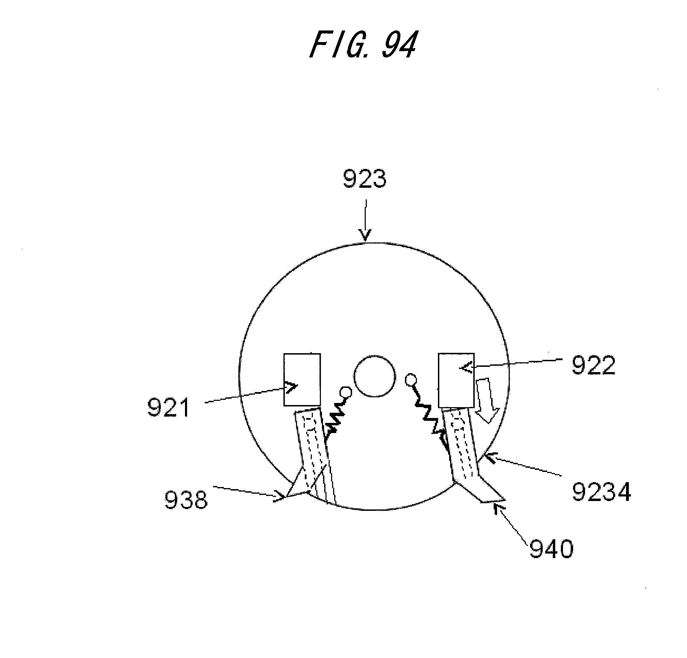

First, description is made on the assumption that the rotary shaft 22 is in a state of being rotated counter clockwise. The rotational acceleration of the rotary shaft 22 is transmitted to the plate 923, with the result that inertial torque generated by inertial force acts on the plate 920 (refer to FIG. 92). Simultaneously, as illustrated in FIG. 93, a spring force of the tension spring 944 acts on the plate 920 through intermediation of the protrusion 922, and spring torque acts in a direction inverse to that of inertial torque. In this context, as the acceleration of the rotary shaft 22 becomes higher, the inertial torque acting on the plate 9 2 0 becomes higher. After that, when the acceleration of the rotary shaft 22 reaches predetermined acceleration, there occurs displacement of a relative position of the plate 920 and the plate 923, that is, displacement in rotation. As illustrated in FIG. 94, this displacement causes the protrusion 922 to slide the claw 940.

As illustrated in FIG. 95, the displacement just described above of the claw 940 causes the claw 940 to come into contact with the inner teeth 929, and then to mesh there with when the rotation is effected. Note that, the inner teeth 929 and 930 have a ratchet teeth shape, and the inner teeth 929 and the inner teeth 930 are attached so as to be inverse to each other in teeth direction. As described above, there are prepared two types of inner teeth of the ratchets in different directions and one claw in a different direction corresponding to each of the two types of inner teeth (two claws in total) for the purpose of correspondingly meshing the inner teeth and the claws with each other on the assumption that acceleration is generated in each of the clockwise rotational direction and counterclockwise rotational direction of the rotary shaft 22. In this modification, description is made on the assumption that the claw 940 and the inner teeth 929 come into contact and mesh with each other (refer to FIG. 95).

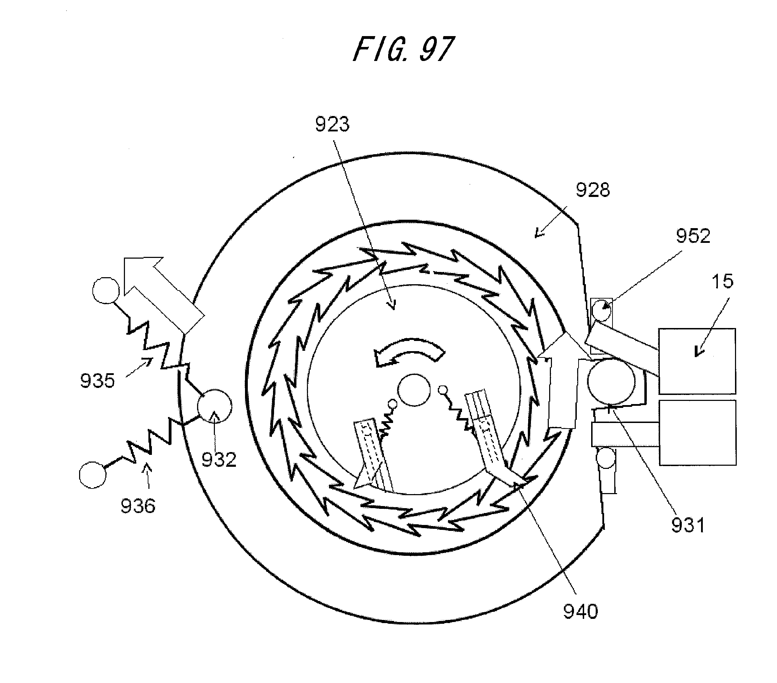

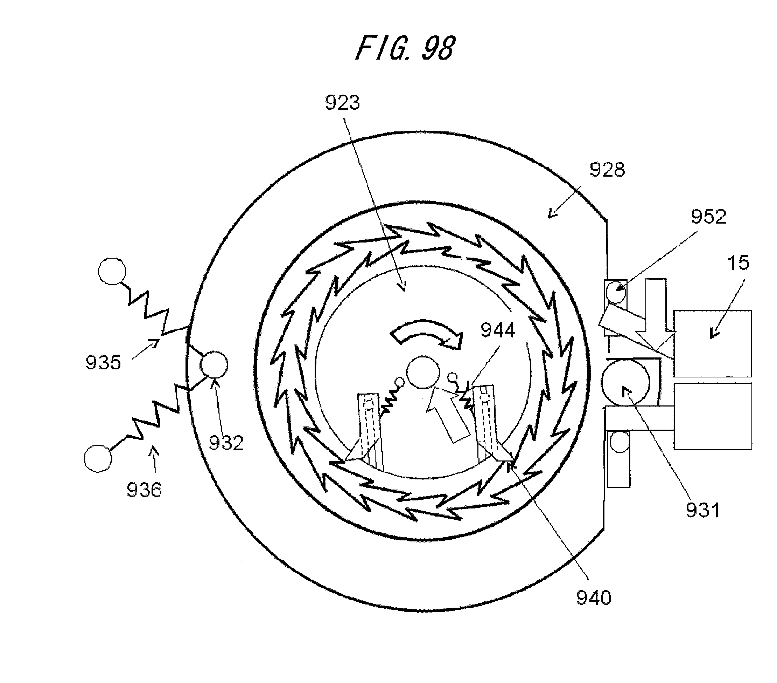

Incidentally, when the claw 940 and the inner teeth 929 come into contact and mesh with each other, the rotation of the plate 923 is transmitted to the plate 928 and the plates 923 and 928 start to be rotated integrally with each other (refer to FIG. 96). Then, when the lever of the switch 15 is pushed down by the pin 931 provided on the plate 928, electric power supply to the actuator 200 is interrupted (refer to FIG. 97). After that, when acceleration of the rotary shaft 22 is eliminated due to electric power interruption, the plate 928 receiving restoring forces from the tension springs 935 and 936 is returned to the original position by the restoring forces. When the plate 928 is returned, meshing between the claw 940 and the inner teeth 929 is canceled in accordance there with, and the claw 940 is returned to the original position by the tension spring 944, with the result that an original relativepositionoftheplate920andtheplate923isrestored. Note that, the lever of the switch 15 remains pushed down in this state. Thus, in order that the robot is reactivated, it is only necessary to slide the pin 952 so that the lever of the switch 15 is restored and the switch 15 is returned to the original state (refer to FIG. 98).

Other than the meshing described above between the claw 940 and the inner teeth 929, meshing between the claw and the inner teeth occurs in accordance with the rotational direction of the rotary shaft 22 and a direction of the inertial force generated to the plate 920. As a result, on the basis of the acceleration generated to the rotary shaft 22 and in the directions same as the rotational directions thereof, electric power supply to the actuator 200 can be interrupted.

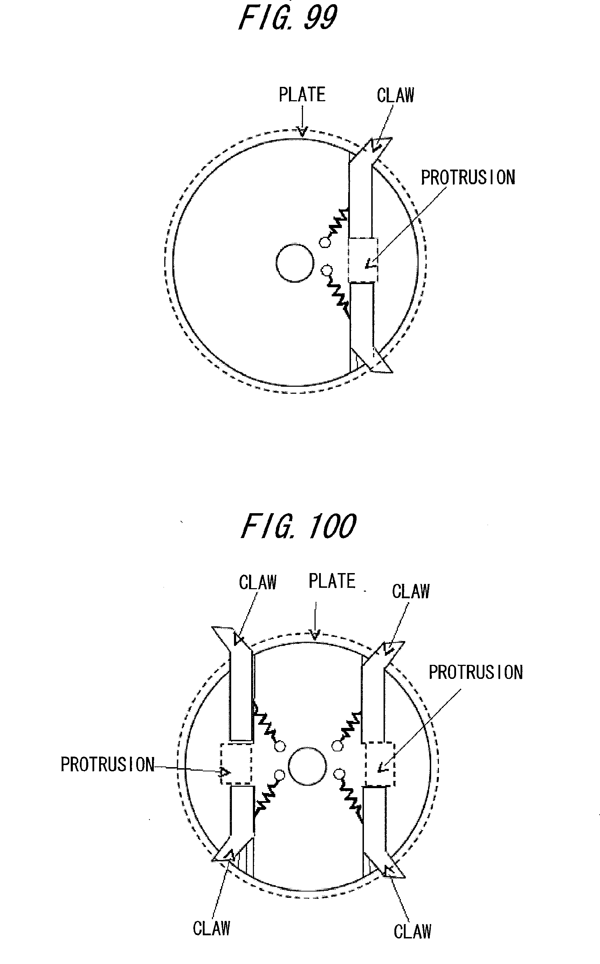

Further, FIGS. 99 and 100 illustrate modification of arrangement of claws on the plate 923. As illustrated in FIG. 99, correspondingly to the inner teeth 929 and 930, directions of two claws arranged on the plate 923 may be set opposite to those in a state illustrated in the right view of FIG. 90. Further, as illustrated in FIG. 100, four claws may be arranged on the plate 923. This arrangement of the claws illustrated in FIG. 100 is an aspect of combination of the arrangement illustrated in FIG. 90 and the arrangement illustrated in FIG. 99. Note that, although four claws are installed in FIG. 100, there is no intention of limiting the number of claws to four. As long as the inner teeth 929 and 930 can be properly meshed with each other, the number of claws may be appropriately changed.

## Claims

1. A robot safety device provided between a drive shaft of a robot and an actuator for driving the drive shaft, for preventing an unexpected action with respect to a user around the robot,
the robot safety device comprising:
a transmission portion for transmitting an output from the actuator to the drive shaft;
an acceleration-movement corresponding portion for mechanically generating, correspondingly to movement of the transmission portion caused by acceleration transmitted from the actuator to the transmission portion, a regulation assistance force for regulating movement of the transmission portion caused by the output from the actuator; and
aregulatingportiondrivenbytheregulationassistance force generated by the acceleration-movement corresponding portion, for regulating the movement of the transmission portion.

2. The robot safety device according to claim 1,
wherein the regulating portion causes the regulation assistance force to act on a control device for supplying electric power to the actuator, to thereby interrupt the electric power supplied to the actuator and regulate the movement of the transmission portion.

3. The robot safety device according to claim 1 or 2,
wherein, when the acceleration transmitted from the actuator to the transmission portion exceeds predetermined acceleration, the regulating portion regulates the movement of the transmission portion with the regulation assistance force generated by the acceleration-movement corresponding portion.

4. The robot safety device according to claim 3,
wherein the predetermined acceleration is changeable.

5. The robot safety device according to any one of claims 1 to 4,
wherein the acceleration-movement corresponding portion comprises:
a first transmission-assist portion coupled in a fixed state with respect to the transmission portion;
a second transmission-assist portion arranged in a state of being allowed to effect relative movement with respect to the transmission portion;
an elastic coupling portion for elastically coupling the first transmission-assist portion and the second transmission-assist portion to each other so that the second transmission-assist portion is allowed to effect relative movement with respect to the transmission portion correspondingly to the movement of the transmission portion caused by the acceleration transmitted to the transmission portion; and
a regulation-assistance-force generating portion for generating the regulation assistance force in accordance with displacement of the second transmission-assist portion through intermediation of the elastic coupling portion.

6. The robot safety device according to claim 4 or 5,
wherein the acceleration-movement corresponding portion further comprises an engagement portion which is attached so as to be allowed to effect relative movement with respect to the first transmission-assist portion, and which effects the relative movement in accordance with the displacement of the second transmission-assist portion through intermediation of the elastic coupling portion, and
wherein the regulation-assistance-force generating portion enters an engagement state with respect to the engagement portion when the engagement portion effects the relative movement with respect to the first transmission-assist portion, and generates the regulation assistance force when the movement of the transmission portion is transmitted to the regulation-assistance-force generating portion through the engagement portion.

7. The robot safety device according to claim 4 or 5,
wherein the regulating portion comprises:
a brake portion which is provided so that a relative position of the brake portion with respect to the transmission portion is changeable, and which is driven in conjunction with the transmission portion; and
a brake drum portion for generating, by coming into contact with the brake portion, a braking force for regulating the movement of the transmission portion, and
wherein the brake portion and the brake drum portion enter a contact state in accordance with a change of the relative position of the brake portion with respect to the transmission portion, the change being made in accordance with the displacement of the second transmission-assist portion through intermediation of the elastic coupling portion, the displacement being caused by the acceleration transmitted from the actuator to the transmission portion.

8. The robot safety device according to any one of claims 4 to 7,
further comprising a speed-movement corresponding portion for effecting, when a speed transmitted from the actuator to the transmission portion exceeds a predetermined speed, the relative movement of the second transmission-assist portion with respect to the transmission portion, to thereby drive the regulating portion.

9. A robot safety device provided between a drive shaft of a robot and an actuator for driving the drive shaft, for preventing an unexpected action with respect to a user around the robot,
the robot safety device comprising:
a transmission portion for transmitting an output from the actuator to the drive shaft;
a speed-movement corresponding portion for mechanically generating, correspondingly to movement of the transmission portion caused by a speed transmitted from the actuator to the transmission portion, are gulation assistance force for regulating movement of the transmission portion caused by the output from the actuator; and
aregulatingportiondrivenbytheregulationassistance force generated by the speed-movement corresponding portion, for regulating the movement of the transmission portion.

10. The robot safety device according to claim 9, wherein the regulating portion causes the regulation assistance force to act on a control device for supplying electric power to the actuator, to thereby interrupt the electric power supplied to the actuator and regulate the movement of the transmission portion.

11. The robot safety device according to claim 9 or 10,
wherein, when the speed transmitted from the actuator to the transmission portion exceeds a predetermined speed, the regulating portion regulates the movement of the transmission portion with the regulation assistance force.

12. The robot safety device according to claim 11, wherein the predetermined speed is changeable.

13. The robot safety device according to claim 1 or 9, further comprising an electric-power stopping portion for stopping electric power supply to the actuator when the regulating portion regulates the movement of the transmission portion.

14. The robot safety device according to claim 13, wherein the electric-power stopping portion stops the electric power supply to the actuator before the regulating portion regulates the movement of the transmission portion.

15. The robot, comprising the robot safety device according to any one of claims 1 to 14,
wherein the robot safety device is attached to a part or all of drive shafts of the robot.
